(19) Europäisches Patentamt
European Patent Office
Office européen des brevets

(11) EP 2 351 796 B1

(12) **EUROPEAN PATENT SPECIFICATION**

(45) Date of publication and mention of the grant of the patent:
**22.10.2014 Bulletin 2014/43**

(21) Application number: **09816273.8**

(22) Date of filing: **29.09.2009**

(51) Int Cl.:
***C09B 67/50*** (2006.01) ***C09B 67/20*** (2006.01)
***B01F 7/26*** (2006.01) ***C09B 67/16*** (2006.01)

(86) International application number:
**PCT/JP2009/066900**

(87) International publication number:
**WO 2010/035861 (01.04.2010 Gazette 2010/13)**

(54) **NOVEL COPPER PHTHALOCYANINE PIGMENT AND PROCESS FOR PRODUCING COPPER PHTHALOCYANINE FINE PARTICLES**

NEUES KUPFERPHTHALOCYANINPIGMENT UND VERFAHREN ZUR HERSTELLUNG VON FEINTEILIGEM KUPFERPHTHALOCYANIN

NOUVEAU PIGMENT DE PHTALOCYANINE DE CUIVRE ET PROCÉDÉ DE PRODUCTION DE PARTICULES FINES DE PHTALOCYANINE DE CUIVRE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.09.2008 JP 2008251550**
**03.03.2009 JP 2009049962**

(43) Date of publication of application:
**03.08.2011 Bulletin 2011/31**

(73) Proprietor: **M Technique Co., Ltd.**
**Osaka 594-1144 (JP)**

(72) Inventor: **ENOMURA Masakazu**
**Izumi-Shi**
**Osaka 594-1144 (JP)**

(74) Representative: **Robertson, James Alexander**
**Marks & Clerk LLP**
**90 Long Acre**
**London WC2E 9RA (GB)**

(56) References cited:
**JP-A- 2002 189 119**
**JP-A- 2004 049 957**
**JP-A- 2004 252 443**
**JP-A- 2006 341 232**
**JP-A- 2008 208 277**
**JP-A- 2008 233 620**
**US-A- 3 984 433**

- **CLEMENS BRECHTELSBAUER ET AL: "Evaluation of a Spinning Disc Reactor for Continuous Processing", ORGANIC PROCESS RESEARCH AND DEVELOPMENT, AMERICAN CHEMICAL SOCIETY, US, vol. 5, 1 January 2001 (2001-01-01), pages 65-68, XP008134718, ISSN: 1083-6160, DOI: 10.1021/OP0000834 [retrieved on 2000-12-13]**
- **B.N.ACHAR ET AL.: "Studies on polymorphic Modifications of Copper Phthalocyanine", J.SOLID STATE CHEM., vol. 177, 2004, pages 1987-1993, XP002674157,**

Remarks:
The file contains technical information submitted after the application was filed and not included in this specification

EP 2 351 796 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a novel copper phthalocyanine pigment.

BACKGROUND ART

A copper phthalocyanine pigment is comprised of copper phthalocyanine (chemical formula shown below) with a crystal form, typically represented by alpha-, beta-, gamma-, or epsilon-form, in which those crystal forms are identified by powder X-ray diffraction. Toughness such as heat resistance, water resistance, solvent resistance, and light resistance, optical properties such as a transmission spectrum and an absorption spectrum, and physical properties such as visual color appearance are dependent on the crystal forms, and thus, the crystal form of copper phthalocyanine contained in a copper phthalocyanine pigment is selected in accordance with its usage and application, such as an inkjet ink, a color filter, an ink (an offset ink, a screen ink, a UV ink, a flexographic ink, and the like), a coating material, and for indoor or outdoor use.

[Formula 1]

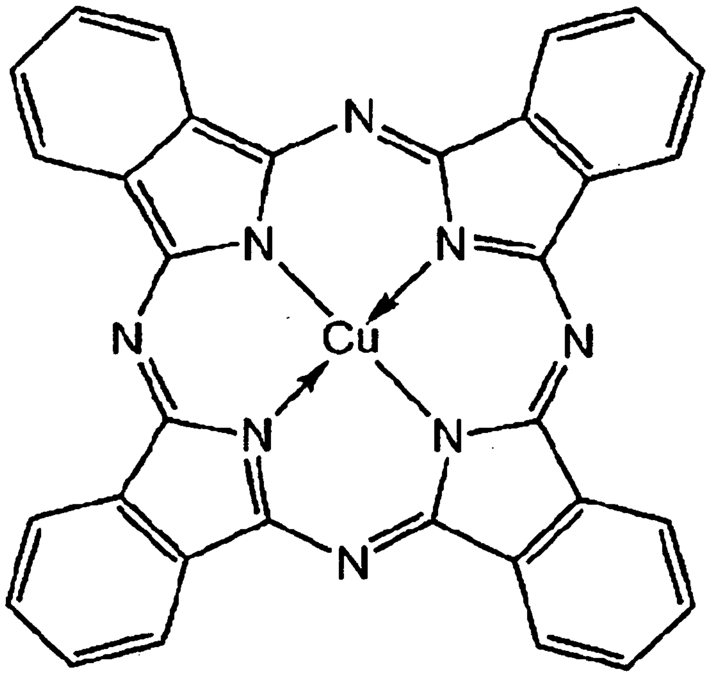

In a color filter, for example, a copper phthalocyanine pigment containing copper phthalocyanine of an epsilon-form crystal is used in view of its transmittance properties. The epsilon-form copper phthalocyanine is produced by a method in which alpha-form copper phthalocyanine obtained by an acid-pasting method in a solvent is treated for epsilon-form copper phthalocyanine (Patent Document 1), or a method in which a copper phthalocyanine pigment is treated in a solvent containing salt to change it to an epsilon-form one (Patent Document 2), or by other methods. In any of the methods, however, there are many steps to change the crystal form, and much energy is required in some of the steps, thus becoming problems. Accordingly, these problems may be remedied if copper phthalocyanine, even being of an alpha-form crystal, with better properties than that of epsilon-form can be obtained.

Especially for a copper phthalocyanine pigment used in a blue color filter, copper phthalocyanine in which a wavelength (Lambda-max) is shorter than 478 nm to give the maximum transmittance has been sought.

Besides the above, copper phthalocyanine, even being of an alpha-form crystal, in which a transmittance of the transmission spectrum at a wavelength of 400 nm to 450 nm is larger than that of epsilon-form copper phthalocyanine over the entirety of said wavelength has been sought.

PRIOR ART DOCUMENT

PATENT DOCUMENT

Patent Document 1: JP-A 2005-306841
Patent Document 2: JP-A 2007-332317

Further publications include: JP2006-341232; US3984433; BN Achar, KS Lokesh, Journal of Solid State Chemistry, 2004, 177 (6), pp 1987-1993; C Brechtelsbauer et al., Org. Proc. Res. Dev., 2001, 5 (1), pp 65-68; JP2004-049957; JP2002-189119.

SUMMARY OF THE INVENTION

PROBLEM THE PRESENT INVENTION AIMS TO SOLVE

In view of the above, the present invention has an object to provide a method for producing a copper phthalocyanine pigment and copper phthalocyanine microparticles, wherein a crystal form of copper phthalocyanine is an alpha-form, and a wavelength (Lambda-max) is shorter than 478 nm to give the maximum transmittance of the transmission spectrum between 380 nm and 780 nm.

A further object is to provide a method for producing a copper phthalocyanine pigment and copper phthalocyanine microparticles containing copper phthalocyanine, the crystal form of which is an alpha-form, and a wavelength (Lambda-max) is shorter than 478 nm to give the maximum transmittance of the transmission spectrum between 380 nm and 780 nm, and a transmittance of the transmission spectrum at a wavelength of 400 nm and 450 nm is larger than that of epsilon-form copper phthalocyanine over the entirety of said wavelength of 400 nm to 450 nm in respect of transmission spectrum.

MEANS FOR SOLVING THE OBJECT

According to the present invention, there is provided a copper phthalocyanine pigment containing copper phthalocyanine microparticles, and a method for producing same as defined in the appended independent claims. Further preferable features are defined in the appended dependent claims.

EFFECT OF THE INVENTION

The present invention could provide a copper phthalocyanine pigment containing copper phthalocyanine, wherein a crystal form of the copper phthalocyanine is an alpha-form in powder X-ray diffraction measurement, and a wavelength (Lambda-max) is shorter than 478 nm to give the maximum transmittance of the transmission spectrum between 380 and 780 nm. Since the crystal form is an alpha-form, a process to change the crystal form and a process requiring large energy could be omitted, and thus, the previous problems as mentioned above could be remedied.

And, in particular, an aspect of claim 2 of the present invention according to claim 2, in addition to the above, could provide a copper phthalocyanine pigment containing copper phthalocyanine, wherein the copper phthalocyanine has a larger transmittance of the transmission spectrum at a wavelength of 400 nm and 450 nm than that of epsilon-form copper phthalocyanine over the entirety of said wavelength in respect of transmission spectrum. That is, even being copper phthalocyanine of an alpha-form crystal, better properties could be obtained than that of epsilon-form phthalocyanine under the aforementioned conditions.

BRIEF DESCRIPTION OF DRAWINGS

[FIG. 1]
FIG. 1 (A) is a schematic vertical sectional view showing the concept of the apparatus used for carrying out the present invention, FIG. 1(B) is a schematic vertical sectional view showing the concept of another embodiment of the apparatus, FIG. 1 (C) is a schematic vertical sectional view showing the concept of still another embodiment of the apparatus, and FIG. 1 (D) is a schematic vertical sectional view showing the concept of still another embodiment of the apparatus.

[FIG. 2]
FIG. 2(A) to FIG. 2(D) each show a schematic vertical sectional view showing the concept of still another embodiment of the apparatus shown in FIG. 1.
[FIG. 3]
FIG. 3 (A) is a schematic bottom view showing an important part of the apparatus shown in FIG. 2 (C), FIG. 3 (B) is a schematic bottom view showing an important part of another embodiment of the apparatus, FIG. 3 (C) is a schematic bottom view showing an important part of still another embodiment of the apparatus, FIG. 3 (D) is a schematic bottom view showing the concept of still another embodiment of the apparatus, FIG. 3(E) is a schematic bottom view showing the concept of still another embodiment of the apparatus, and FIG. 3 (F) is a schematic bottom view showing the concept of still another embodiment of the apparatus
[FIG. 4]
FIG. 4(A) to FIG. 4(D) each show a schematic vertical sectional view showing the concept of still another embodiment of the apparatus shown in FIG. 1.
[FIG. 5]
FIG. 5(A) to FIG. 5(D) each show a schematic vertical sectional view showing the concept of still another embodiment of the apparatus shown in FIG. 1.
[FIG. 6]
FIG. 6(A) to FIG. 6(D) each show a schematic vertical sectional view showing the concept of still another embodiment of the apparatus shown in FIG. 1.
[FIG. 7]
FIG. 7(A) to FIG. 7(D) each show a schematic vertical sectional view showing the concept of still another embodiment of the apparatus shown in FIG. 1.
[FIG. 8]
FIG. 8(A) to FIG. 8(D) each show a schematic vertical sectional view showing the concept of still another embodiment of the apparatus shown in FIG. 1.
[FIG. 9]
FIG. 9(A) to FIG. 9(C) each show a schematic vertical sectional view showing the concept of still another embodiment of the apparatus shown in FIG. 1.
[FIG. 10]
FIG. 10(A) to FIG. 10(D) each show a schematic vertical sectional view showing the concept of still another embodiment of the apparatus shown in FIG. 1.
[FIG. 11]
FIG. 11 (A) and FIG. 11 (B) each show a schematic vertical sectional view showing the concept of still another embodiment of the apparatus shown in FIG. 1, and FIG. 11(C) is a schematic bottom view showing an important part of the apparatus shown in FIG. 1(A).
[FIG. 12]
FIG. 12 (A) is a schematic vertical sectional view showing an important part of another embodiment of a pressure-receiving surface in the apparatus shown in FIG. 1(A), and FIG. 12(B) is a schematic vertical sectional view showing an important part of still another embodiment of the apparatus.
[FIG. 13]
FIG. 13 is a schematic vertical sectional view showing an important part of another embodiment of a surface-approaching pressure imparting mechanism 4 in the apparatus shown in FIG. 12 (A).
[FIG. 14]
FIG. 14 is a schematic vertical sectional view showing an important part of another embodiment of the apparatus shown in FIG. 12(A), which is provided with a temperature regulating jacket.
[FIG. 15]
FIG. 15 is a schematic vertical sectional view showing an important part of still another embodiment of the surface-approaching pressure imparting mechanism 4 in the apparatus shown in FIG. 12(A).
[FIG. 16]
FIG. 16 (A) is a schematic transverse sectional view showing an important part of still another embodiment of the apparatus shown in FIG. 12(A), FIG. 16(B), FIG. 16(C) and FIG. 16(E) to FIG. 16 (G) are schematic transverse sectional views each showing an important part of still another embodiment of the apparatus, and FIG. 16 (D) is a partially cut schematic vertical sectional view showing an important part of still another embodiment of the apparatus.
[FIG. 17]
FIG. 17 is a schematic vertical sectional view showing an important part of still another embodiment of the apparatus shown in FIG. 12(A).
[FIG. 18]
FIG. 18 (A) is a schematic vertical sectional view showing the concept of still another embodiment of the apparatus

used for carrying out the present invention, and FIG. 18(B) is a partially cut explanatory view showing an important part of the apparatus.

[FIG. 19]

FIG. 19(A) is a plane view of a first processing member 1 in the apparatus shown in FIG. 12(A), and FIG. 19(B) is a schematic vertical sectional view showing an important part thereof.

[FIG. 20]

FIG. 20 (A) is a schematic vertical sectional view showing an important part of first and second processing members 1 and 2 in the apparatus shown in FIG. 12(A), and FIG. 20(B) is a schematic vertical sectional view showing an important part of the first and second processing members 1 and 2 with a minute gap.

[FIG. 21]

FIG. 21(A) is a plane view of another embodiment of the first processing member 1, and FIG. 21 (B) is a schematic vertical sectional view showing an important part thereof.

[FIG. 22]

FIG. 22(A) is a plane view of still another embodiment of the first processing member 1, and FIG. 22 (B) is a schematic vertical sectional view showing an important part thereof.

[FIG. 23]

FIG. 23(A) is a plane view of still another embodiment of the first processing member 1, and FIG. 23 (B) is a plane view of still another embodiment of the first processing member 1.

[FIG. 24]

FIG. 24 (A), FIG. 24 (B) and FIG. 24 (C) are diagrams showing embodiments other than those described above with respect to the method of separating a processed material after processing.

[FIG. 25]

FIG. 25 is a schematic vertical sectional view showing outline of the apparatus of the present invention.

[FIG. 26]

FIG. 26 (A) is a schematic plane view of the first processing surface in the apparatus shown in FIG. 25, and FIG. 26(B) is an enlargedview showing an important part of the first processing surface in the apparatus shown in FIG. 25.

[FIG. 27]

FIG. 27 (A) is a sectional view of the second introduction path, and FIG. 27 (B) is an enlarged view showing an important part of the processing surface for explaining the second introduction path.

[FIG. 28]

FIG. 28 (A) and FIG. 28 (B) are each an enlarged sectional view of an important part for explaining an inclined surface arranged in the processing member.

[FIG. 29]

FIG. 29 is a diagram for explaining a pressure-receiving surface arranged in the processing member, FIG. 29 (A) is a bottom viewof thesecondprocessingmember, and FIG. 29(B) isanenlarged sectional view showing an important part of first and second processing members 1 and 2.

[FIG. 30]

FIG. 30 shows a powder X-ray diffraction chart of copper phthalocyanine obtained in Example 1.

[FIG. 31]

FIG. 31 shows a transmission spectrum (solid line) of epsilon-form copper phthalocyanine and a transmission spectrum (dashed line) of copper phthalocyanine obtained in Example 1.

[FIG. 32]

FIG. 32 shows a photograph of the transmission electron microscope (TEM) of the copper phthalocyanine microparticles obtained in Example 1.

[FIG. 33]

FIG. 33 (A) is a photograph showing copper phthalocyanine microparticles prepared by FTFR (Example 6) with a scanning electron microscope (SEM), and FIG. 33(B) is a corresponding photograph showing copper phthalocyanine particles prepared by a batch method (Comparative Example 2).

[FIG. 34]

FIG. 34 is a chart showing particle size distribution of copper phthalocyanine microparticles prepared by FTFR (Example 6) and of the copper phthalocyanine particles prepared by a batch method (Comparative Example 2).

[FIG. 35]

FIG. 35 is a photograph of the transmission electron microscope (TEM) showing copper phthalocyanine microparticles prepared by FTFR (Example 6).

[FIG. 36]

FIG. 36 is a chart showing the result of X-ray diffraction measurement of copper phthalocyanine microparticles according to Example 6.

[FIG. 37]

FIG. 37 is a couple of charts showing an infrared absorption spectrum: FIG. 37(A) relates to copper phthalocyanine microparticles prepared by FTFR (Example 6), and FIG. 37(B) relates to copper phthalocyanine particles prepared by a batch method (Comparative Example 2).

[FIG. 38]

FIG. 38 is a couple of charts showing the results of TG/DTA (simultaneous thermogravimetry/differential thermal analysis): FIG. 38(A) relates to copper phthalocyanine microparticles prepared by FTFR (Example 6), and FIG. 38 (B) relates to copper phthalocyanine particles prepared by a batch method (Comparative Example 2).

[FIG. 39]

FIG. 39 is a chart showing a transmission spectrum of 0.0050% aqueous dispersion of copper phthalocyanine microparticles according to Example 6 in the wavelength region between 350 nm and 800 nm.

[FIG. 40]

FIG. 40 is a chart showing an absorption spectrum of 0.0010% aqueous dispersion of copper phthalocyanine microparticles according to Example 6 in the wavelength region between 300 nm and 800 nm.

[FIG. 41]

FIG. 41 is a chart showing infrared absorption spectra of copper phthalocyanine microparticles according to Example 7 to Example 10.

[FIG. 42]

FIG. 42 is a chart showing transmission spectra of 0.0050% dispersions of copper phthalocyanine particles according to Example 7 and Example 10 in a wavelength region between 350 nm and 800 nm: the black line shows a transmission spectrum of Example 7, and the gray line shows a transmission spectrum of Example 10.

## EMBODIMENTS TO CARRY OUT THE INVENTION

The present invention relates to a copper phthalocyanine pigment containing copper phthalocyanine, in which a crystal form of the copper phthalocyanine is shown by a powder X-ray diffraction chart in FIG. 30, and the copper phthalocyanine has a transmission spectrum shown by a dashed line in FIG. 31 or by a solid line in FIG. 39 (FTFR(alpha)). The copper phthalocyanine pigment of the present invention includes a copper phthalocyanine derivative such as a sulfonated and hydroxylated copper phthalocyanine. Further, a copper phthalocyanine pigment introduced with a functional group such as a hydroxyl group or a sulfo group on the surface of copper phthalocyanine microparticles may be included for use.

As shown in FIG. 30, since the diffraction angles giving diffraction intensity peaks in the diffraction spectrum coincide with those of copper phthalocyanine of an alpha-form crystal, it can be judged that the crystal form of copper phthalocyanine of the present invention is an alpha-form. Further, as shown in FIG. 31, it is found that, regarding such copper phthalocyanine, a wavelength (Lambda-max) that gives the maximum transmittance of a transmission spectrum between 380 nm and 780 nm is shorter than 478 nm, and the transmittance of the transmission spectrum at a wavelength of 400 nm and 450 nm is larger than that of an epsilon-form copper phthalocyanine over the entirety of said wavelength of 400 nm and 450 nm. Measuring methods of the transmission spectrum in the present invention are not particularly limited. Exemplified are a method in which a dispersion of a copper phthalocyanine pigment in an aqueous system or in an organic solvent system is measured, or a method in which such a dispersion that is applied on a glass, a transparent electrode, or a film, and then becomes dried, is measured.

A method for producing a copper phthalocyanine pigment obtained in the present invention is not particularly limited. A break-down method represented by a pulverizing method as well as a build-up method may be used. Alternatively, a method of newly synthesizing pigments may be used.

One example of the method for producing a copper phthalocyanine pigment of the present invention is a method in which a fluid containing a copper phthalocyanine solution obtained by dissolving copper phthalocyanine in a solvent, and a fluid containing a solvent capable of being a poor solvent with a lower solubility to copper phthalocyanine than the aforementioned copper phthalocyanine solution are mixed, and copper phthalocyanine is separated to produce copper phthalocyanine microparticles. The method for producing copper phthalocyanine microparticles is characterized in that each of said fluids are mixed as a thin film fluid between processing surfaces arranged so as to be capable of approaching to and separating from each other, at least one of which rotates relative to the other, and copper phthalocyanine microparticles are separated in the thin film fluid. Hereinafter, this production method is described. However, this production method is only an example, and thus the present invention is not limited to this production method. A crystal form of copper phthalocyanine before being dissolved in the above-mentioned solvent is not limited, and copper phthalocyanine of various crystal forms as well as a typical crystal form represented by an alpha-form, a beta-form, and an epsilon-form, may be used. Further, copper phthalocyanine yet to be processed into a pigment as well as copper phthalocyanine containing an amorphous copper phthalocyanine may be used. The size of the particles is not particularly limited either.

Hereinafter, a fluid processing apparatus usable for this method is described.

As shown in FIG. 1(A), this apparatus includes opposing first and second processing members 10 and 20, at least one of which rotates to the other. The opposing surfaces of both the processing members 10 and 20 serve as processing surfaces 1 and 2 to process a fluid to be processed therebetween. The first processing member 10 includes a first processing surface 1, and the second processing member 20 includes a second processing surface 2.

Both the processing surfaces 1 and 2 are connected to a flow path of the fluid to constitute a part of the flow path of the fluid.

Specifically, this apparatus constitutes flow paths of at least two fluids to be processed and joins the flow paths together.

That is, this apparatus is connected to a flow path of a first fluid to form a part of the flow path of the first fluid and simultaneously forms a part of a flow path of a second fluid other than the first fluid. This apparatus joins both the flow paths together thereby mixing and reacting both the fluids between the processing surfaces 1 and 2. In the embodiment shown in FIG. 1(A), each of the flow paths is hermetically closed and made liquid-tight (when the processed fluid is a liquid) or air-tight (when the processed fluid is a gas).

Specifically, this apparatus as shown in FIG. 1(A) includes the first processing member 10, the second processing member 20, a first holder 11 for holding the first processing member 10, a second holder 21 for holding the second processing member 20, a surface-approaching pressure imparting mechanism 4, a rotation drive member, a first introduction part d1, a second introduction part d2, a fluid pressure imparting mechanism p1, a second fluid supply part p2, and a case 3.

Illustration of the rotation drive member is omitted.

At least one of the first processing member 10 and the second processing member 20 is able to approach to and separate from each other, and the processing surfaces 1 and 2 are able to approach to and separate from each other.

In this embodiment, the second processing member 20 approaches to and separates from the first processing member 10. On the contrary, the first processing member 10 may approach to and separate from the second processing member 20, or both the processing members 10 and 20 may approach to and separate from each other.

The second processing member 20 is disposed over the first processing member 10, and the lower surface of the second processing member 20 serves as the second processing surface 2, and the upper surface of the first processing member 10 serves as the first processing surface 1.

As shown in FIG. 1 (A), the first processing member 10 and the second processing member 20 in this embodiment are circular bodies, that is, rings. Hereinafter, the first processing member 10 is referred to as a first ring 10, and the second processing member 20 as a second ring 20.

Both the rings 10 and 20 in this embodiment are metallic members having, at one end, a mirror-polished surface, respectively, and their mirror-polished surfaces are referred to as the first processing surface 1 and the second processing surface 2, respectively. That is, the upper surface of the first ring 10 is mirror-polished as the first processing surface 1, and the lower surface of the second ring is mirror-polished as the second processing surface 2.

At least one of the holders can rotate relative to the other holder by the rotation drive member. In FIG. 1(A), numerical 50 indicates a rotary shaft of the rotation drive member. The rotation drive member may use an electric motor. By the rotation drive member, the processing surface of one ring can rotate relative to the processing surface of the other ring.

In this embodiment, the first holder 11 receives drive power on the rotary shaft 50 from the rotation drive member and rotates relative to the second holder 21, whereby the first ring 10 integrated with the first holder 11 rotates relative to the second ring 20. Inside the first ring 10, the rotary shaft 50 is disposed in the first holder 11 so as to be concentric, in a plane, with the center of the circular first ring 10.

The first ring 10 rotates centering on the shaft center of the first ring 10. The shaft center (not shown) is a virtual line referring to the central line of the first ring 10.

In this embodiment as described above, the first holder 11 holds the first ring 10 such that the first processing surface 1 of the first ring 10 is directed upward, and the second holder 21 holds the second ring 20 such that the secondprocessing surface 2 of the second ring 20 is directed downward.

Specifically, the first and second holders 11 and 21 include a ring-accepting concave part, respectively. In this embodiment, the first ring 11 is fitted in the ring-accepting part of the first holder 11, and the first ring 10 is fitted in the ring-accepting part so as not to rise from, and set in, the ring-accepting part of the first holder 11.

That is, the first processing surface 1 is exposed from the first holder 11 and faces the second holder 21.

Examples of the material for the first ring 10 include metal, ceramics, sintered metal, abrasion-resistant steel, metal subjected to hardening treatment, and rigid materials subjected to lining, coating or plating. The first processing member 10 is preferably formed of a lightweight material for rotation. A material for the second ring 20 may be the same as that for the first ring 10.

The ring-accepting part 41 arranged in the second holder 21 accepts the processing surface 2 of the second ring 20 such that the processing member can rise and set.

The ring-accepting part 41 of the second holder 21 is a concave portion for mainly accepting that side of the

second ring 20 opposite to the processing surface 2, and this concave portion is a groove which has been formed into a circle when viewed in a plane.

The ring-accepting part 41 is formed to be larger in size than the second ring 20 so as to accept the second ring 20 with sufficient clearance between itself and the second ring 20.

By this clearance, the second ring 20 in the ring-accepting part 41 can be displaced not only in the axial direction of the circular ring-accepting part 41 but also in a direction perpendicular to the axial direction. In other words, the second ring 20 can, by this clearance, be displaced relative to the ring-accepting part 41 to make the central line of the second ring 20 unparallel to the axial direction of the ring-accepting part 41.

Hereinafter, that portion of the second holder 21 which is surrounded by the second ring 20 is referred to as a central portion 22.

In other words, the second ring 20 is displaceably accepted within the ring-accepting part 41 not only in the thrust direction of the ring-accepting part 41, that is, in the direction in which the second ring 20 rises from and sets in the part 41, but also in the decentering direction of the second ring 20 from the center of the ring-accepting part 41. Further, the second ring 20 is accepted in the ring-accepting part 41 such that the second ring 20 can be displaced (i.e. run-out) to vary the width between itself upon rising or setting and the ring-accepting part 41, at each position in the circumferential direction of the second ring 20.

The second ring 20, while maintaining the degree of its move in the above three directions, that is, the axial direction, decentering direction and run-out direction of the second ring 20 relative to the ring-accepting part 41, is held on the second holder 21 so as not to follow the rotation of the first ring 10. For this purpose, suitable unevenness (not shown) for regulating rotation in the circumferential direction of the ring-accepting part 41 may be arranged both in the ring-accepting part 41 and in the second ring 20. However, the unevenness should not deteriorate displacement in the degree of its move in the three directions.

The surface-approaching pressure imparting mechanism 4 supplies the processing members with force exerted in the direction of approaching the first processing surface 1 and the second processing surface 2 each other. In this embodiment, the surface-approaching pressure imparting mechanism 4 is disposed in the second holder 21 and biases the second ring 20 toward the first ring 10.

The surface-approaching pressure imparting mechanism 4 uniformly biases each position in the circumferential direction of the second ring 20, that is, each position of the second processing surface 2, toward the first ring 10. A specific structure of the surface-approaching pressure imparting mechanism 4 will be described later.

As shown in FIG. 1(A), the case 3 is arranged outside the outer circumferential surfaces of both the rings 10 and 20, and accepts a product formed between the processing surfaces 1 and 2 and discharged to the outside of both the rings 10 and 20. As shown in FIG. 1(A), the case 3 is a liquid-tight container for accepting the first holder 11 and the second holder 21. However, the second holder 21 may be that which as a part of the case 3, is integrally formed with the case 3.

As described above, the second holder 21 whether formed as a part of the case 3 or formed separately from the case 3 is not movable so as to influence the distance between both the rings 10 and 20, that is, the distance between the processing surfaces 1 and 2. In other words, the second holder 21 does not influence the distance between the processing surfaces 1 and 2.

The case 3 is provided with an outlet 32 for discharging a product to the outside of the case 3.

The first introduction part d1 supplies a first fluid to the space between the processing surfaces 1 and 2.

The fluid pressure imparting mechanism p1 is connected directly or indirectly to the first introduction part d1 to impart fluid pressure to the first processed fluid. A compressor or a pump can be used in the fluid pressure imparting mechanism p1.

In this embodiment, the first introduction part d1 is a fluid path arranged inside the central part 22 of the second holder 21, and one end of the first introduction part d1 is open at the central position of a circle, when viewed in a plane, of the second ring 20 on the second holder 21. The other end of the first introduction part d1 is connected to the fluid pressure imparting mechanism p1 outside the second holder 21, that is, outside the case 3.

The second introduction part d2 supplies a second fluid to be mixed with the first fluid to the space between the processing surfaces 1 and 2. In this embodiment, the second introduction part is a fluid passage arranged inside the second ring 20, and one end of the second introduction part is open at the side of the second processing surface 2, and a second fluid-feeding part p2 is connected to the other end.

A compressor or a pump can be used in the second fluid-feeding part p2.

The first processed fluid pressurized with the fluid pressure imparting mechanism p1 is introduced from the first introduction part d1 to the space between the rings 10 and 20 and will pass through the space between the first processing surface 1 and the second processing surface 2 to the outside of the rings 10 and 20.

At this time, the second ring 20 receiving the supply pressure of the first fluid stands against the bias of the surface-approaching pressure imparting mechanism 4, thereby receding from the first ring 10 and making a minute space between the processing surfaces. The space between both the processing surfaces 1 and 2 by approach and

separation of the surfaces 1 and 2 will be described in detail later.

A second fluid is supplied from the second introduction part d2 to the space between the processing surfaces 1 and 2, flows into the first fluid, and is subj ected to a mixing (reaction) promoted by rotation of the processing surface. Then, a reaction product formed by the mixing (reaction) of both the fluids is discharged from the space between the processing surfaces 1 and 2 to the outside of the rings 10 and 20. The reaction product discharged to the outside of the rings 10 and 20 is discharged finally through the outlet 32 of the case 3 to the outside of the case 3 (self-discharge).

The mixing and reaction (when the mixing is accompanied by reaction) of the processed fluid are effected between the first processing surface 1 and the second processing surface 2 by rotation, relative to the second processing member 20, of the first processing member 10 with the drive member 5.

Between the first and second processing surfaces 1 and 2, a region downstream from an opening m2 of the second introduction part d2 serves as a reaction chamber where the first and second processed fluids are reacted with each other. Specifically, as shown in FIG. 11(C) illustrating a bottom face of the second ring 20, a region H shown by oblique lines, outside the second opening m2 of the second introduction part in the radial direction r1 of the second ring 20, serves as the processing chamber, that is, the reaction chamber. Accordingly, this reaction chamber is located downstream from the openings m1 and m2 of the first introduction part d1 and the second introduction part d2 between the processing surfaces 1 and 2.

The first fluid introduced from the first opening m1 through a space inside the ring into the space between the processing surfaces 1 and 2, and the second fluid introduced from the second opening m2 into the space between the processing surfaces 1 and 2, are mixed with each other in the region H serving as the processing chamber, and if the mixing is accompanied by reaction, both the processed fluids are reacted with each other. The fluid will, upon receiving supply pressure from the fluid pressure imparting mechanism p1, move through the minute space between the processing surfaces 1 and 2 to the outside of the rings, but because of rotation of the first ring 10, the fluid mixed in the reaction region H does not move linearly from the inside to the outside of the rings in the radial direction, but moves from the inside to the outside of the ring spirally around the rotary shaft of the ring when the processing surfaces are viewed in a plane. In the region H where the fluids are thus mixed (reacted), the fluids can move spirally from inside to outside to secure a zone necessary for sufficient mixing (reaction) in the minute space between the processing surfaces 1 and 2, thereby promoting their uniform reaction.

The product formed by the mixing (reaction) becomes a uniform reaction product in the minute space between the first processing surface 1 and the second processing surface 2 and appears as microparticles particularly in the case of crystallization or separation.

By the balance among at least the supply pressure applied by the fluid pressure imparting mechanism p1, the bias of the surface-approaching pressure imparting mechanism 4, and the centrifugal force resulting from rotation of the ring, the distance between the processing surfaces 1 and 2 can be balanced to attain a preferable minute space, and further the processed fluid receiving the supply pressure applied by the fluid pressure imparting mechanism p1 and the centrifugal force by rotation of the ring moves spirally in the minute space between the processing surfaces 1 and 2, so that their mixing (reaction) is promoted.

The mixing (reaction) is forcedly effected by the supply pressure applied by the fluid pressure imparting mechanism p1 and the rotation of the ring. That is, the mixing (reaction) occurs under forced uniform mixing between the processing surfaces 1 and 2 arranged opposite to each other so as to be able to approach to and separate from each other, at least one of which rotates relative to the other.

Accordingly, the crystallization and separation of the product formed by the reaction can be regulated by relatively easily controllable methods suchas regulationof supplypressure applied by the fluid pressure imparting mechanism p1 and regulation of the rotating speed of the ring, that is, the number of revolutions of the ring.

As described above, this processing apparatus is excellent in that the space between the processing surfaces 1 and 2, which can exert influence on the size of a product, and the distance in which the processed fluid moves in the reaction region H, which can exert influence on production of a uniform product, can be regulated by the supplypressure and the centrifugal force.

The reaction processing gives not only deposit of the product but also liquids. Also, when the product is a cluster of fine particles such as microparticles, the product may be precipitated in the processed fluid, or may be in a state of a dispersion in which a dispersal phase exists in the continuous phase, too.

The rotary shaft 50 is not limited to the vertically arranged one and may be arranged in the horizontal direction or arranged at a slant. This is because during processing, the reaction occurs in such a minute space between the processing surfaces 1 and 2 that the influence of gravity can be substantially eliminated.

In FIG. 1(A), the first introduction part d1 extends vertically and coincides with the shaft center of the second ring 20 in the second holder 21. However, the first introduction part d1 is not limited to the one having a center coinciding with the shaft center of the second ring 20 and may be arranged in other positions in the central portion 22 of the second holder 21 as long as the first fluid can be supplied into the space surrounded by the rings 10 and 20, and the first introduction part d1 may extend obliquely as well as vertically.

A more preferable embodiment of the apparatus is shown in FIG. 12 (A). As shown in this figure, the second processing member 20 has the second processing surface 2 and a pressure-receiving surface 23 which is positioned inside, and situated next to, the second processing surface 2. Hereinafter, the pressure-receiving surface 23 is also referred to as a separation-regulating surface 23. As shown in the figure, the separation-regulating surface 23 is an inclined surface.

As described above, the ring-accepting part 41 is formed in the bottom (i.e. a lower part) of the second holder 21, and the second processing member 20 is accepted in the ring-accepting part 41. The second processing member 20 is held by the second holder 21 so as not to be rotated with a baffle (not shown). The second processing surface 2 is exposed from the second holder 21.

In this embodiment, a material to be processed is introduced inside the first processing member 10 and the second processing member 20 between the processing surfaces 1 and 2, and the processed material is discharged to the outside of the first processing member 10 and the second processing member 20.

The surface-approaching pressure imparting mechanism 4 presses by pressure the second processing surface 2 against the first processing surface 1 to make them contacted with or close to each other, and generates a fluid film of predetermined thickness by the balance between the surface-approaching pressure and the force, e.g. fluid pressure, of separating the processing surfaces 1 and 2 from each other. In other words, the distance between the processing surfaces 1 and 2 is kept in a predetermined minute space by the balance between the forces.

Specifically, the surface-approaching pressure imparting mechanism 4 in this embodiment is comprised of the ring-accepting part 41, a spring-accepting part 42 arranged in the depth of the ring-accepting part 41, that is, in the deepest part of the ring-accepting part 41, a spring 43, and an air introduction part 44.

However, the surface-approaching pressure imparting mechanism 4 may be the one including at least one member selected from the ring-accepting part 41, the spring-accepting part 42, the spring 43, and the air introduction part 44.

The ring-accepting part 41 has the second processing member 20 fit into it with play to enable the second processing member 20 to be displaced vertically deeply or shallowly, that is, vertically in the ring-accepting part 41.

One end of the spring 43 is abutted against the depth of the spring-accepting part 42, and the other end of the spring 43 is abutted against the front (i.e., the upper part) of the second processing member 20 in the ring-accepting part 41. In FIG. 1, only one spring 43 is shown, but a plurality of springs 44 are preferably used to press various parts of the second processing member 20. This is because as the number of springs 43 increases, pressing pressure can be given more uniformly to the second processing member 20. Accordingly, several to a few dozen springs 43 comprising a multi-spring typepreferablyattach to the second holder 21.

In this embodiment, air can be introduced through the air introduction part 44 into the ring-accepting part 41. By such introduction of air, air pressure together with pressure by the spring 43 can be given as pressing pressure from the space, as a pressurizing chamber, between the ring-accepting part 41 and the second processing member 20 to the second processing member 20. Accordingly, adjusting the pressure of air introduced through the air introduction part 44 can regulate the surface-approaching pressure of the second processing surface 2 toward the first processing surface 1 during operation. A mechanism of generating pressing pressure with another fluid pressure such as oil pressure can be utilized in place of the air introduction part 44 utilizing air pressure.

The surface-approaching pressure imparting mechanism 4 not only supplies and regulates a part of the pressing pressure, that is, the surface-approaching pressure, but also serves as a displacement regulating mechanism and a buffer mechanism.

Specifically, the surface-approaching pressure imparting mechanism 4 as a displacement regulating mechanism can maintain initial pressing pressure by regulating air pressure against the change in the axial direction caused by elongation or abrasion at the start of or in the operation. As described above, the surface-approaching pressure imparting mechanism 4 uses a floating mechanism of maintaining the second processing member 20 so as to be displaced, thereby also functioning as a buffer mechanism for micro-vibration or rotation alignment.

Now, the state of the thus constitutedprocessing apparatus during use is described with reference to FIG. 1(A).

At the outset, a first fluid to be processed is pressurized with the fluid pressure imparting mechanism p1 and introduced through the first introduction part d1 into the internal space of the sealed case. On the other hand, the first processing member 10 is rotated with the rotation of the rotary shaft 50 by the rotation drive member. The first processing surface 1 and the second processing surface 2 are thereby rotated relatively with a minute space kept therebetween.

The first processed fluid is formed into a fluid film between the processing surfaces 1 and 2 with a minute space kept therebetween, and a second fluid to be processed which is introduced through the second introduction part d2 flows into the fluid film between the processing surfaces 1 and 2 to comprise a part of the fluid film. By this, the first and second processed fluids are mixed with each other, and a uniform reaction of both of the fluids being reacted with each other is promoted to form a reaction product. When the reaction is accompanied by separation, relatively uniform and fine particles can be formed. Even when the reaction is not accompanied by separation, a uniform mixing (uniform reaction when the mixing is accompanied by reaction) can be realized. The separated product may be further finely pulverized

by shearing between the first processing surface 1 and the second processing surface 2 with the rotation of the first processing surface 1. The first processing surface 1 and the second processing surface 2 are regulated to form a minute space of 1 μm to 1 mm, particularly 1 μm to 10 μm, thereby realizing a uniform mixing (uniform reaction when the mixing is accompanied by reaction) and enabling formation of superfine particles of several nm in diameter.

The product is discharged from the processing surfaces 1 and 2 through an outlet 32 of the case 3 to the outside of the case. The discharged product is atomized in a vacuum or depressurized atmosphere with a well-known decompression device and converted into liquid in the atmosphere to collide with each other, then what trickled down in the liquid is able to be collected as degassed liquid.

In this embodiment, the processing apparatus is provided with a case, but may be carried out without a case. For example, a decompression tank for degassing, that is, a vacuum tank, is arranged, and the processing apparatus may be arranged in this tank. In this case, the outlet mentioned above is naturally not arranged in the processing apparatus.

As described above, the first processing surface 1 and the second processing surface 2 can be regulated to form a minute space in the order of μm which cannot be formed by arranging mechanical clearance. Now, this mechanism is described.

The first processing surface 1 and the second processing surface 2 are capable of approaching to and separating from each other, and simultaneously rotate relative to each other. In this example, the first processing surface 1 rotates, and the second processing surface 2 approaches to and separates from the first processing surface with a structure capable of moving in the axial direction (floating structure).

In this example, therefore, the position of the second processing surface 2 in the axial direction is arranged accurately in the order of μm by the balance between forces, that is, the balance between the surface-approaching pressure and the separating pressure, thereby establishing a minute space between the processing surfaces 1 and 2.

As shown in FIG. 12 (A), the surface-approaching pressure includes the pressure by air pressure (positive pressure) from the air introduction part 44 by the surface-approaching pressure imparting mechanism 4, the pressing pressure with the spring 43, and the like.

The embodiments shown in FIG. 12 to FIG. 15 and FIG. 17 are shown by omitting the second introduction part d2 to simplify the drawings. In this respect, these drawings may be assumed to show sections at a position not provided with the second introduction part d2. In the figures, U and S show upward and downward directions respectively.

On the other hand, the separating force include the fluid pressure acting on the pressure-receiving surface at the separating side, that is, on the second processing surface 2 and the separation regulating surface 23, the centrifugal force resulting from rotation of the first processing member 10, and the negative pressure when negative pressure is applied to the air introduction part 44.

When the apparatus is washed, the negative pressure applied to the air introduction part 44 can be increased to significantly separate the processing surfaces 1 and 2 from each other, thereby facilitating washing.

By the balance among these forces, the second processing surface 2 while being remote by a predetermined minute space from the first processing surface 1 is stabilized, thereby realizing establishment with accuracy in the order of μm.

The separating force is described in more detail.

With respect to fluid pressure, the second processing member 20 in a closed flow path receives feeding pressure of a processed fluid, that is, fluid pressure, from the fluid pressure imparting mechanism p. In this case, the surfaces opposite to the first processing surface in the flow path, that is, the second processing surface 2 and the separation regulating surface 23, act as pressure-receiving surfaces at the separating side, and the fluid pressure is applied to the pressure-receiving surfaces to generate a separating force due to the fluid pressure.

With respect to centrifugal force, the first processing member 10 is rotated at high speed, centrifugal force is applied to the fluid, and a part of this centrifugal force acts as separating force in the direction in which the processing surfaces 1 and 2 are separated from each other.

When negative pressure is applied from the air introduction part 44 to the second processing member 20, the negative pressure acts as separating force.

In the foregoing description of the present invention, the force of separating the first and second processing surfaces 1 and 2 from each other has been described as a separating force, and the above-mentioned force is not excluded from the separating force.

By forming a balanced state of the separating force and the surface-approaching pressure applied by the surface-approaching pressure imparting mechanism 4 via the processed fluid between the processing surfaces 1 and 2 in the flow path of the closed processed fluid, a uniform reaction is realized between the processing surfaces 1 and 2, and simultaneously a fluid film suitable for crystallization and separation of microscopic reaction products is formed as described above. In this manner, this apparatus can form a forced fluid film between the processing surfaces 1 and 2 via which a minute space not achievable with a conventional mechanical apparatus can be kept between the processing surfaces 1 and 2, and microparticles can be formed highly accurately as the reaction product.

In other words, the thickness of the fluid film between the processing surfaces 1 and 2 is regulated as desired

by regulating the separating force and surface-approaching pressure, thereby realizing a necessary uniform mixing (when the mixing is accompanied by reaction, uniform reaction) to form and process microscopic products. Accordingly, when the thickness of the fluid film is to be decreased, the surface-approaching pressure or separating force may be regulated such that the surface-approaching pressure is made relatively higher than the separating force. When the thickness of the fluid film is to be increased, the separating force or surface-approaching pressure may be regulated such that the separating force is made relatively higher than the surface-approaching pressure.

When the surface-approaching pressure is increased, air pressure, that is, positive pressure is applied from the air introduction part 44 by the surface-approaching pressure imparting mechanism 4, or the spring 43 is changed to the one having higher pressing pressure, or the number of springs may be increased.

When the separating force is to be increased, the feeding pressure of the fluid pressure imparting mechanism p1 is increased, or the area of the second processing surface 2 or the separation regulating surface 23 is increased, or in addition, the rotation of the second processing member 20 is regulated to increase centrifugal force or reduce pressure from the air introduction part 44. Alternatively, negative pressure may be applied. The spring 43 shown is a pressing spring that generates pressing pressure in an extending direction, but may be a pulling spring that generates a force in a compressing direction to constitute a part or the whole of the surface-approaching pressure imparting mechanism 4.

When the separating force is to be decreased, the feeding pressure of the fluidpressure imparting mechanism p1 is reduced, or the area of the second processing surface 2 or the separation regulating surface 23 is reduced, or in addition, the rotation of the second processing member 20 is regulated to decrease centrifugal force or increase pressure from the air introduction part 44. Alternatively, negative pressure may be reduced.

Further, properties of a processed fluid, such as viscosity, can be added as a factor for increasing or decreasing the surface-approaching pressure and separating force, and regulation of such properties of a processed fluid can be performed as regulation of the above factor.

In the separating force, the fluid pressure exerted on the pressure-receiving surface at the separating side, that is, the second processing surface 2 and the separation regulating surface 23 is understood as a force constituting an opening force in mechanical seal.

In the mechanical seal, the second processing member 20 corresponds to a compression ring, and when fluid pressure is applied to the second processing member 20, the force of separating the second processing member 20 from the first processing member10 is regarded as opening force.

More specifically, when the pressure-receiving surfaces at a separating side, that is, the second processing surface 2 and the separation regulating surface 23 only are arranged in the second processing member 20 as shown in the first embodiment, all feeding pressure constitutes the opening force. When a pressure-receiving surface is also arranged at the backside of the second processing member 20, specifically in the case of FIG. 12 (B) and FIG. 17 described later, the difference between the feeding pressure acting as a separating force and the feeding pressure acting as surface-approaching pressure is the opening force.

Now, other embodiments of the second processing member 20 are described with reference to FIG. 12(B).

As shown in FIG. 12(B), an approach regulating surface 24 facing upward, that is, at the other side of the second processing surface 2, is disposed at the inner periphery of the second processing member 20 exposed from the ring-accepting part 41.

That is, the surface-approaching pressure imparting mechanism 4 in this embodiment is comprised of a ring-accepting part 41, an air introduction part 44, and the approach regulating surface 24. However, the surface-approaching pressure imparting mechanism 4 may be one including at least one member selected from the ring-accepting part 41, the spring-accepting part 42, the spring 43, the air introduction part 44, and the approach regulating surface 24.

The approach regulating surface 24 receives predetermined pressure applied to a processed fluid to generate a force of approaching the second processing surface 2 to the first processing surface 1, thereby functioning in feeding surface-approaching pressure as a part of the surface-approaching pressure imparting mechanism 4. On the other hand, the second processing surface 2 and the separation regulating surface 23 receive predetermined pressure applied to a processed fluid to generate a force of separating the second processing surface 2 from the first processing surface 1, thereby functioning in feeding a part of the separating force.

The approach regulating surface 24, the second processing surface 2 and the separation regulating surface 23 are pressure-receiving surfaces receiving feeding pressure of the processed fluid, and depending on its direction, exhibits different actions, that is, generation of the surface-approaching pressure and generation of a separating force.

The ratio (area ratio A1/A2) of a projected area A1 of the approach regulating surface 24 projected on a virtual plane perpendicular to the direction of approaching and separating the processing surfaces, that is, in the direction of rising and setting of the second ring 20, to a total area A2 of the projected area of the second processing surface 2 and the separating side pressure-receiving area 23 of the second processing member 20 projected on the virtual plane is called balance ratio K which is important for regulation of the opening force.

Both the top of the approach regulating surface 24 and the top of the separating side pressure-receiving surface 23 are defined by the inner periphery 25 of the circular second regulating part 20, that is, by top line L1. Accordingly,

the balance ratio is regulated for deciding the place where base line L2 of the approach regulating surface 24 is to be placed.

That is, in this embodiment, when the feeding pressure of the processed fluid is utilized as opening force, the total projected area of the second processing surface 2 and the separation regulating surface 23 is made larger than the projected area of the approach regulating surface 24, thereby generating an opening force in accordance with the area ratio.

The opening force can be regulated by the pressure of the processed fluid, that is, the fluid pressure, by changing the balance line, that is, by changing the area A1 of the approach regulating surface 24.

Sliding surface actual surface pressure P, that is, the fluid pressure out of the surface-approaching pressure, is calculated according to the following equation:

$$P = P1 \times (K - k) + Ps$$

wherein P1 represents the pressure of a processed fluid, that is, fluid pressure; K represents the balance ratio; k represents an opening force coefficient; and Ps represents a spring and back pressure.

By regulating this balance line to regulate the sliding surface actual surface pressure P, the space between the processing surfaces 1 and 2 is formed as a desired minute space, thereby forming a fluid film of a processed fluid to make the product minute and effecting uniform mixing (reaction) processing.

Usually, as the thickness of a fluid film between the processing surfaces 1 and 2 is decreased, the product can be made finer. On the other hand, as the thickness of the fluid film is increased, processing becomes rough and the throughput per unit time is increased. By regulating the sliding surface actual surface pressure P on the sliding surface, the space between the processing surfaces 1 and 2 canbe regulated to realize the desired uniform mixing (when the mixing is accompanied by reaction, uniform reaction) and to give the minute product. Hereinafter, the sliding surface actual surface pressure P is referred to as surface pressure P.

From this relation, it is concluded that when the product is to be made coarse, the balance ratio may be decreased, the surface pressure P may be decreased, the space may be increased and the thickness of the film may be increased. On the other hand, when the product is to be made finer, the balance ratio may be increased, the surface pressure P may be increased, the space may be decreased and the thickness of the film may be decreased.

As a part of the surface-approaching pressure imparting mechanism 4, the approach regulating surface 24 is formed, and at the position of the balance line, the surface-approaching pressure may be regulated, that is, the space between the processing surfaces may be regulated.

As described above, the space is regulated in consideration of the pressing pressure of the spring 43 and the air pressure of the air introduction part 44. Regulation of the fluid pressure, that is, the feeding pressure of the processed fluid, and regulation of the rotation of the first processing member 10 for regulating centrifugal force, that is, the rotation of the first holder 11, are also important factors to regulate the space.

As described above, this apparatus is constituted such that for the second processing member 20 and the first processing member 10 that rotates relative to the second processing member 20, a predetermined fluid film is formed between the processing surfaces by pressure balance among the feeding pressure of the processed fluid, the rotation centrifugal force, and the surface-approaching pressure. At least one of the rings is formed in a floating structure by which alignment such as run-out is absorbed to eliminate the risk of abrasion and the like.

The embodiment shown in FIG. 1(A) also applies to the embodiment in FIG. 12 (B) except that the regulating surface is arranged.

The embodiment shown in FIG. 12(B) can be carried out without arranging the pressure-receiving surface 23 on the separating side, as shown in FIG. 17.

When the approach regulating surface 24 is arranged as shown in the embodiment shown in FIG. 12(B) and FIG. 17, the area A1 of the approach regulating surface 24 is made larger than the area A2, whereby all of the predetermined pressure exerted on the processed fluid functions as surface-approaching pressure, without generating an opening force. This arrangement is also possible, and in this case, both the processing surfaces 1 and 2 can be balanced by increasing other separating force.

With the area ratio described above, the force acting in the direction of separating the second processing surface 2 from the first processing surface 1 is fixed as the resultant force exerted by the fluid.

In this embodiment, as described above, the number of springs 43 is preferably larger in order to impart uniform stress on the sliding surface, that is, the processing surface. However, the spring 43 may be a single coil-type spring as shown in FIG. 13. As shown in the figure, this spring is a single coil spring having a center concentric with the circular second processing member 20.

The space between the second processing member 20 and the second holder 21 is sealed air-tightly with

methods well known in the art.

As shown in FIG. 14, the second holder 21 is provided with a temperature regulation jacket 46 capable of regulating the temperature of the second processing member 20 by cooling or heating. Numerical 3 in FIG. 14 is the above-mentioned case, and the case 3 is also provided with a jacket 35 for the same purpose of temperature regulation.

The temperature regulation jacket 46 for the second holder 21 is a water-circulating space formed at a side of the ring-accepting part 41 and communicates with paths 47 and 48 leading to the outside of the second holder 21. One of the paths 47 and 48 introduces a cooling or heating medium into the temperature regulation jacket 46, and the other discharges the medium.

The temperature regulation jacket 35 for the case 3 is a path for passing heating water or cooling water, which is arranged between the outer periphery of the case 3 and a covering part 34 for covering the outer periphery of the case 3.

In this embodiment, the second holder 21 and the case 3 are provided with the temperature regulation jacket, but the first holder 11 can also be provided with such a jacket.

As a part of the surface-approaching pressure imparting mechanism4, a cylinder mechanism 7 shown in FIG. 15 maybe arranged besides the members described above.

The cylinder mechanism 7 includes a cylinder space 70 arranged in the second holder 21, a communicating part 71 that communicates the cylinder space 70 with the ring-accepting part 41, a piston 72 that is accepted in the cylinder space 70 and connected via the communication part 71 to the second processing member 20, a first nozzle 73 that communicates to the upper part of the cylinder space 70, a second nozzle 74 in a lower part of the cylinder space 70, and a pressing body 75 such as spring between the upper part of the cylinder space 70 and the piston 72.

The piston 72 can slide vertically in the cylinder space 70, and the second processing member 20 can slide vertically with sliding of the piston 72, to change the gap between the first processing surface 1 and the second processing surface 2.

Although not shown in the figure, specifically, a pressure source such as a compressor is connected to the first nozzle 73, and air pressure, that is, positive pressure is applied from the first nozzle 73 to the upper part of the piston 72 in the cylinder space 70, thereby sliding the piston 72 downward, to allow the second processing member 20 to narrow the gap between the first and second processing surfaces 1 and 2. Although not shown in the figure, a pressure source such as a compressor is connected to the second nozzle 74, and air pressure, that is, positive pressure is applied from the second nozzle 74 to the lower part of the piston 72 in the cylinder space 70, thereby sliding the piston 72 upward, to allow the second processing member 20 to widen the gap between the first and second processing surfaces 1 and 2, that is, to enable it to move in the direction of opening the gap. In this manner, the surface-approaching pressure can be regulated by air pressure with the nozzles 73 and 74.

Even if there is a space between the upper part of the second processing member 20 in the ring-accepting part 41 and the uppermost part of the ring-accepting part 41, the piston 7 is arranged so as to abut against the uppermost part 70a of the cylinder space 70, whereby the uppermost part 70a of the cylinder space 70 defines the upper limit of the width of the gap between the processing surfaces 1 and 2. That is, the piston 7 and the uppermost part 70a of the cylinder space 70 function as a separation preventing part for preventing the separation of the processing surfaces 1 and 2 from each other, in other words, function in regulating the maximum opening of the gap between both the processing surfaces 1 and 2.

Even if the processing surfaces 1 and 2 do not abut on each other, the piston 7 is arranged so as to abut against a lowermost part 70b of the cylinder space 70, whereby the lowermost part 70b of the cylinder space 70 defines the lower limit of the width of the gap between the processing surfaces 1 and 2. That is, the piston 7 and the lowermost part 70b of the cylinder space 70 function as an approach preventing part for preventing the approaching of the processing surfaces 1 and 2 each other, in other words, function in regulating the minimum opening of the gap between both the processing surfaces 1 and 2.

In this manner, the maximum and minimum openings of the gap are regulated, while a distance z1 between the piston 7 and the uppermost part 70a of the cylinder space 70, in other words, a distance z2 between the piston 7 and the lowermost part 70b of the cylinder space 70, is regulated with air pressure by the nozzles 73 and 74.

The nozzles 73 and 74 may be connected to a different pressure source respectively, and further may be connected to a single pressure source alternatively or switched the connections to the sources.

The pressure source may be a source applying positive or negative pressure. When a negative pressure source such as a vacuum is connected to the nozzles 73 and 74, the action described above goes to the contrary.

In place of the other surface-approaching pressure imparting mechanism 4 or as a part of the surface-approaching pressure imparting mechanism 4, such cylinder mechanism 7 is provided to set the pressure of the pressure source connected to the nozzle 73 and 74, and the distances z1 and z2 according to the viscosity and properties of the fluid to be processed in a fashion to bring the thickness value of fluid film of the fluid to a desired level under a shear force to realize a uniform reaction for forming fine particles. Particularly, such cylinder mechanism 7 can be used to increase the reliability of cleaning and sterilization by forcing the sliding part open and close during cleaning and steam sterilization.

As shown in FIG. 16 (A) to FIG. 16 (C), the first processing surface 1 of the first processing member 10 may

be provided with groove-like depressions 13...13 extending in the radial direction, that is, in the direction from the center to the outside of the first processing member 10. In this case, as shown in FIG. 16 (A), the depressions 13...13 can be curved or spirally elongated on the first processing surface 1, and as shown in FIG. 16 (B), the individual depressions 13 may be bent at a right angle, or as shown in FIG. 16 (C), the depressions 13...13 may extend straight radially.

As shown in FIG. 16 (D), the depressions 13 in FIG. 16 (A) to FIG. 16 (C) preferably deepen gradually in the direction toward the center of the first processing surface 1. The groove-like depressions 13 may continue in sequence or intermittence.

Formation of such depression 13 may correspond to the increase of delivery of the processed fluid or to the decrease of calorific value, while having effects of cavitation control and fluid bearing.

In the embodiments shown in FIG. 16, the depressions 13 are formed on the first processing surface 1, but may be formed on the second processing surface 2 or may be formed on both the first and second processing surfaces 1 and 2.

When the depressions 13 or tapered sections are not provided on the processing surface or are arranged unevenly on a part of the processing surface, the influence exerted by the surface roughness of the processing surfaces 1 and 2 on the processed fluid is greater than that by the above depressions 13. Accordingly, in this case, the surface roughness should be reduced, that is, the surface should be fine-textured, as the particle size of the processed fluid are to be decreased. Particularly, regarding the surface roughness of the processing surface, the mirror surface, that is, a surface subjected to mirror polishing is advantageous in realizing uniform mixing (when the mixing is accompanied by reaction, uniform reaction) for the purpose of uniform mixing (reaction), and in realizing crystallization and separation of fine monodisperse products for the purpose of obtaining microparticles.

In the embodiments shown in FIG. 12 to FIG. 17, structures other than those particularly shown are the same as in the embodiments shown in FIG. 1(A) or FIG. 11(C).

In the embodiments described above, the case is closed. Alternatively, the first processing member 10 and the second processing member 20 may be closed inside but may be open outside. That is, the flow path is sealed until the processed fluid has passed through the space between the first processing surface 1 and the second processing surface 2, to allow the processed fluid to receive the feeding pressure, but after the passing, the flow path may be opened so that the processed fluid after processing does not receive feeding pressure.

The fluid pressure imparting mechanism p1 preferably uses a compressor as a pressure device described above, but if predetermined pressure can always be applied to the processed fluid, another means may be used. For example, the own weight of the processed fluid can be used to apply certain pressure constantly to the processed fluid.

In summary, the processing apparatus in each embodiment described above is characterized in that predetermined pressure is applied to a fluid to be processed, at least two processing surfaces, that is, a first processing surface 1 and a second processing surface 2 capable of approaching to and separating from each other are connected to a sealed flow path through which the processed fluid receiving the predetermined pressure flows, a surface-approaching pressure of approaching the processing surfaces 1 and 2 each other is applied to rotate the first processing surface 1 and the second processing surface 2 relative to each other, thereby allowing a fluid film used for seal in mechanical seal to be generated out of the processed fluid, and the fluid film is leaked out consciously (without using the fluid film as seal) from between the first processing surface 1 and the second processing surface 2, contrary to mechanical seal, whereby mixing (reaction) processing is realized between the processed fluid formed into a film between the surfaces 1 and 2, and the product is recovered.

By this epoch-making method, the space between the processing surfaces 1 and 2 can be regulated in the range of 1 $\mu$m to 1 mm, particularly 1 $\mu$m to 10 $\mu$m.

In the embodiment described above, a flow path for a sealed fluid is constituted in the apparatus, and the processed fluid is pressurized with the fluid pressure imparting mechanism p arranged at the side of the introduction part (for the first processing fluid) in the processing apparatus.

Alternatively, the flow path for the processed fluid may be opened without pressurization with the fluid pressure imparting mechanism p.

One embodiment of the processing apparatus is shown in FIG. 18 to FIG. 20. The processing apparatus illustrated in this embodiment is an apparatus including a degassing mechanism, that is, amechanismof removing a liquid from the formedprocessed product thereby finally securing objective solids (crystals) only.

FIG. 18 (A) is a schematic vertical sectional view of the processing apparatus, and FIG. 18(B) is its partially cut enlarged sectional view. FIG. 19 is a plane view of the first processing member 1 arranged in the processing apparatus in FIG. 18. FIG. 20 is a partially cut schematic vertical sectional view showing an important part of the first and second processing members 101 and 102 in the processing apparatus.

As described above, the apparatus shown in FIG. 18 to FIG. 20 is the one into which a fluid as the object of processing, that is, a processed fluid, or a fluid carrying the object of processing, is to be introduced at atmospheric pressure.

In FIG. 18 (B) and FIG. 20, the second introduction part d2 is omitted for simplicity of the drawing (these drawings

can be regarded as showing a section at the position where the second introduction part d2 is not arranged).

As shown in FIG. 18 (A), this processing apparatus includes a reaction apparatus G and a decompression pump Q. This reaction apparatus G includes a first processing member 101 as a rotating member, a first holder 111 for holding the processing member 101, a second processing member 102 that is a member fixed to the case, a second holder 121 having the second processing member 102 fixed thereto, a bias mechanism 103, a dynamical pressure generating mechanism 104 (FIG. 19 (A)), a drive part which rotates the first processing member 101 with the first holder 111, a housing 106, a first introduction part d1 which supplies (introduces) a first processed fluid, and a discharge part 108 that discharges the fluid to the decompression pump Q. The drive part is not shown.

The first processing member 101 and the second processing member 102 are cylindrical bodies that are hollow in the center. The processing members 101 and 102 are members wherein the bottoms of the processing members 101 and 102 in a cylindrical form are processing surfaces 110 and 120 respectively.

The processing surfaces 110 and 120 have a mirror-polished flat part. In this embodiment, the processing surface 120 of the second processing member 102 is a flat surface subjected as a whole to mirror polishing. The processing surface 110 of the first processing member 101 is a flat surface as a whole like the second processing member 102, but has a plurality of grooves 112...112 in the flat surface as shown in FIG. 19 (A). The grooves 112...112 while centering on the first processing member 101 in a cylindrical form extend radially toward the outer periphery of the cylinder.

The processing surfaces 110 and 120 of the first and second processing members 101 and 102 are mirror-polished such that the surface roughness Ra comes to be in the range of 0.01 μm to 1.0 μm. By this mirror polishing, Ra is regulated preferably in the range of 0.03 μm to 0.3 μm.

The material for the processing members 101 and 102 is one which is rigid and capable of mirror polishing. The rigidity of the processing members 101 and 102 is preferably at least 1500 or more in terms of Vickers hardness. A material having a low linear expansion coefficient or high thermal conductance is preferably used. This is because when the difference in coefficient of expansion between a part which generates heat upon processing and other parts is high, distortion is generated and securement of suitable clearance is influenced.

As the material for the processing members 101 and 102, it is preferable to use particularly SIC, that is, silicon carbide, SIC having a Vickers hardness of 2000 to 2500, SIC having a Vickers hardness of 3000 to 4000 coated thereon with DLC (diamond-like carbon), WC, that is, tungsten carbide having a Vickers hardness of 1800, WC coated thereon with DLC, and boron ceramics represented by $ZrB_2$, BTC and $B_4C$ having a Vickers hardness of 4000 to 5000.

The housing 106 shown in FIG. 18, the bottom of which is not shown though, is a cylinder with a bottom, and the upper part thereof is covered with the second holder 121. The second holder 121 has the second processing member 102 fixed to the lower surface thereof, and the introduction part d1 is arranged in the upper part thereof. The introduction part d1 is provided with a hopper 170 for introducing a fluid or a processed material from the outside.

Although not shown in the figure, the drive part includes a power source such as a motor and a shaft 50 that rotates by receiving power from the power source.

As shown in FIG. 18(A), the shaft 50 is arranged in the housing 106 and extends vertically. Then, the first holder 111 is arranged on the top of the shaft 50. The first holder 111 is to hold the first processing member 101 and is arranged on the shaft 50 as described above, thereby allowing the processing surface 110 of the first processing member 101 to correspond to the processing surface 120 of the second processing member 102.

The first holder 111 is a cylindrical body, and the first processing member 101 is fixed on the center of the upper surface. The first processing member 101 is fixed so as to be integrated with the first holder 111, and does not change its position relative to the first holder 111.

On the other hand, a receiving depression 124 for receiving the second processing member 102 is formed on the center of the upper surface of the second holder 121.

The receiving depression 124 has a circular cross-section. The second processing member 102 is accepted in the cylindrical receiving depression 124 so as to be concentric with the receiving depression 124.

The structure of the receiving depression 124 is similar to that in the embodiment as shown in FIG. 1(A) (the first processing member 101 corresponds to the first ring 10, the first holder 111 to the first holder 11, the second processing member 102 to the second ring 20, and the second holder 121 to the second holder 21).

Then, the second holder 121 is provided with the bias mechanism 103 . The bias mechanism 103 preferably uses an elastic body such as spring. The bias mechanism 103 corresponds to the surface-approaching pressure imparting mechanism 4 in FIG. 1 (A) and has the same structure. That is, the bias mechanism 103 presses that side (bottom) of the second processing member 102 which is opposite to the processing surface 120 and biases each position of the second processing member 102 uniformly downward to the first processing member 101.

On the other hand, the inner diameter of the receiving depression 124 is made larger than the outer diameter of the second processing member 102, so that when arranged concentrically as described above, a gap t1 is arranged between outer periphery 102b of the second processing member 102 and inner periphery of the receiving depression 124, as shown in FIG. 18(B).

Similarly, a gap t2 is arranged between inner periphery 102a of the second processing member 102 and outer periphery of the central part 22 of the receiving depression 124, as shown in FIG. 18(B).

The gaps t1 and t2 are those for absorbing vibration and eccentric behavior and are set to be ina size to secure operational dimensions or more and to enable sealing. For example, when the diameter of the first processing member 101 is 100 mm to 400 mm, the gaps t1 and t2 are preferably 0.05 mm to 0.3 mm, respectively.

The first holder 111 is fixed integrally with the shaft 50 and rotated with the shaft 50. The second processing member 102 is not rotated relative to the second holder 121 by a baffle (not shown). However, for securing 0.1 μm to 10 μm clearance necessary for processing, that is, the minute gap t between the processing surfaces 110 and 120 as shown in FIG. 20 (B), a gap t3 is arranged between the bottom of the receiving depression 124, that is, the top part, and the surface facing a top part 124a of the second processing member 102, that is, the upper part. The gap t3 is established in consideration of the clearance and the vibration and elongation of the shaft 50.

As described above, by the provision of the gaps t1 to t3, the first processing member 101 can move not only in the direction of approaching to and separating from the second processing member 102, but also relative to the center and direction of the processing surface 110, that is, relative to the directions z1 and z2.

That is, in this embodiment, the bias mechanism 103 and the gaps t1 to t3 constitute a floating mechanism, and by this floating mechanism, the center and inclination of at least the second processing member 102 are made variable in the small range of several μm to several mm. The run-out and expansion of the rotary shaft and the surface vibration and vibration of the first processing member 101 are absorbed.

The groove 112 on the polishing surface 110 of the first processing member 101 is described in more detail. The rear end of the groove 112 reaches the inner periphery 101a of the first processing member 101, and its top is elongated toward the outside y of the first processing member 101, that is, toward the outer periphery. As shown in FIG. 19 (A), the sectional area of the groove 112 is gradually decreased in the direction from the center x of the circular first processing member 101 to the outside y of the first processing member 101, that is, toward the outer periphery.

The distance w1 of the left and right sides 112a and 112b of the groove 112 is decreased in the direction from the center x of the first processing member 101 to the outside y of the first processing member 101, that is, toward the outer periphery. As shown in FIG. 19 (B), the depth w2 of the groove 112 is decreased in the direction from the center x of the first processing member 101 to the outside y of the first processing member 101, that is, toward the outer periphery. That is, the bottom 112c of the groove 112 is decreased in depth in the direction from the center x of the first processing member 101 to the outside y of the first processing member 101, that is, toward the outer periphery.

As described above, the groove 112 is gradually decreased both in width and depth toward the outside y, that is, toward the outer periphery, and its sectional area is gradually decreased toward the outside y. Then, the top of the groove 112, that is, the y side, is a dead end. That is, the top of the groove 112, that is, the y side does not reach the outer periphery 101b of the first processing member 101, and an outer flat surface 113 is interposed between the top of the groove 112 and the outer periphery 101b. The outer flat surface 113 is a part of the processing surface 110.

In the embodiment shown in FIG. 19, the left and right sides 112a and 112b and the bottom 112c of the groove 112 constitute a flow path limiting part. This flow path limiting part, the flat part around the groove 112 of the first processing member 101, and the flat part of the second processing member 102 constitute the dynamical pressure generating mechanism 104.

However, only one of the width and depth of the groove 112 may be constituted as described above to decrease the sectional area.

While the first processing member 101 rotates, the dynamical pressure generating mechanism 104 generates a force in the direction of separating the processing members 101 and 102 from each other to secure a desired minute space between the processing members 101 and 102 by a fluid passing through the space between the processing members 101 and 102. By generation of such dynamical pressure, a 0.1 μm to 10 μm minute space can be generated between the processing surfaces 110 and 120. A minute space like that can be regulated and selected depending on the object of processing, but is preferably 1 μm to 6 μm, more preferably 1 μm to 2 μm. This apparatus can realize a uniform mixing (uniform reaction when the mixing is accompanied by reaction) and form microparticles by the minute space, which are not achieved in the prior art.

The grooves 112...112 may extend straight from the center x to the outside y. In this embodiment, however, as shown in FIG. 19(A), the grooves 112 are curved to extend such that with respect to a rotation direction r of the first processing member 101, the center x of the groove 112 is positioned in front of the outside y of the groove 112.

In this manner, the grooves 112...112 are curved to extend so that the separation force by the dynamical pressure generating mechanism 104 can be effectively generated.

Then, the working of this apparatus is described.

As shown in FIG. 18 (A), a first processed fluid R which has been introduced from a hopper 170 and has passed through the first introduction part d1, passes through the hollow part of the circular second processing member 102, and the fluid that has received the centrifugal force resulting from rotation of the first processing member 101 enters the space between the processing members 101 and 102, and uniform mixing (reaction) and in any case, generation of

microparticles are effected and processed between the processing surface 110 of the rotating first processing member 101 and the processing surface 120 of the second processing member 102, then exits from the processing members 101 and 102 and is then discharged from the discharge part 108 to the side of the decompression pump Q (hereinafter, the first processed fluid R is referred to simply as a fluid R, if necessary).

In the foregoing description, the fluid R that has entered the hollow part of the circular second processing member 102 first enters the groove 112 of the rotating first processing member 101 as shown in FIG. 20(A). On the other hand, the processing surfaces 110 and 120 that are mirror-polished flat parts are kept airtight even by passing a gas such as air or nitrogen. Accordingly, even if the centrifugal force by rotation is received, the fluid cannot enter through the groove 112 into the space between the processing surfaces 110 and 120 that are pushed against each other by the bias mechanism 103. However, the fluid R gradually runs against both the sides 112a and 112b and the bottom 112c of the groove 112 formed as a flow path limiting part to generate dynamical pressure acting in the direction of separating the processing surfaces 110 and 120 from each other. As shown in FIG. 20(B), the fluid R can thereby exude from the groove 112 to the flat surface, to secure a minute gap t, that is, clearance, between the processing surfaces 110 and 120. Then, a uniform reaction and generation of microparticles are effected and processed between the mirror-polished flat surfaces. The groove 112 has been curved so that the centrifugal force is applied more accurately to the fluid to make generation of dynamical pressure more effectively.

In this manner, the processing apparatus can secure a minute and uniform gap, that is, clearance, between the mirror surfaces, that is, the processing surfaces 110 and 120, by the balance between the dynamical pressure and the bias force by the bias mechanism 103. By the structure described above, the minute gap can be as superfine as 1 μm or less.

By utilizing the floating mechanism, the automatic regulation of alignment between the processing surfaces 110 and 120 becomes possible, and the clearance in each position between the processing surfaces 110 and 120 can be prevented from varying against physical deformation of each part by rotation or generated heat, and the minute gap in each position can be maintained.

In the embodiment described above, the floating mechanism is a mechanism arranged for the second holder 121 only. Alternatively, the floating mechanism can be arranged in the first holder 111 instead of, or together with, the second holder 121.

Other embodiments of the groove 112 are shown in FIG. 21 to FIG. 23.

As shown in FIG. 21 (A) and FIG. 21 (B), the groove 112 can be provided at the top with a flat wall surface 112d as a part of the flow path limiting part. In the embodiment shown in FIG. 14, a step 112e is arranged between the first wall surface 112d and the inner periphery 101a in the bottom 112c, and the step 112e also constitutes a part of the flow path limiting part.

As shown in FIG. 22(A) and FIG. 22(B), the groove 112 includes a plurality of branches 112f...112f, and each branch 112f narrows its width thereby being provided with a flow path limiting part.

With respect to the embodiments in FIG. 14 and FIG. 15, structures other than those particularly shown are similar to those of embodiments as shown in FIG. 1 (A), FIG. 11(C), and FIG. 18 to FIG. 20.

In the embodiments described above, at least either the width or depth of the groove 112 is gradually decreased in size in the direction from inside to outside the first processing member 101, thereby constituting a flow path limiting part. Alternatively, as shown in FIG. 23 (A) or FIG. 23 (B), the groove 112 can be provided with a termination surface 112f without changing the width and depth of the groove 112, and the termination surface 112f of the groove 112 can serve as a flow path limiting part. As shown the embodiments in FIG. 19, FIG. 21 and FIG. 22, the width and depth of the groove 112 can be changed as described above thereby slanting the bottom and both sides of the groove 112, so that the slanted surfaces serves as a pressure-receiving part toward the fluid to generate dynamical pressure. In the embodiment shown in FIG. 23 (A) and FIG. 23 (B), on the other hand, the termination surface of the groove 112 serves as a pressure-receiving part toward the fluid to generate dynamical pressure.

In the embodiment shown in FIG. 23 (A) and FIG. 23(B), at least one of the width and depth of the groove 112 may also be gradually decreased in size.

The structure of the groove 112 is not limited to the one shown in FIG. 19 and FIG. 21 to FIG. 23 and can be provided with a flow path limiting part having other shapes.

For example, in the embodiments shown in FIG. 19 and FIG. 21 to FIG. 23, the groove 112 does not penetrate to the outer side of the first processing member 101. That is, there is an outer flat surface 113 between the outer periphery of the first processing member 101 and the groove 112. However, the structure of the groove 112 is not limited to such embodiment, and the groove 112 may reach the outer periphery of the first processing member 101 as long as the dynamical pressure can be generated.

For example, in the case of the first processing member 101 shown in FIG. 23(B), as shown in the dotted line, a part having a smaller sectional area than other sites of the groove 112 can be formed on the outer flat surface 113.

The groove 112 may be formed so as to be gradually decreased in size in the direction from inside to outside as described above, and the part (terminal) of the groove 112 that had reached the outer periphery of the first processing

member 101 may have the minimum sectional area (not shown). However, the groove 112 preferably does not penetrate to the outer periphery of the first processing member 101 as shown in FIG. 19 and FIG. 21 to FIG. 23, in order to effectively generate dynamical pressure.

Now, the embodiments shown in FIG. 18 to FIG. 23 are summarized.

This fluid processing apparatus is a processing apparatus wherein a rotating member having a flat processing surface and a fixed member having the same flat processing surface are opposite to each other so as to be concentric with each other, and while the rotating member is rotated, a material to be reacted is fed through an opening of the fixed member and subjected to a reaction between the opposite flat processing surfaces of both members, wherein the rotating member is provided with a pressurizingmechanismbywhichpressure is generated to maintain clearance without mechanically regulating clearance and enables 1 μm to 6 μm microscopic clearance not attainable by mechanical regulation of clearance, thereby significantly improving an ability to uniformize the mixing (reaction) and in some cases, an ability to pulverize the formed particles..

That is, this processing apparatus have a rotating member and a fixed member each having a flat processing surface in the outer periphery thereof and has a sealing mechanism in a plane on the flat processing surface, thereby providing a high speed rotation processing apparatus generating hydrostatic force, hydrodynamic force, or aerostatic-aerodynamic force. The force generates a minute space between the sealed surfaces, and provides a reaction processing apparatus with a function of non-contact and mechanically safe and high-level pulvelization and uniformizing of reactions. One factor for forming this minute space is due to the rotation speed of the rotating member, and the other factor is due to a pressure difference between the introduction side and discharge side of a processed material (fluid) . When a pressure imparting mechanism is not arranged in the introduction side, that is, when the processed material (fluid) is introduced at atmospheric pressure, there is no pressure difference, and thus the sealed surfaces should be separated by only the rotation speed of the rotating member. This is known as hydrodynamic or aerodynamic force.

FIG. 18(A) shows the apparatus wherein a decompression pump Q is connected to the discharge part of the reaction apparatus G, but as described above, the reaction apparatus G may be arranged in a decompression tank T without arranging the housing 106 and the decomposition pump Q, as shown in FIG. 24(A).

In this case, the tank T is decompressed in a vacuum or in an almost vacuum, whereby the processed product formed in the reaction apparatus G is sprayed in a mist form in the tank T, and the processed material colliding with, and running down along, the inner wall of the tank T can be recovered, or a gas (vapor) separated from the processed material and filled in an upper part of the tank T, unlike the processed material running down along the wall, can be recovered to obtain the objective product after processing.

As shown in Fig. 24 (B), when the decompression pump Q is used, an airtight tank T is connected via the decompression pump Q to the processing apparatus G, whereby the processed material after processing can be formed into mist to separate and extract the objective product.

As shown in FIG. 24(C), the decompression pump Q is connected directly to the processing apparatus G, and the decompression pump Q and a discharge part for fluid R, different from the decompression pump Q, are connected to the tank T, whereby the objective product can be separated. In this case, a gasified portion is sucked by the decompression pump Q, while the fluid R (liquid portion) is discharged from the discharge part separately from the gasified portion.

In the embodiments described above, the first and second processed fluids are introduced via the second holders 21 and 121 and the second rings 20 and 102 respectively and mixed and reacted with each other.

Now, other embodiments with respect to introduction of fluids to be processed into the apparatus are described.

As shown in FIG. 1(B), the processing apparatus shown in FIG. 1(A) is provided with a third introduction part d3 to introduce a third fluid to be processed into the space between the processing surfaces 1 and 2, and the third fluid is mixed and reacted with the first processed fluid as well as the second processed fluid.

By the third introduction part d3, the third fluid to be mixed with the first processed fluid is fed to the space between the processing surfaces 1 and 2. In this embodiment, the third introduction part d3 is a fluid flow path arranged in the second ring 20 and is open at one end to the second processing surface 2 and has a third fluid feed part p3 connected to the other end.

In the third fluid feed part p3, a compressor or another pump can be used.

The opening of the third introduction part d3 in the second processing surface 2 is positioned outside, and more far from, the rotation center of the first processing surface 1 than the opening of the second introduction part d2. That is, in the second processing surface 2, the opening of the third introduction part d3 is located downstream from the opening of the second introduction part d2. A gap is arranged between the opening of the third introduction d3 and the opening of the second introduction part d2 in the radial direction of the second ring 20.

With respect to structures other than the third introduction d3, the apparatus shown in FIG. 1(B) is similar to that in the embodiment as in FIG. 1(A). In FIG. 1(B) and further in FIG. 1(C), FIG. 1(D) and FIG. 2 to FIG. 11 described later, the case 3 is omitted to simplify the drawings. In FIG. 9(B), FIG. 9(C), FIG. 10, FIG. 11(A) and FIG. 11(B), a part of the case 3 is shown.

As shown in FIG. 1 (C), the processing apparatus shown in FIG. 1(B) is provided with a fourth introduction part d4 to introduce a fourth fluid to be processed into the space between the processing surfaces 1 and 2, and the fourth fluid is mixed and reacted with the first processed fluid as well as the second and third processed fluids.

By the fourth introduction part d4, the fourth fluid to be mixed with the first processed fluid is fed to the space between the processing surfaces 1 and 2. In this embodiment, the fourth introduction part d4 is a fluid flow path arranged in the second ring 20, is open at one end to the second processing surface 2, and has a fourth fluid feed part p4 connected to the other end.

In the fourth fluid feed part p4, a compressor or another pump can be used.

The opening of the fourth introduction part d4 in the second processing surface 2 is positioned outside, and more far from, the rotation center of the first processing surface 1 than the opening of the third introduction part d3. That is, in the second processing surface 2, the opening of the fourth introduction part d4 is located downstream from the opening of the third introduction part d3.

With respect to structures other than the fourth introduction part d4, the apparatus shown in FIG. 1(C) is similar to that in the embodiment as in FIG. 1(B).

Five or more introduction parts further including a fifth introduction part, a sixth introduction part and the like can be arranged to mix and react five or more fluids to be processed with one another (not shown).

As shown in FIG. 1(D), the first introduction part d1 arranged in the second holder 21 in the apparatus in FIG. 1(A) can, similar to the second introduction part d2, be arranged in the second processing surface 2 in place of the second holder 21. In this case, the opening of the first introduction part d1 is located at the upstream side from the second introduction part d2, that is, it is positioned nearer to the rotation center than the second introduction part d2 in the second processing surface 2.

In the apparatus shown in FIG. 1(D), the opening of the second introduction part d2 and the opening of the third introduction part d3 both are arranged in the second processing surface 2 of the second ring 20. However, arrangement of the opening of the introduction part is not limited to such arrangement relative to the processing surface. Particularly as shown in FIG. 2(A), the opening of the second introduction part d2 can be arranged in a position adjacent to the second processing surface 2 in the inner periphery of the second ring 20. In the apparatus shown in FIG. 2(A), the opening of the third introduction part d3 is arranged in the second processing surface 2 similarly to the apparatus shown in FIG. 1(B), but the opening of the second introduction part d2 can be arranged inside the second processing surface 2 and adjacent to the second processing surface 2, whereby the second processed fluid can be immediately introduced onto the processing surfaces.

In this manner, the opening of the first introduction part d1 is arranged in the second holder 21, and the opening of the second introduction part d2 is arranged inside the second processing surface 2 and adjacent to the second processing surface 2 (in this case, arrangement of the third introduction part d3 is not essential), so that particularly in reaction of a plurality of processed fluids, the processed fluid introduced from the first introduction part d1 and the processed fluid introduced from the second introduction part d2 are introduced, without being reacted with each other, into the space between the processing surfaces 1 and 2, and then both the fluids can be reacted first between the processing surfaces 1 and 2. Accordingly, the structure described above is suitable for obtaining a particularly reactive processed fluid.

The term "adj acent" is not limited to the arrangement where the opening of the second introduction part d2 is contacted with the inner side of the second ring 20 as shown in FIG. 2 (A). The distance between the second ring 20 and the opening of the second introduction part d2 may be such a degree that a plurality of processed fluids are not completely mixed and reacted with one another prior to introduction into the space between the processing surfaces 1 and 2. For example, the opening of the second introduction part d2 may be arranged in a position near the second ring 20 of the second holder 21. Alternatively, the opening of the second introduction part d2 may be arranged on the side of the first ring 10 or the first holder 11.

In the apparatus shown in FIG. 1(B), a gap is arranged between the opening of the third introduction part d3 and the opening of the second introduction part d2 in the radial direction of the second ring 20, but as shown in FIG. 2(B), the second and third processed fluids can be introduced into the space between the processing surfaces 1 and 2, without providing such gap, thereby immediately joining both the fluids together. The apparatus shown in FIG. 2 (B) can be selected depending on the object of processing.

In the apparatus shown in FIG. 1 (D), a gap is also arranged between the opening of the first introduction part d1 and the opening of the second introduction part d2 in the radial direction of the second ring 20, but the first and second processed fluids can be introduced into the space between the processing surfaces 1 and 2, without providing such gap, thereby immediately joining both the fluids together. Such arrangement of the opening can be selected depending on the object of processing.

In the embodiment shown in FIG. 1(B) and FIG. 1(C), the opening of the third introduction part d3 is arranged in the second processing surface 2 downstream from the opening of the second introduction part d2, in other words, outside the opening of the second introduction part d2 in the radial direction of the second ring 20. Alternatively, as

shown in FIG. 2(C) and FIG. 3(A), the opening of the third introduction part d3 and the opening of the second introduction part d2 can be arranged in the second processing surface 2 in positions different in a circumferential direction r0 of the second ring 20. In FIG. 3, numeral m1 is the opening (first opening) of the first introduction part d1, numeral m2 is the opening (second opening) of the second introduction part d2, numeral m3 is the opening (third opening) of the third introduction part d3, and numeral r1 is the radical direction of the ring.

When the first introduction part d1 is arranged in the second ring 20, as shown in FIG. 2 (D), the opening of the first introduction part d1 and the opening of the second introduction part d2 can be arranged in the second processing surface 2 in positions different in the circumferential direction of the second ring 20.

In the apparatus shown in FIG. 3 (A), the openings of two introduction parts are arranged in the second processing surface 2 of the second ring 20 in positions different in the circumferential direction r0, but as shown in FIG. 3(B), the openings of three introduction parts can be arranged in positions different in the circumferential direction r0 of the ring, or as shown in FIG. 3 (C), the openings of four introduction parts can be arranged in positions different in the circumferential direction r0 of the ring. In FIG. 3 (B) and FIG. 3(C), numeral m4 is the opening of the fourth introduction part, and in FIG. 3 (C), numeral m5 is the opening of the fifth introduction part. Five or more openings of introduction parts may be arranged in positions different in the circumferential direction r0 of the ring (not shown).

In the apparatuses above, the second to fifth introduction parts can introduce different fluids, that is, the second, third, fourth and fifth fluids. On the other hand, the second to fifth openings m2 to m5 can introduce the same fluid, that is, the second fluid into the space between the processing surfaces. In this case, the second to fifth introduction parts are connected to the inside of the ring and can be connected to one fluid feed part, that is, the second fluid feed part p2 (not shown).

A plurality of openings of introduction parts arranged in positions different in the circumferential direction r0 of the ring can be combined with a plurality of openings of introduction parts arranged in positions different in the radial direction r1 of the ring.

For example, as shown in FIG. 3(D), the openings m2 to m9 of eight introduction parts are arranged in the second processing surface 2, wherein four openings m2 to m5 of them are arranged in positions different in the circumferential direction r0 of the ring and identical in the radial direction r1 of the ring, and the other four openings m6 to m9 are arranged in positions different in the circumferential direction r0 of the ring and identical in the radial direction r1 of the ring. Then, the other openings m6 to m9 are arranged outside the radial direction r of the four openings m2 to m5 . The outside openings and inside openings may be arranged in positions identical in the circumferential direction r0 of the ring, but in consideration of rotation of the ring, may be arranged in positions different in the circumferential direction r0 of the ring as shown in FIG. 3 (D). In this case too, the openings are not limited to arrangement and number shown in FIG. 3(D).

For example, as shown in FIG. 3(E), the outside opening in the radial direction can be arranged in the apex of a polygon, that is, in the apex of a rectangle in this case, and the inside opening in the radial direction can be positioned on one side of the rectangle. As a matter of course, other arrangements can also be used.

When the openings other than the first opening m1 feed the second processed fluid into the space between the processing surfaces, each of the openings may be arranged as continuous openings in the circumferential direction r0 as shown in FIG. 3(F), instead of being arranged discretely in the circumferential direction r0 of the processing surface.

As shown in FIG. 4(A), depending on the object of processing, the second introduction part d2 arranged in the second ring 20 in the apparatus shown in FIG. 1 (A) can be, similar to the first introduction part d1, arranged in the central portion 22 of the second holder 21. In this case, the opening of the second introduction part d2 is positioned with a gap outside the opening of the first introduction part d1 positioned in the center of the second ring 20. As shown in FIG. 4(B), in the apparatus shown in FIG. 4(A), the third introduction part d3 can be arranged in the second ring 20. As shown in FIG. 4(C), in the apparatus shown in FIG. 4 (A), the second and thirdprocessed fluids can be introduced into the space inside the second ring 20 without arranging a gap between the opening of the first introduction part d1 and the opening of the second introduction part d2, so that both the fluids can immediately join together. As shown in FIG. 4(D), depending on the object of processing, in the apparatus shown in FIG. 4 (A), the third introduction part d3 can be, similar to the second introduction part d2, arranged in the second holder 21. Four or more introduction parts may be arranged in the second holder 21 (not shown).

As shown in FIG. 5(A), depending on the object of processing, in the apparatus shown in FIG. 4(D), the fourth introduction part d4 can be arranged in the second ring 20, so that the fourth processed fluid may be introduced into the space between the processing surfaces 1 and 2.

As shown in FIG. 5 (B), in the apparatus shown in FIG. 1(A), the second introduction part d2 can be arranged in the first ring 10, and the opening of the second introduction part d2 can be arranged in the first processing surface 1.

As shown in FIG. 5(C), in the apparatus shown in FIG. 5 (B), the third introduction part d3 can be arranged in the first ring 10, and the opening of the third introduction part d3 and the opening of the second introduction part d2 can be arranged in the first processing surface 1 in positions different in the circumferential direction of the first ring 10.

As shown in FIG. 5 (D), in the apparatus shown in FIG. 5 (B), the first introduction part d1 can be arranged in

the second ring 20 instead of arranging the first introduction part d1 in the second holder 21, and the opening of the first introduction part d1 can be arranged in the second processing surface 2. In this case, the openings of the first and second introduction parts d1 and d2 are arranged in positions identical in the radial direction of the ring.

As shown in FIG. 6 (A), in the apparatus shown in FIG. 1 (A), the third introduction part d3 can be arranged in the first ring 10, and the opening of the third introduction part d3 can be arranged in the first processing surface 1. In this case, both the openings of the second and third introduction parts d2 and d3 are arranged in positions identical in the radial direction of the ring. However, both the openings may be arranged in positions different in the radial direction of the ring.

In the apparatus shown in FIG. 5(C), the openings are arranged in positions identical in the radial direction of the first ring 10 and simultaneously arranged in positions different in the circumferential direction (that is, rotation direction) of the first ring 10, but in this apparatus, as shown in FIG. 6(B), both the openings of the second and third introduction parts d2 and d3 can be arranged in positions different in the radical direction of the first ring 10. In this case, as shown in FIG. 6(B), a gap can be arranged between both the openings of the second and third introduction parts d2 and d3 in the radial direction of the first ring 10, or without arranging the gap, the second and third processed fluids may immediately join together (not shown).

As shown in FIG. 6(C), the first introduction part d1 together with the second introduction part d2 can be arranged in the first ring 10 instead of arranging the first introduction part d1 in the second holder 21. In this case, in the first processing surface 1, the opening of the first introduction part d1 is arranged upstream (inside the radial direction of the first ring 10) from the opening of the second introduction part d2. A gap is arranged between the opening of the first introduction part d1 and the opening of the second introduction part d2 in the radial direction of the first ring 10. Alternatively, such gap may not be arranged (not shown).

As shown in FIG. 6(D), both the openings of the first introduction part d1 and the second introduction part d2 can be arranged in positions different in the circumferential direction of the first ring 10 in the first processing surface 1 in the apparatus shown in FIG. 6(C).

In the embodiment shown in FIG. 6 (C) and FIG. 6 (D), three or more introduction parts may be arranged in the first ring 10, and in the second processing surface 2, so the respective openings may be arranged in positions different in the circumferential direction or in positions different in the radial direction of the ring (not shown). For example, the arrangement of openings in the second processing surface 2, shown in FIG. 3 (B) to FIG. 3(F), can also be used in the first processing surface 1.

As shown in FIG. 7 (A), in the apparatus shown in FIG. 1 (A), the second introduction part d2 can be arranged in the first holder 11 instead of arranging the part d2 in the second ring 20. In this case, the opening of the second introduction part d2 is arranged preferably in the center of the central shaft of rotation of the first ring 10, in the site surrounded with the first ring 10 on the upper surface of the first holder 11.

As shown in FIG. 7(B), in the embodiment shown in FIG. 7 (A), the third introduction part d3 can be arranged in the second ring 20, and the opening of the third introduction part d3 can be arranged in the second processing surface 2.

As shown in FIG. 7(C), the first introduction part d1 can be arranged in the first holder 11 instead of arranging the part d1 in the second holder 21. In this case, the opening of the first introduction part d1 is arranged preferably in the central shaft of rotation of the first ring 10, in the site surrounded with the first ring 10 on the upper surface of the first holder 11. In this case, as shown in the figure, the second introduction part d2 can be arranged in the first ring 10, and its opening can be arranged in the first processing surface 1. In this case, the second introduction part d2 can be arranged in the second ring 20, and its opening can be arranged in the second processing surface 2 (not shown).

As shown in FIG. 7(D), the second introduction part d2 shown in FIG. 7(C) together with the first introduction part d1 can be arranged in the first holder 11. In this case, the opening of the second introduction part d2 is arranged in the site surrounded with the first ring 10 on the upper surface of the first holder 11. In this case, the second introduction part d2 arranged in the second ring 20 may serve as the third introduction part d3 in FIG. 7(C).

In the embodiments shown in FIG. 1 to FIG. 7, the first holder 11 and the first ring 10 are rotated relative to the second holder 21 and the second ring 20, respectively. As shown in FIG. 8 (A), in the apparatus shown in FIG. 1 (A), the second holder 2 may be provided with a rotary shaft 51 rotating with the turning force from the rotation drive member, to rotate the second holder 21 in a direction opposite to the first holder 11. The rotation drive member may be arranged separately from the one for rotating the rotary shaft 50 of the first holder 11 or may receive power from the drive part for rotating the rotary shaft 50 of the first holder 11 by a power transmission means such as a gear. In this case, the second holder 2 is formed separately from the case, and shall, like the first holder 11, be rotatably accepted in the case.

As shown in FIG. 8 (B), in the apparatus shown in FIG. 8 (A), the second introduction part d2 can be, similarly in the apparatus in FIG. 7(B), arranged in the first holder 11 in place of the second ring 20.

In the apparatus shown in FIG. 8(B), the second introduction part d2 can be arranged in the second holder 21 in place of the first holder 11 (not shown). In this case, the second introduction part d2 is the same as one in the apparatus in FIG. 4(A). As shown in FIG. 8(C), in the apparatus shown in FIG. 8(B), the third introduction part d3 can be arranged in the second ring 20, and the opening of the third introduction part d3 can be arranged in the second processing surface 2.

As shown in FIG. 8(D), the second holder 21 only can be rotated without rotating the first holder 11. Even in the apparatuses shown in FIG. 1(B) to FIG. 7, the second holder 21 together with the first holder 11, or the second holder 21 alone, can be rotated (not shown).

As shown in FIG. 9(A), the second processing member 20 is a ring, while the first processing member 10 is not a ring and can be a rotating member provided directly with a rotary shaft 50 similar to that of the first holder 11 in other embodiments. In this case, the upper surface of the first processing member 10 serves as the first processing surface 1, and the processing surface is an evenly flat surface which is not circular (that is, hollow-free). In the apparatus shown in FIG. 9(A), similarly in the apparatus in FIG. 1 (A), the second introduction part d2 is arranged in the second ring 20, and its opening is arranged in the second processing surface 2.

As shown in FIG. 9 (B), in the apparatus shown in FIG. 9 (A), the second holder 21 is independent of the case 3, and a surface-approaching pressure imparting mechanism 4 such as an elastic body for approaching to and separating from the first processing member 10 provided with the second ring 20 can be provided between the case 3 and the second holder 21. In this case, as shown in FIG. 9(C), the second processing member 20 is not a ring, but is a member corresponding to the second holder 21, and the lower surface of the member can serve as the second processing surface 2. As shown in FIG. 10(A), in the apparatus shown in FIG. 9 (C), the first processing member 10 is not a ring either, and in other embodiments similarly in the apparatus shown in FIG. 9 (A) and FIG. 9 (B), the site corresponding to the first holder 11 can serve as the first processing member 10, and its upper surface can serve as the first processing surface 1.

In the embodiments described above, at least the first fluid is supplied from the first processing member 10 and the second processing member 20, that is, from the central part of the first ring 10 and the second ring 20, and after processing (mixing and reaction) of the other fluids, the processed fluid is discharged to the outside in the radial direction.

Alternatively, as shown in FIG. 10(B), the first fluid can be supplied in the direction from the outside to the inside of the first ring 10 and second ring 20. In this case, the outside of the first holder 11 and the second holder 21 is sealed with the case 3, the first introduction part d1 is arranged directly in the case 3 , and the opening of the introduction part is arranged in a site inside the case and corresponding to the abutting position of the rings 10 and 20, as shown in the figure. In the apparatus in FIG. 1(A), a discharge part 36 is arranged in the position in which the first introduction part d1 is arranged, that is, in the central position of the ring 1 of the first holder 11. The opening of the second introduction part d2 is arranged in the opposite side of the opening of the case behind the central shaft of rotation of the holder. However, the opening of the second introduction part d may be, similar to the opening of the first introduction part d1, arranged in a site inside the case and corresponding to the abutting position of the rings 10 and 20. As described above, the embodiment is not limited to the one where the opening of the second introduction part d2 is formed to the opposite side of the opening of the first introduction part d1.

In this case, the outside of the diameter of both the rings 10 and 20 is on the upstream side, and the inside of both the rings 10 and 20 is on the downstream side.

As such, as shown in FIG. 16(E), when the processed fluid moves from outside to inside, the first processing surface 1 of the first processing member 10 may also be provided with groove-like depressions 13...13 extending in the direction from outside to inside of the first processing member 10. When the groove-like depressions 13...13 are formed, the balance ratio K described above is preferably set as 100% or more of unbalance type. As a result, dynamical pressure is generated in the groove-like depressions 13...13 upon rotating, the first and second processing surfaces 1 and 2 can rotate in a surely non-contact state, so that the risk of abrasion and the like due to contact can be eliminated. In the embodiment shown in FIG. 16 (E), the separating force due to the pressure of the processed fluid is generated in an inner end 13a of the depressions 13.

As shown in FIG. 10(C), in the apparatus shown in FIG. 10(B), the second introduction part d2, which is arranged in the side of the case 3, can be arranged in the first ring 10 in space of the mentioned position, and its opening can be arranged in the first processing surface 1. In this case, as shown in FIG. 10(D), the first processing member 10 is not formed as a ring. Similarly in the apparatuses shown in FIG. 9(A), FIG. 9 (B) and FIG. 10 (A), inother embodiments, the site corresponding to the first holder 11 is the first processing member 10, its upper surface being the first processing surface 1, the second introduction part d2 being arranged in the first processing member 10, and its opening may be arranged in the first processing surface 1.

As shown in FIG. 11(A), in the apparatus shown in FIG. 10 (D), the second processing member 20 is not formed as a ring, and in other embodiments, the member corresponding to the second holder 21 serves as the second processing member 20, and its lower surface serves as the second processing surface 2. Then, the second processing member 20 is a member independent of the case 3, and the same surface-approaching pressure imparting mechanism 4 as one in the apparatuses shown in FIG. 9(B), FIG. 9(C) and FIG. 10(A) can be arranged between the case 3 and the second processing member 20.

As shown in FIG. 11(B), the second introduction part d2 in the apparatus shown in FIG. 11(A) serves as the third introduction part d3, and separately the second introduction part d2 can be arranged. In this case, the opening of the second introduction part d2 is arranged upstream from the opening of the third introduction part d3 in the second processing surface 2.

In the apparatuses shown in FIG. 4 and the apparatuses shown in FIG. 5(A), FIG. 7 (A), FIG. 7(B), FIG. 7(D), FIG. 8(B) and FIG. 8(C), other processed fluids flow into the first processed fluid before reaching the processing surfaces 1 and 2, and these apparatuses are not suitable for the fluid which is rapidly crystallized or separated. However, these apparatuses can be used for the fluid having a low reaction speed.

The processing apparatus suitable for carrying out the method according to the present invention is summarized as follows.

As described above, the processing apparatus comprises a fluid pressure imparting mechanism that imparts predetermined pressure to a processed fluid, at least two processing members, that is, a first processing member 10 arranged in a sealed fluid flow path through which a processed fluid at the predetermined pressure flows and a second processing member 20 capable of approaching to and separating from the first processing member 10, at least two processing surfaces of a first processing surface 1 and a second processing surface 2 arranged in a position in which they are faced with each other in the processing members 10 and 20, and a rotation drive mechanism that relatively rotates the first processing member 10 and the second processing member 20, wherein at least two processed fluids are mixed and reacted between the processing surfaces 1 and 2. Of the first processing member 10 and the second processing member 20, at least the second processing member 20 has a pressure-receiving surface, at least a part of the pressure-receiving surface is comprised of the second processing surface 2, and the pressure-receiving surface receives pressure applied by the fluid pressure imparting mechanism to at least one of the fluids to generate a force to move in the direction of separating the second processing surface 2 from the first processing surface 1. In this apparatus, the processed fluid that has received said pressure passes through the space between the first processing surface 1 and the second processing surface 2 capable of approaching to and separating from each other, thereby generating a desired mixing (reaction) between the processed fluids with the processed fluids being passed between the processing surfaces 1 and 2 and forming a fluid film of predetermined thickness.

In this processing apparatus, at least one of the first processing surface 1 and the second processing surface 2 is preferably provided with a buffer mechanism for regulation of micro-vibration and alignment.

In this processing apparatus, one of or both the first processing surface 1 and the second processing surface 2 is preferably provided with a displacement regulating mechanism capable of regulating the displacement in the axial direction caused by abrasion or the like thereby maintaining the thickness of a fluid film between the processing surfaces 1 and 2.

In this processing apparatus, a pressure device such as a compressor for applying predetermined feeding pressure to a fluid can be used as the fluid pressure imparting mechanism.

As the pressure device, a device capable of regulating an increase and decrease in feeding pressure is used. This is because the pressure device should be able to keep established pressure constant and should be able to regulate an increase and decrease in feeding pressure as a parameter to regulate the distance between the processing surfaces.

The processing apparatus can be provided with a separation preventing part for defining the maximum distance between the first processing surface 1 and the second processing surface 2 and preventing the processing surfaces 1 and 2 from separating from each other by the maximum distance or more.

The processing apparatus can be provided with an approach preventing part for defining the minimum distance between the first processing surface 1 and the second processing surface 2 and preventing the processing surfaces 1 and 2 from approaching to each other by the minimum distance or less.

The processing apparatus can be one wherein both the first processing surface 1 and the second processing surface 2 are rotated in opposite directions.

The processing apparatus can be provided with a temperature-regulating jacket for regulating the temperature of either or both of the first processing surface 1 and the second processing surface 2.

The processing apparatus is preferably one wherein at least a part of either or both of the first processing surface 1 and the second processing surface 2 is mirror-polished.

The processing apparatus can be one wherein one of or both the first processing surface 1 and the second processing surface 2 is provided with depressions.

The processing apparatus preferably includes, as a means for feeding one processed fluid to be mixed (reacted) with another processed fluid, a separate introduction path independent of a path for another processed fluid, at least one of the first processing surface and the second processing surface is provided with an opening leading to the separate introduction path, and another processed fluid sent through the separate introduction path is introduced into the processed fluid.

The processing apparatus for carrying out the present invention comprises a fluid pressure imparting mechanism that imparts predetermined pressure to a fluid, at least two processing surfaces of a first processing surface 1 and a second processing surface 2 capable of approaching to and separating from each other which are connected to a sealed fluid flow path through which the processed fluid at the predetermined pressure is passed, a surface-approaching pressure imparting mechanism that imparts surface-approaching pressure to the space between the processing surfaces 1 and 2, and a rotation drive mechanism that relatively rotates the first processing surface 1 and the second processing

surface 2, whereby at least two processed fluids are mixed (reacted) between the processing surfaces 1 and 2, at least one processed fluid pressurized with the fluid pressure imparting mechanism is passed through the space between the first processing surface 1 and the second processing surface 2 rotating to each other and supplied with surface-approaching pressure, and another processed fluid is passed, so that the processed fluid pressurized with the fluid pressure imparting mechanism, while being passed between the processing surfaces and forming a fluid film of predetermined thickness, is mixed with another processed fluid, whereby a desired mixing (reaction) is caused between the processed fluids.

The surface-approaching pressure imparting mechanism can constitute a buffer mechanism of regulating micro-vibration and alignment and a displacement regulation mechanism in the apparatus described above.

The processing apparatus for carrying out the present invention comprises a first introduction part that introduces, into the apparatus, at least one of two processed fluids to be mixed (reacted), a fluid pressure imparting mechanism p that is connected to the first introduction part and imparts pressure to the processed fluid, a second introduction part that introduces at least the other fluid of the two processed fluids to be mixed (reacted), at least two processing members, that is, a first processing member 10 arranged in a sealed fluid flow path through which the other processed fluid is passed and a second processing member 20 capable of relatively approaching to and separating from the first processing member 10, at least two processing surfaces, that is, a first processing surface 1 and a second processing surface 2 arranged so as to be opposite to each other in the processing members 10 and 20, a holder 21 that accepts the second processing member 20 so as to expose the second processing surface 2, a rotation drive mechanism that relatively rotates the first processing member 10 and the second processing member 20, and a surface-approaching pressure imparting mechanism 4 that presses the second processing member 20 against the first processing surface 1 such that the second processing surface 2 is contacted against or made close to the first processing surface 1, wherein the processed fluids are mixed (reacted) between the processing surfaces 1 and 2, the holder 21 is provided with an opening of the first introduction part and is not movable so as to influence the space between the processing surfaces 1 and 2, at least one of the first processing member 10 and the second introduction part 20 is provided with an opening of the second introduction part, the second processing member 20 is circular, the second processing surface 2 slides along the holder 21 and approaches to and separates from the first processing surface 1, the second processing member 20 includes a pressure-receiving surface, the pressure-receiving surface receives pressure applied by the fluid pressure imparting mechanism p to the processed fluid to generate a force to move in the direction of separating the second processing surface 2 from the first processing surface 1, at least a part of the pressure-receiving surface is comprised of the second processing surface 2, one of the processed fluids to which pressure was applied is passed through the space between the first processing surface 1 and the second processing surface 2 rotating to each other and capable of approaching to and separating from each other, and the other processed fluid is supplied to the space between the processing surfaces 1 and 2, whereby both the processed fluids form a fluid film of predetermined thickness and pass through the space between both the processing surfaces 1 and 2, the passing processed fluid are mixed thereby promoting a desired mixing (reaction) between the processed fluids, and the minimum distance for generating the fluid film of predetermined thickness is kept between the processing surfaces 1 and 2 by the balance between the surface-approaching pressure by the surface-approaching pressure imparting mechanism 4 and the force of separating the processing surfaces 1 and 2 from each other by the fluid pressure imparted by the fluid pressure imparting mechanism p.

In this processing apparatus, the second introduction part canbe, similarly being connected to the first introduction part, arranged to be connected to a separate fluid pressure imparting mechanism and to be pressurized. The processed fluid introduced from the second introduction part is not pressurized by the separate fluid pressure imparting mechanism, but is sucked and supplied into the space between the processing surfaces 1 and 2 by negative pressure generated in the second introduction part by the fluid pressure of the processed fluid introduced into the first introduction part. Alternatively, the other processed fluid flows downward by its weight in the second introduction part and can be supplied into the space between the processing surfaces 1 and 2.

As described above, the apparatus is not limited to the one wherein the opening of the first introduction part as an inlet for feeding the other processed fluid into the apparatus is arranged in the second holder, and the opening of the first introduction part may be arranged in the first holder. The opening of the first introduction part may be formed with at least one of the processing surfaces. However, when the processed fluid to be previously introduced into the space between the processing surfaces 1 and 2 should, depending on the reaction, be supplied from the first introduction part, the opening of the second introduction part as an inlet for feeding the other processed fluid into the apparatus should be arranged downstream from the opening of the first introduction part in any of the processing surfaces.

As the fluid processing apparatus for carrying out the present invention, the following apparatus can be used.

This processing apparatus comprises a plurality of introduction parts that separately introduce two or more processed fluids to be mixed (reacted), a fluid pressure imparting mechanism p that imparts pressure to at least one of the two ormore processed fluids, at least two processing members, that is, a first processing member 10 arranged in a sealed fluid flow path through which the processed fluid is passed and a second processing member 20 capable of relatively approaching to and separating from the first processing member 10, at least two processing surfaces 1 and

2, that is, a first processing surface 1 and a second processing surface 2 arranged in a position in which they are faced with each other in the processing members 10 and 20, and a rotation drive mechanism that relatively rotates the first processing member 10 and the second processing member 20, wherein the processed fluids are mixed (reacted) between the processing surfaces 1 and 2, at least the second processing member 20 of the first processing member 10 and the second processing member 20 includes a pressure-receiving surface, at least a part of the pressure-receiving surface is comprised of the second processing surface 2, the pressure-receiving surface receives pressure applied by the fluid pressure imparting mechanism to the processed fluid to generate a force to move in the direction of separating the second processing surface 2 from the first processing surface 1, the second processing member 20 includes an approach regulating surface 24 that is directed to the opposite side of the second processing surface 2, the approach regulating surface 24 receives predetermined pressure applied to the processed fluid to generate a force to move in the direction of approaching the second processing surface 2 to the first processing surface 1, a force to move in the direction of separating the second processing surface 2 from the first processing surface 1 as a resultant force of total pressure received from the processed fluid is determined by the area ratio of the projected area of the approach regulating surface 24 in the approaching and separating direction to the projected area of the pressure-receiving surface in the approaching and separating direction, the processed fluid to which pressure was applied is passed through the space between the first processing surface 1 and the second processing surface 2 that rotate relative to each other and capable of approaching to and separating from each other, the other processed fluid to be mixed (reacted) with the processed fluid is mixed in the space between the processing surfaces, and the mixed processed fluid forms a fluid film of predetermined thickness and simultaneously passes through the space between the processing surfaces 1 and 2, thereby giving a desired product while passing through the space between the processing surfaces.

The fluid processing method according to the present invention is summarized as follows. The fluid processing method comprises applying predetermined pressure to a first fluid, connecting at least two processing surfaces, that is, a first processing surface 1 and a second processing surface 2, which are capable of approaching to and separating from each other, to a sealed fluid flow path through which the processed fluid that has received the predetermined pressure is passed, applying a surface-approaching pressure of approaching the first processing surface 1 and the second processing surface 2 each other, rotating the first processing surface 1 and the second processing surface 2 relative to each other, and introducing the processed fluid into the space between the processing surfaces 1 and 2, wherein the second processed fluid to be mixed (reacted) with the processed fluid is introduced through a separate flowpath into the space between the processing surfaces 1 and 2 thereby mixing (reacting) both the processed fluids, the predetermined pressure applied to at least the first processed fluid functions as a separating force for separating the processing surfaces 1 and 2 from each other, and the separating force and the surface-approaching pressure are balanced via the processed fluid between the processing surfaces 1 and 2, whereby the distance between the processing surfaces 1 and 2 is kept in a predetermined minute space, the processed fluid is passed as a fluid film of predetermined thickness through the space between the processing surfaces 1 and 2, and when both the processed fluids are uniformly mixed (reacted) with each other while passing and accompanied by separation, a desired reaction product is crystallized or separated.

Hereinafter, other embodiments of the present invention are described in detail. FIG. 25 is a schematic sectional view of a fluid processing apparatus whereinmaterials to be processed are processed between processing surfaces, at least one of which rotates relative to the other, and which are capable of approaching to and separating from each other. FIG. 26 (A) is a schematic plane view of the first processing surface in the apparatus shown in FIG. 25, and FIG. 26(B) is an enlarged view of an important part of the processing surface in the apparatus shown in FIG. 25. In FIG. 27 (A) is a sectional view of the second introduction path, and FIG. 27(B) is an enlarged view of an important part for explaining the second introduction path.

In FIG. 25, arrows U and S show upward and downward directions respectively. In FIG. 26(A) and FIG. 27(B), arrow R shows the direction of rotation. In FIG. 27 (B), arrow C shows the direction of centrifugal force (radial direction).

This apparatus uses at least two fluids, at least one of which contains at least one kind of material to be processed, and the fluids join together in the space between the processing surfaces arranged to be opposite so as to be able to approach to and separate from each other, at least one of which rotates relative to the other, thereby forming a thin film fluid, and the materials to be processed are processed in the thin film fluid. The "process" includes not only a form in which the processed material is reacted, but also a form in which only mixing or dispersion is conducted without accompanying reaction.

As shown in FIG. 25, this apparatus includes a first holder 11, a second holder 21 arranged over the first holder 11, a fluid pressure imparting mechanism P and a surface-approaching pressure imparting mechanism. The surface-approaching pressure imparting mechanism is comprised of a spring 43 and an air introduction part 44.

The first holder 11 is provided with a first processing member 10 and a rotary shaft 50. The first processing member 10 is a circular body called a maintaining ring and provided with a mirror-polished first processing surface 1. The rotary shaft 50 is fixed to the center of the first holder 11 with a fixing device 81 such as a bolt and is connected at its rear end to a rotation drive device 82 (rotation drive mechanism) such as a motor, and the drive power of the rotation

drive device 82 is transmitted to the first holder 11 thereby rotating the first holder 11. The first processing member 10 is integrated with the first holder 11 and rotated.

A receiving part capable of receiving the first processing member 10 is arranged on the upper part of the first holder 11, wherein the first processing member 10 has been fixed to the first holder 11 by insertion to the receiving part. The first processing member 10 has been fixed with a rotation preventing pin 83 so as not to be rotated relative to the first holder 11. However, a method such as fitting by burning may be used for fixing in place of the rotation-preventing pin 83 in order to prevent rotation.

The first processing surface 1 is exposed from the first holder 11 and faced with the second holder 21. The material for the first processing surface includes ceramics, sintered metal, abrasion-resistant steel, other hardened metals, and rigid materials subjected to lining, coating or plating.

The second holder 21 is provided with a second processing member 20, a first introduction part d1 for introducing a fluid from the inside of the processing member, a spring 43 as a surface-approaching pressure imparting mechanism, and an air introduction part 44.

The second processing member 20 is a circular member called a compression ring and includes a second processing surface 2 subjected to mirror polishing and a pressure-receiving surface 23 (referred to hereinafter as separation regulating surface 23) which is located inside the second processing surface 2 and adjacent to the second processing surface 2. As shown in the figure, the separation regulating surface 23 is an inclined surface. The method of the mirror polishing to which the second processing surface 2 was subjected is the same as that to the first processing surface 1. The material for the second processing member 20 maybe the same as one for the first processing member 10. The separation regulating surface 23 is adjacent to the inner periphery 25 of the circular second process ing member 20.

A ring-accepting part 41 is formed in the bottom (lower part) of the second holder 21, and the second processing member 20 together with an O-ring is accepted in the ring-accepting part 41. The second processing member 20 is accepted with a rotation preventive 84 so as not to be rotated relative to the second holder 21. The second processing surface 2 is exposed from the second holder 21. In this state, the second processing surface 2 is faced with the first processing surface 1 of the first processing member 10.

The ring-accepting part 41 arranged in the second holder 21 is a depression for mainly accepting that side of the second ring 20 which is opposite to the processing surface 2 and is a groove formed in a circular form when viewed in a plane.

The ring-accepting part 41 is formed in a larger size than the second ring 20 and accepts the second ring 20 with sufficient clearance between itself and the second ring 20.

By this clearance, the second processing member 20 is accepted in the ring-accepting part 41 such that it can be displaced not only in the axial direction of the accepting part 41 but also in a direction perpendicular to the axial direction. The second processing member 20 is accepted in the ring-accepting part 41 such that the central line (axial direction) of the second processing member 20 can be displaced so as not to be parallel to the axial direction of the ring-accepting part 41. The spring 43 is arranged as a processing member-biasing part in at least the ring-accepting part 41 of the second holder 21. The spring 43 biases the second processing member 20 toward the first processing member 10. As another bias method, air pressure such as one in the air introduction part 44 or another pressurization means for applying fluid pressure may be used to bias the second processing member 20 held by the second holder 21 in the direction of approaching the second processing member 20 to the first processing member 10.

The surface-approaching pressure imparting mechanism such as the spring 43 or the air introduction part 44 biases each position (each position in the processing surface) in the circumferential direction of the second processing member 20 evenly toward the first processing member 10. The first introduction part d1 is arranged on the center of the second holder 21, and the fluid which is pressure-fed from the first introduction part d1 to the outer periphery of the processing member is first introduced into the space surrounded with the second processing member 20 held by the second holder 21, the first processing member 10, and the first holder 11 that holds the first processing member 10. Then, the feeding pressure (supply pressure) of the fluid by the fluid pressure imparting mechanism P is applied to the pressure-receiving surface 23 arranged in the second processing member 20, in the direction of separating the second processing member 20 from the first processing member 10 against the bias of the biasing part.

For simplifying the description of other components, only the pressure-receiving surface 23 is described, and as shown in FIG. 29 (A) and FIG. 29 (B), properly speaking, together with the pressure-receiving surface 23, a part 23X not provided with the pressure-receiving surface 23, out of the projected area in the axial direction relative to the second processing member 20 in a grooved depression 13 described later, serves as a pressure-receiving surface and receives the feeding pressure (supply pressure) of the fluid by the fluid pressure imparting mechanism P.

The apparatus may not be provided with the pressure-receiving surface 23. In this case, as shown in FIG. 26(A), the effect (micro-pump effect) of introduction of the processed fluid into the space between the processing surfaces formed by rotation of the first processing surface 1 provided with the grooved depression 13 formed to function the surface-approaching pressure imparting mechanism may be used. The micro-pump effect is an effect by which the fluid

in the depression advances with speed toward the end in the circumferential direction by rotation of the first processing surface 1 and then the fluid sent to the end of the depression 13 further receives pressure in the direction of inner periphery of the depression 13 thereby finally receiving pressure in the direction of separating the processing surface and simultaneously introducing the fluid into the space between the processing surfaces. Even if the first processing surface 1 is not rotated, the pressure applied to the fluid in the depression 13 arranged in the first processing surface 1 finally acts on the second processing surface 2 to be separated as a pressure-receiving surface.

For the depression 13 arranged on the processing surface, its total area in the horizontal direction relative to the processing surface, and the depth, number, and shape of depressions, can be established depending on the physical properties of a fluid containing reactants and reaction products.

The pressure-receiving surface 23 and the depression 13 may be arranged in the same apparatus.

The depression 13 is a depression having a depth of 1 μm to 50 μm, preferably 3 μm to 20 μm, which is arranged on the processing surface, the total area thereof in the horizontal direction is 5% to 50%, preferably 15% to 25%, based on the whole of the processing surface, the number of depressions is 3 to 50, preferably 8 to 24, and the depression extends in a curved or spiral form on the processing surface or bends at a right angle, having depth changing continuously, so that fluids with high to low viscosity, even containing solids, can be introduced into the space between the processing surfaces stably by the micro-pump effect. The depressions arranged on the processing surface may be connected to one another or separated from one another in the side of introduction, that is, inside the processing surface.

As described above, the pressure-receiving surface 23 is inclined. This inclined surface (pressure-receiving surface 23) is formed such that the distance in the axial direction between the upstream end in the direction of flow of the processed fluid and the processing surface of the processing member provided with the depression 13 is longer than the distance between the downstream end and the aforesaid processing surface. The downstream end of this inclined surface in the direction of flow of the processed fluid is arranged preferably on the projected area in the axial direction of the depression 13.

Specifically, as shown in FIG. 28(A), a downstream end 60 of the inclined surface (pressure-receiving surface 23) is arranged on the projected area in the axial direction of the depression 13. The angle θ1 of the inclined surface to the second processing surface 2 is preferably in the range of 0.1° to 85°, more preferably in the range of 10° to 55°, still more preferably in the range of 15° to 45°. The angle θ1 can vary depending on properties of the processed product before processing. The downstream end 60 of the inclined surface is arranged in the region extending from the position apart downstream by 0.01 mm from an upstream end 13-b to the position apart upstream by 0.5 mm from a downstream end 13-c in the depression 13 arranged in the first processing surface 1. The downstream end 60 of the inclined surface is arranged more preferably in the region extending from the position apart downstream by 0.05 mm from the upstream end 13-b to the position apart upstream by 1.0 mm from the downstream end 13-c. Like the angle of the inclined surface, the position of the downstream end 60 can vary depending on properties of a material to be processed. As shown in FIG. 28 (B), the inclined surface (pressure-receiving surface 23) can be a curved surface. The material to be processed can thereby be introduced more uniformly.

The depressions 13 may be connected to one another or separated from one another as described above. When the depressions 13 are separated, the upstream end at the innermost peripheral side of the first processing surface 1 is 13-b, and the upstream end at the outermost peripheral side of the first processing surface 1 is 13-c.

In the foregoing description, the depression 13 was formed on the first processing surface 1 and the pressure-receiving surface 23 was formed on the second processing surface 2. On the contrary, the depression 13 may be formed on the second processing surface 2, and the pressure-receiving surface 23 may be formed on the first processing surface 1.

Alternatively, the depression 13 is formed both on the first processing surface 1 and the second processing surface 2, and the depression 13 and the pressure-receiving surface 23 are alternately arranged in the circumferential direction of each of the respective processing surfaces 1 and 2, whereby the depression 13 formed on the first processing surface 1 and the pressure-receiving surface 23 formed on the second processing surface 2 are faced with each other and simultaneously the pressure-receiving surface 23 formed on the first processing surface 1 and the depression 13 formed on the second processing surface 2 are faced with each other.

A groove different from the depression 13 can be formed on the processing surface. Specifically, as shown in FIG. 16 (F) and FIG. 16 (G), a radially extending novel depression 14 instead of the depression 13 can be formed outward in the radial direction (FIG. 16(F)) or inward in the radial direction (FIG. 16(G)). This is advantageous for prolongation of retention time between the processing surfaces or for processing a highlyviscous fluid.

The groove different from the depression 13 is not particularly limited with respect to the shape, area, number of depressions, and depth. The groove can be formed depending on the object.

The second introduction part d2 independent of the fluid flow path introduced into the processing surface and provided with the opening d20 leading to the space between the processing surfaces is formed on the second processing member 20.

Specifically, as shown in FIG. 27(A), the direction of introduction of the second introduction part d2 from the

opening d20 of the second processing surface 2 is inclined at a predetermined elevation angle (θ1) relative to the second processing surface 2. The elevation angle (θ1) is arranged at more than 0° and less than 90°, and when the reaction speed is high, the angle (θ1) is preferably arranged at 1° to 45°.

As shown in FIG. 27 (B), the direction of introduction of the second processing surface 2 from the opening d20 has directionality in a plane along the second processing surface 2. The direction of introduction of the second fluid is made apart in the outward direction in the component of the radial direction on the processing surface and in the forward direction in the component of the rotation direction of the fluid between the rotating processing surfaces. In other words, a predetermined angle (θ2) exists toward the rotation direction R from a reference line g drawn in the radially outward direction passing through the opening d20.

The angle (θ2) is also arranged at more than 0° and less than 90° at which the fluid is discharged from the opening d20 to the shaded region in FIG. 27(B). When the reaction speed is high, the angle (θ2) may be small, and when the reaction speed is low, the angle (θ2) is preferably arranged larger. This angle can vary depending on various conditions such as the type of fluid, the reaction speed, viscosity, and the rotation speed of the processing surface.

The bore diameter of the opening d20 is preferably 0.2 μm to 3000 μm, more preferably 10 μm to 1000 μm. When the diameter of the opening d20 does not substantially influence the flow of a fluid, the diameter of the second introduction part d2 may be established in this range. Depending on whether the fluid is intended to be transferred straight or dispersed, the shape of the opening d20 is preferably changed and can be changed depending on various conditions such as the type of fluid, reaction speed, viscosity, and rotation speed of the processing surface.

The opening d20 in the separate flow path may be arranged at a position nearer to the outer diameter than a position where the direction of flow upon introduction by the micro-pump effect from the depression arranged in the first processing surface 1 is converted into the direction of flow of a spiral laminar flow formed between the processing surfaces. That is, in FIG. 26(B), the distance n from the outermost side in the radial direction of the processing surface of the depression 13 arranged in the first processing surface 1 to the outside in the radial direction is preferably 0.5 mm or more. When a plurality of openings are arranged for the same fluid, the openings are arranged preferably concentrically. When a plurality of openings are arranged for different fluids, the openings are arranged preferably concentrically in positions different in radius. This is effective for the reactions such as cases (1) A + B → C and (2) C + D → E should occur in due order with avoiding a simultaneous reaction which should not occur, e.g., A + B + C → F, or for circumventing a problem that an intended reaction does not occur due to insufficient contact among the processed materials.

The processing members are dipped in a fluid, and a fluid obtained by mixing (reaction) between the processing surfaces can be directly introduced into a liquid outside the processing members or into a gas other than air.

Further, ultrasonic energy can be applied to the processed material just after being discharged from the space between the processing surfaces or from the processing surface.

Then, the case where temperature regulating mechanisms J1 and J2 are arranged in at least one of the first processing member 10 and the second processing member 20 for generating a temperature difference between the first processing surface 1 and the second processing surface 2 is described.

The temperature regulating mechanism is not particularly limited. A cooling part is arranged in the processing members 10 and 20 when cooling is intended. Specifically, a piping for passing ice water and various cooling media or a cooling element such as a Peltier device capable of electric or chemical cooling is attached to the processing members 10 and 20.

When heating is intended, a heating part is arranged in the processing members 10 and 20. Specifically, steam as a temperature regulating medium, a piping for passing various hot media, and a heating element such as an electric heater capable of electric or chemical heating is attached to the processing members 10 and 20.

An accepting part for a new temperature regulating medium capable of directly contacting with the processing members may be arranged in the ring-accepting part. The temperature of the processing surfaces can be regulated by heat conduction of the processing members. Alternatively, a cooling or heating element may be embedded in the processing members 10 and 20 and electrified, or a path for passing a cooling medium may be embedded, and a temperature regulating medium (cooling medium) is passed through the path, whereby the temperature of the processing surfaces can be regulated from the inside. By way of example, the temperature regulating mechanisms J1 and J2 which are pipes (jackets) arranged inside the processing members 10 and 20 are shown in FIG. 25.

By utilizing the temperature regulating mechanisms J1 and J2, the temperature of one of the processing surfaces is made higher than that of the other, to generate a temperature difference between the processing surfaces. For example, the first processing member 10 is heated to 60°C by any of the methods, and the second processing member 20 is set at 15°C by any of the methods. In this case, the temperature of the fluid introduced between the processing surfaces is changed from 60°C to 15°C in the direction from the first processing surface 1 to the second processing surface 2. That is, the fluid between the processing surfaces has a temperature gradient. The fluid between the processing surfaces initiates convection due to the temperature gradient, and a flow in a direction perpendicular to the processing surface is generated. The "flow in a direction perpendicular to the processing surface" refers to a flow in which components flowing in a direction perpendicular to at least the processing surface are contained in flowing components.

Even when the first processing surface 1 or the second processing surface 2 rotates, the flow in a direction perpendicular to the processing surface is continued, and thus the flow in a direction perpendicular to the processing surface can be added to a spiral laminar flow between the processing surfaces caused by rotation of the processing surfaces. The temperature difference between the processing surfaces is 1°C to 400°C, preferably 5°C to 100°C.

The rotary shaft 50 in this apparatus is not limited to a vertically arranged shaft. For example, the rotation axis may be arranged at a slant. This is because the influence of gravity can be substantially eliminated by a thin fluid film formed between the processing surfaces 1 and 2 during processing. As shown in FIG. 25, the first introduction part d1 coincides with the shaft center of the second ring 20 in the second holder 21 and extends vertically. However, the first introduction part d1 is not limited to the one coinciding with the shaft center of the second ring 20, and as far as it can supply the first processing fluid to the space surrounded with the rings 10 and 20, the part d1 may be arranged at a position outside the shaft center in the central part 22 of the second holder 21 and may extend obliquely as well as vertically. Regardless of the angle at which the part d1 is arranged, a flow perpendicular to the processing surface can be generated by the temperature gradient between the processing surfaces.

When the temperature gradient of the fluid between the processing surfaces is low, heat conduction merely occurs in the fluid, but when the temperature gradient exceeds a certain border value, a phenomenon called Benard convection is generated in the fluid. This phenomenon is governed by Rayleigh number Ra, a dimensionless number, defined by the following equation:

$$Ra = L^3 \bullet g \bullet \beta \bullet \Delta T / (\alpha \bullet \nu)$$

wherein L is the distance between processing surfaces; g is gravitational acceleration; $\beta$ is coefficient of volumetric thermal expansion of fluid; $\nu$ is dynamic viscosity of fluid; $\alpha$ is heat diffusivity of fluid; and $\Delta T$ is temperature difference between processing surfaces. The critical Rayleigh number at which Benard convection is initiated to occur, although varying depending on the properties of a boundary phase between the processing surface and the processed fluid, is regarded as about 1700. At a value higher than this value, Benard convection occurs. Under the condition where the Rayleigh number Ra is a large value of about $10^{10}$ or more, the fluid becomes a turbulent flow. That is, the temperature difference $\Delta T$ between the processing surfaces or the distance L between the processing surfaces in this apparatus are regulated such that the Rayleigh number Ra becomes 1700 or more, whereby a flow perpendicular to the processing surface can be generated between the processing surfaces, and the mixing (reaction) procedures described above can be carried out.

However, the Benard convection hardly occurs when the distance between the processing surfaces is about 1 $\mu$m to 10 $\mu$m. Strictly, when the Rayleigh number is applied to a fluid between the processing surfaces having a distance of 10 $\mu$m or less therebetween to examine the conditions under which Benard convection is generated, the temperature difference should be several thousands of degrees or more in the case of water, which is practically difficult. Benard convection is one related to density difference in temperature gradient of a fluid, that is, to gravity. When the distance between the processing surfaces is 10 $\mu$m or less, there is high possibility of minute gravity field, and in such a place, buoyancy convection is suppressed. That is, it is the case where the distance between the processing surfaces is 10 $\mu$m or more that Benard convection actually occurs.

When the distance between the processing surfaces is about 1 $\mu$m to 10 $\mu$m, convection is generatednot due to density difference but due to surface tension difference of a fluid resulting from temperature gradient. Such convection is Marangoni convection. This phenomenon is governed by Marangoni number Ma, a dimensionless number, defined by the following equation:

$$Ma = \sigma \bullet \Delta T \bullet L / (\rho \bullet \nu \bullet \alpha)$$

wherein L is the distance between processing surfaces; $\nu$ is dynamic viscosity of fluid; $\alpha$ is heat diffusivity of fluid; $\Delta T$ is temperature difference between processing surfaces; $\rho$ is density of fluid; and $\sigma$ is temperature coefficient of surface tension (temperature gradient of surface tension). The critical Marangoni number at which Marangoni convection is initiated to occur is about 80, and under the conditions where the Marangoni number is higher than this value, Marangoni convection occurs. That is, the temperature difference $\Delta T$ between the processing surfaces or the distance L between the processing surfaces in this apparatus is regulated such that the Marangoni number Ma becomes 80 or more, whereby a flow perpendicular to the processing surface can be generated between the processing surfaces even if the distance therebetween is as small as 10 $\mu$m or less, and the mixing (reaction) procedures described above can be carried out.

For calculation of Rayleigh number, the following equations were used.

[Equation 1]

$$Ra = \frac{L^3 \cdot \beta \cdot g}{\nu \cdot \alpha} \Delta T$$

$$\Delta T = (T_1 - T_0)$$

$$\alpha = \frac{k}{\rho \cdot C_p}$$

L is the distance (m) between processing surfaces; P is coefficient of volumetric thermal expansion (1/K); g is gravitational acceleration ($m/s^2$) ; $\nu$ is dynamic viscosity ($m^2/s$) ; $\alpha$ is heat diffusivity ($m^2/s$); $\Delta T$ is temperature difference (K) between processing surfaces; $\rho$ is density ($kg/m^3$) ; Cp is isobaric specific heat (J/kg·K); k is heat conductivity (W/m·K) ; $T_1$ is temperature (K) at high temperature side in processing surface; and $T_0$ is temperature (K) at low temperature side in processing surface.

When the Rayleigh number at which Benard convection is initiated to occur is the critical Rayleigh number $Ra_c$, the temperature difference $\Delta T_{C1}$ is determined as follows:

[Equation 2]

$$\Delta T_{C1} = \frac{Ra_C \cdot \nu \cdot \alpha}{L^3 \cdot \beta \cdot g}$$

For calculation of Marangoni number, the following equations were used.

[Equation 3]

$$Ma = \frac{\sigma_t \cdot L}{\rho \cdot \nu \cdot \alpha} \Delta T$$

$$\Delta T = (T_1 - T_0)$$

$$\alpha = \frac{k}{\rho \cdot C_p}$$

L is the distance (m) between processing surfaces; $\nu$ is dynamic viscosity ($m^2/s$) ; $\alpha$ is heat diffusivity ($m^2/s$) ; $\Delta T$ is temperature difference (K) between processing surfaces; $\rho$ is density ($kg/m^3$); Cp is isobaric specific heat (J/kg•K); k is heat conductivity (W/m·K) ; $\sigma_t$ is surface tension temperature coefficient (N/m·k) ; $T_1$ is temperature (K) of a high-temperature surface out of processing surface; and $T_0$ is temperature (K) of a low-temperature surface out of processing surface.

When the Marangoni number at which Marangoni convection is initiated to occur is the critical Marangoni number $Ma_c$, the temperature difference $\Delta T_{C2}$ is determined as follows:

[Equation 4]

$$\Delta T_{C2} = \frac{Ma_C \cdot \rho \cdot \nu \cdot \alpha}{\sigma_t \cdot L}$$

In the present invention, the method to maintain the space between the processing surfaces of the fluid processing apparatus is not limited to one that utilizes pressure balance. The distance between the processing surfaces may be set mechanically, or the distance between the processing surfaces may be maintained by utilizing principles such as magnetic repulsion, magnetic floating, and electromagnetic repulsion.

The materials for the processing surfaces 1 and 2 arranged to be opposite to each other so as to be able to approach to and separate from each other, at least one of which rotates relative to the other, are not particularly limited, and the processing surfaces 1 and 2 can be prepared by ceramics, sintered metals, abrasion-resistant steels, other metals subjected to hardening treatment, or hard materials subjected to lining, coating or plating. In the present invention, the distance between the processing surfaces 1 and 2 arranged to be opposite to each other so as to be able to approach to and separate from each other, at least one of which rotates relative to the other, is 0.1 $\mu$m to 100 $\mu$m, particularly preferably 1 $\mu$m to 10 $\mu$m.

Reaction such as separation, deposition, or crystallization occurs under forced uniform mixing between the processing surfaces arranged to be opposite to each other so as to be able to approach to and separate from each other, at least one of which rotates relative to the other. A particle size and monodispersity of copper phthalocyanine microparticles can be controlled by appropriately arranging a revolution number of the processing members 10 and 20, a flow rate, a distance between the processing surfaces, concentration of a material, a dispersion medium, and so forth.

Hereinafter, the reaction of production of copper phthalocyanine microparticles in the present invention is described in more detail.

First, a fluid containing a solvent capable of being a poor solvent to a copper phthalocyanine solution is introduced as a first fluid through one flow path, that is, the first introduction part d1, into the space between the processing surfaces 1 and 2 arranged to be opposite to each other so as to be able to approach to and separate from each other, at least one of which rotates relative to the other, thereby forming a thin film fluid comprised of the first fluid between the processing surfaces.

Then, a fluid containing the copper phthalocyanine solution that dissolves in it the copper phthalocyanine, a reactant, is introduced as a second fluid directly into the thin film fluid comprised of the first fluid through another flow path, the second introduction part d2.

As described above, the first fluid and the second fluid are instantly mixed with maintaining a state of a ultrathin film between the processing surfaces 1 and 2, the distance of which is regulated by the pressure balance between the supply pressure of the fluids and the pressure exerted between the rotating processing surfaces, thereby enabling to carry out the reaction producing the copper phthalocyanine microparticles.

To effect the reaction between the processing surfaces 1 and 2, the second fluid may be introduced through the first introduction part d1 and the first fluid through the second introduction part d2, as opposed to the above description. That is, the expression "first" or "second" for each solvent has a meaning for merely discriminating an $n^{th}$ solvent among a plurality of solvents present, and third or more solvents can also be present.

A conbination of the first fluid and the second fluid is not particularly limited; a fluid, containing a copper phthalocyanine solution, and a solvent capable of being a poor solvent having a lower solubility of a copper phthalocyanine than the copper phthalocyanine solution can be used.

For example, a solvent for dissolving copper phthalocyanine is not particularly limited, and in the case of an acidic aqueous solution, for example, sulfuric acid, hydrochloric acid, nitric acid or trifluoroacetic acid can be used. Preferably, a strong acid, particularly 95% or more concentrated sulfuric acid can be used. In addition, fuming sulfuric acid, fuming nitric acid, or the like can be used. Especially, fuming sulfuric acid, fuming nitric acid, or the like is preferably used when surface-treated copper phthalocyanine microparticles are prepared. Further, amide solvents such as 1-methyl-2-pyrrolidinone, 1,3-dimethyl-2-imidazolidinone, 2-pyrrolidinone, ε-caprolactam, formamide, N-methylformamide, N,N-dimethylformamide, acetamide, N-methylacetamide, N,N-dimethylacetamide, N-methylpropanamide, and hexamethyl phosphoric triamide; dimethyl sulfoxide; pyridine; or thier mixture canbe used. Moreover, copper phthalocyanine is dissolved in an organic solvent to which a solution containing an alkaline or acid substance is added, and that can be used as a copper phthalocyanine solution. An alkaline substance which is added to the organic solvent includes sodium hydroxide, potassium hydroxide, sodium methoxide, and sodium ethoxide, or the like. An acid substance, as the same described above, includes sulfuric acid, hydrochloric acid, nitric acid, trifluoroacetic acid, phosphoric acid, or the like.

A solvent capable of being a poor solvent to effect separation by depositing a copper phthalocyanine is not particularly limited. A solvent having lower solubility to the copper phthalocyanine than than the solvent in which the copper phthalocyanine is dissolved can be used. It is preferably selected from water, alcohol solvents, ketone solvents, ether solvents, aromatic solvents, carbon disulfide, aliphatic solvents, nitrile solvents, sulfoxide solvents, halogen solvents, ester solvents, ionic solutions, and mixed solvents of two or more thereof.

As described above, the first and second fluids are instantly mixed in an ultrathin film state kept between the processing surfaces 1 and 2, the distance of which is fixed by the pressure balance between the supply pressure of the fluid and the pressure exerted between the processing surfaces 1 and 2, thereby effecting the reaction of producing copper phthalocyanine microparticles.

Further, a dispersant such as a block copolymer, a high-molecular polymer or a surfactant may be contained in the first or second fluid.

As surfactants and dispersants, various commercial products for use in dispersing pigments can be used. The surfactants and dispersants include, but are not limited to, those based on dodecylbenzenesulfonic acid such as sodiumdodecyl sulfate or Neogen R-K (Dai-ichi Kogyo Seiyaku Co., Ltd.), Solsperse 20000, Solsperse 24000, Solsperse 26000, Solsperse 27000, Solsperse 28000, and Solsperse 41090 (manufactured by Avecia Corporation), Disperbyk-160, Disperbyk-161, Disperbyk-162, Disperbyk-163, Disperbyk-166, Disperbyk-170, Disperbyk-180, Disperbyk-181, Disperbyk-182, Disperbyk-183, Disperbyk-184, Disperbyk-190, Disperbyk-191, Disperbyk-192, Disperbyk-2000, and Disperbyk-2001 (manufactured by BYK-Chemie), Polymer 100, Polymer 120, Polymer 150, Polymer 400, Polymer 401, Polymer 402, Polymer 403, Polymer 450, Polymer 451, Polymer 452, Polymer 453, EFKA-46, EFKA-47, EFKA-48, EFKA-49, EFKA-1501, EFKA-1502, EFKA-4540, and EFKA-4550 (manufactured by EFKA Chemical Corp.), Flowlen DOPA-158, Flowlen DOPA-22, FlowlenDOPA-17, Flowlen G-700, Flowlen TG-720W, Flowlen-730W, Flowlen-740W, and Flowlen 745W (manufactured by Kyoeisha Chemical Co., Ltd.), Ajisper PA-111, Ajisper PB-711, Ajisper PB-811, Ajisper PB-821, and Ajisper PW-911 (manufactured by Ajinomoto Co. Inc.), Johncryl 678, Johncryl 679, and Johncryl 62 (manufactured by Johnson Polymer B.V., and AQUALON KH-10, HITENOLNF-13 (manufacturedbyDAI-ICHI KOGYO SEIYAKU CO., LTD.). These products may be used alone or in combination of two or more thereof.

In the present invention, the mixing of fluids in the mixed flow path can be performed under the control of a laminar flow or under the control of a turbulent flow.

Further, the space between the processing surfaces may be heated or cooled, may be irradiated with microwaves. The space between the processing surfaces may also be irradiated with ultraviolet ray (UV) or may be supplied with ultrasonic energy. Particularly, when a temperature difference is set between the first processing surface 1 and the second processing surface 2, there is an advantage that the reaction canbe promoted, since convection can be generated in a thin film fluid.

Specifically for heating or cooling, at least one of or both the processing member 10 and the processing member 20 can be provided, for example, with a heater or a jacket for passing a heat medium or a cooling medium, to heat or cool the thin film fluid. Alternatively, at least one of or both the processing member 10 and the processing member 20 can be provided with a microwave generator such as a magnetron for irradiation with microwave, thereby heating the processed fluid to promote the reaction. For irradiation with ultraviolet ray (UV), at least one of or both the processing member 10 and the processing member 20 may be provided, for example, with an element such as a UV lamp to irradiate the thin film fluid with ultraviolet (UV) from the corresponding processing surface. For supplying with ultrasonic energy, at least one of or both the processing member 10 and the processing member 20 can be provided, for example, with an ultrasonic wave oscillator. Alternatively, the mixing and reaction of fluids between the processing surfaces may be conducted in an ultrasonic wave atmosphere in a container.

The separation is conducted in a container capable of securing a depressurized or vacuum state, and at least a secondary side at which the fluid after processing is discharged can be depressurized or made vacuum to remove a gas generated during the separating reaction, to remove a gas contained in the fluid, or to remove the solvent of the fluid. Even when the separation of copper phthalocyanine microparticles and removal of the solvent are simultaneously conducted, the fluid containing copper phthalocyanine microparticles separated between the processing surfaces can thereby be discharged in an atomized state from the processing surfaces, so that the surface area of the fluid is increased and the efficiency of removal of the solvent is very high. Accordingly, processing of preparing copper phthalocyanine microparticles and removal of the solvent can be effected in substantially one step more easily than conventional.

As described above, the processing apparatus can be provided with a third introduction part d3 in addition to the first introduction part d1 and the second introduction part d2. In this case, for example, an aqueous soluvent, a fluid containing a concentrated sulfuric acid solution of copper phthalocyanine, a surfactant solution, and the like can be introduced separately through the respective introduction parts into the processing apparatus. By doing so, the concentration and pressure of each solution can be controlled separately, and the reaction of producing copper phthalocyanine microparticles can be regulated more accurately. When the processing apparatus is provided with four or more introduction parts, the foregoing applies and fluids to be introduced into the processing apparatus can be subdivided in this manner.

Hereinafter, surface processing of copper phthalocyanine microparticles is described.

Surface processing of copper phthalocyanine microparticles by way of introduction of a modification group onto at least the surface thereof can be carried out by containing a surface-modifying agent in a fluid to be introduced between the processing surfaces 1 and 2. The surface-modifying agent may be contained in any one of a pigment solution (a first fluid) and a poor solvent (a second fluid) or in both of them, or may be contained in a third fluid other than the pigment solution and the poor solvent. A combination of the first fluid and the second fluid is not particularly limited to said examples.

The modification group used as a surface-modification group to be introduced onto at least surfaces of the pigments is not particularly limited in kind. When surface processing is aimed at improvement of the dispersibility, the modification group may be selected in accordance with, for example, a solvent that intends to disperse or in accordance with kind of a dispersant. Exemplified are a polar group such as an acidic group and a basic group, a salt structure of each of said polar groups, a structure with high polarizability in which a highly polar atom such as oxygen and sulfur and/or an aromatic ring and the like are introduced, a hydrogen bonding group, and a modifying group such as a hetero ring and an aromatic ring. As an acidic group, exemplified are a hydroxyl group (hydroxy group), a sulfonic acid group (sulfo group), a carboxylic acid group, a phosphoric acid group, and a boric acid group. As a basic group, exemplified are an amino group and the like. As a hydrogen bonding group, exemplified are a urethane moiety, a thiourethane moiety, a urea moiety, and a thiourea moiety.

When surface processing is aimed at other than improvement of the dispersibility, for example, in the case that copper phthalocyanine microparticles are to be made water-repellent, lipophilic, or compatible with an organic solvent on the surfaces, a surface-modifying agent containing lipophilic functional group is contained in either said first fluid or said second fluid, and then copper phthalocyanine microparticles discharged from between the processing surfaces 1 and 2 are made lipophilic on the surfaces by way of introduction of the lipophilic functional group as a modification group, so that the surface processing to be made lipophilic may be achieved.

In the case that the copper phthalocyanine microparticles is subjected to processing of attaching resin on the surfaces as a surface-modifying agent, a material containing resin is contained in either said first fluid or said second fluid, and then copper phthalocyanine microparticles discharged from between the processing surfaces 1 and 2 are at least partly covered with resin on the surfaces, so that the surface processing to be made, for example, hydrophilic may be achieved.

Said surface processing is not limited to the aforementioned surface modification of copper phthalocyanine microparticles between the processing surfaces 1 and 2, but also may be carried out after copper phthalocyanine microparticles have been discharged from between the processing surfaces 1 and 2. In this case, after a fluid containing copper phthalocyanine microparticles has been discharged from between the processing surfaces 1 and 2, a material to be used for aiming at the above-mentioned surface processing of copper phthalocyanine microparticles is added into the fluid, and then an operation such as stirring operation is performed, so that the surface processing of copper phthalocyanine microparticles may be achieved. Also, it may be carried out that, after the fluid containing copper phthalocyanine microparticles has been discharged, impure materials are removed by a dialysis tube or the like out of the fluid containing copper phthalocyanine microparticles, and then a material to be used for aiming at surface processing is added. Further, a fluid containing copper phthalocyanine microparticles that has been discharged from between the processing surfaces 1 and 2 is made to powder of copper phthalocyanine microperticles by drying liquid portion out of the fluid, and then the above-mentioned surface processing may be achieved. Specifically, it may be carried out that, after the obtained powder of copper phthalocyanine microparticles has been dispersed in an intended solvent, a material to be used for aiming at the above-mentioned surface processing is added into the dispersion, and then an operation such as stirring operation is performed.

A method for producing copper phthalocyanine pigment microparticles in the present invention (the forced ultrathin film rotary reaction method) can freely change the Reynolds number of its minute flow path and can thus form copper phthalocyanine microparticles which are monodisperse and excellent in re-dispersibility, having an objective particle size, particle shape and crystal form. By their self-dischargeability, there is no clogging with products even in a reaction accompanied by separation, and a large pressure is not necessary. Accordingly, the method in the present invention is superior in safety, hardly mixed in with impurities, excellent in washing performance, thus can stably produce copper phthalocyanine microparticles. In addition, the method can be scaled up depending on the intended amount of production, thus can provide a highly productive method for producing copper phthalocyanine pigment microparticles.

A copper phthalocyanine pigment according to the present invention relates to a blue color, and its use is most suitable for a color filter used in a liquid crystal color display and the like, but it is not limited to the above and can be used in a wide range for, for example, a coating material, a dye stuff, an inkjet ink, a thermal transfer ink, a toner, and a colored resin.

## Examples

Hereinafter, in respect of the present invention, an apparatus based on the same principle as disclosed in JP-A-2004-49957 filed by the applicant of the present invention is used and show the examples of producing copper phthalocyanine, wherein a crystal form of copper phthalocyanine is an alpha-form and a wavelength (Lambda-max) is shorter than 478 nm to give the maximum transmittance of the transmission spectrum between 380nmand780nm, and a transmittance of the transmission spectrum at a wavelength of 400 nm and 450 nm is larger than that of epsilon-form copper phthalocyanine over the entirety of said wavelength at 400 nm and 450 nm. However, the present invention is not limited to the following Examples.

A copper phthalocyanine solution which a copper phthalocyanine was dissolved and a water solvent are allowed to join together in a thin film formed between the processing surfaces 1 and 2 arranged to be opposite to each other so as to be able to approach to and separate from each other, at least one of which rotates relative to the other, in the uniformly mixing and stirring reaction apparatus as shown in FIG. 1(A), thereby separating copper phthalocyanine under uniform mixing in the thin film.

In the following examples, the term "from the center" means "through the first introduction part d1" in the processing apparatus shown in FIG. 1 (A), the first fluid refers to the first processed fluid, and the second fluid refers to the second processed fluid introduced "through the second introduction part d2" in the processing apparatus shown in FIG. 1 (A) . Additionally, "part" indicates "parts by weight" in this context.

[Volume-average Particle Size)]

Particle size distribution was measured by using a particle size distribution measuring instrument (trade name: Nanotrac UPA-EX150, manufactured by Nikkiso Co., Ltd.), and the volume-average particle size was adopted.

[Powder X-ray Diffraction]

Powder X-ray Diffraction was measured by a full-automatic multipurpose X-ray diffraction instrument (trade name: X'Pert PRO MPD, manufactured by PANalytical B.V.). Diffraction intensity was measured within a range of diffractin angle 2 theta = 5 degree to 60 degree.

[Transmission Spectrum]

A transmission spectrum was measured in the transmission spectrum between 380 nm and 780 nm by using a UV-visible spectrophotometer (UV-2450), manufactured by Shimadzu Corporation. The properties in the present invention, in which a transmittance of the transmission spectrum of copper phthalocyanine at a wavelength of 400 nm and 450 nm is larger than that of conventionally used epsilon-form copper phthalocyanine over the entirety of said wavelength at 400 nm and 450 nm, was checked under the evaluation criterion that the ratio of a transmittance (T425) at a wavelength of 425 nm to a transmittance (T-max) at a wavelength (Lambda-max) giving the maximum transmittance of the transmission spectrum between 380 nm and 780 nm is greater than or equal to 0.70 (T425/T-max≥0.70).

While an aqueous solvent of 25°C (1% sodium dodecylsulfate aqueous solution) was sent as a first fluid from the center at a supply pressure of 0.15 MPa and a revolution number of 500 rpm, a concentrated sulfuric acid solution of copper phthalocyanine obtained by dissolving a beta-form copper phthalocyanine (the crystal form was checked by powder X-ray diffraction) in a 98% concentrated sulfuric acid was introduced as a second fluid at a rate of 10 ml/min between the processing surfaces 1 and 2 such that the fluids were mixed at a discharge rate of 150 g/min. A copper phthalocyanine particle dispersion having an almost spherical form with the volume-average particle size of 14.2 nm was obtained. FIG. 32 shows a TEM photograph of the obtained copper phthalocyanine microparticles.

The copper phthalocyanine microparticle dispersion thus obtained was dialyzed with a dialysis tube against pure water for 24 hours to remove sulfuric acid and so forth, and then a transmission spectrum of it was measured; and the result is shown in FIG. 31. FIG. 30 shows a powder X-ray diffraction chart of copper phthalocyanine powder obtained by drying the copper phthalocyanine dispersion.

[Transmission Spectrum]

As shown by a dashed line in FIG. 31, a wavelength (Lambda-max) to give the maximum transmittance of the transmission spectrum between 380 nm and 780 nm in the obtained copper phthalocyanine was 469 nm, and the ratio of T425/T-max was 0.89.

[Powder X-Ray Diffraction]

Also, as shown in FIG. 30, it was confirmed that the crystal form was an alpha-form from the diffraction angles giving diffraction intensity peaks in the diffraction spectrum of the copper phthalocyanine powders obtained by drying

the copper phthalocyanine dispersion.

[Comparative Example 1]

HELIOGEN BLUE L 6700F, which is epsilon-form copper phthalocyanine manufactured by BASF SE, was dispersed in 1% sodium dodecylsulfate aqueous solution by using a ultrasonic dispersing instrument. The transmission spectrum of the obtained dispersion of an epsilon-form copper phthalocyanine dispersion is shown by a solid line in FIG. 31.

[Examples 2 to 5]

In Example 2 to Example 5, a charge amount of copper phthalocyanine into between the processing surfaces, a revolution number of the processing surface, or a discharge rate was changed. The results are shown in the following Table 1.

[Table 1]

| Example | Revolution Number | Discharge Rate | Volume-Average Particle Size | Lambda -max | T425/ T-max | Crystal Form |
|---|---|---|---|---|---|---|
| | [rpm] | [g/minute] | [nm] | [nm] | | |
| 1 | 500 | 150 | 14.2 | 469 | 0.89 | alpha |
| 2 | 500 | 200 | 8.9 | 470 | 0.88 | alpha |
| 3 | 1000 | 50 | 102.5 | 464 | 0.91 | alpha |
| 4 | 1000 | 300 | 552.1 | 475 | 0.78 | alpha |
| 5 | 1000 | 100 | 1.2 | 468 | 0.80 | alpha |
| | | | Average of Lambda-max 469.2 | | | |

In any of Examples, it is found that copper phthalocyanine, wherein a crystal form of it is of an alpha-form and, as FIG. 31 and Table 1 show, a wavelength (Lambda-max) is shorter than 478 nm to give the maximum transmittance of the transmission spectrum between 380 nm and 780 nm and, as FIG. 31 shows, a transmittance of the transmission spectrum at a wavelength of 400 nm and 450 nm is larger than that of epsilon-form copper phthalocyanine over the entirety of said wavelength of 400 nm and 450 nm, could be prepared.

[Example 6]

Then, Example other than the above is described.

[Experimental Equipment and Experimental Method]

An acid-pasting method, in which copper phthalocyanine microparticles are separated by dissolving copper phthalocyanine into concentrated sulfuric acid and then diluting the obtained solution with pure water, is general as a purifying method of a crude pigment, and is known as a method for producing alpha-form copper phthalocyanine. In this Example, an apparatus based on the same principle as disclosed in JP-A-2004-49957 filed by the applicant of the present invention (Forced thin film reactor, manufactured by M Technique Co., Ltd. , trade name: ULREA, hereinafter, abbreviated as "FTFR") is used to carry out an acid-pasting method. Form of the obtained copper phthalocyanine microparticles and measurement of the particle sizes were checked with electron microscopes (a transmission type and a scanning type) and a particle size distribution analyzer. Dried powder of the obtained copper phthalocyanine microparticles were prepared and then measured by X-ray diffraction to determine the crystal form, by an infrared absorption spectrum to determine the molecular structure, and by a simultaneous thermo gravimetry/differential thermal analysis (TG/DTA) to check thermal behavior. Also, aqueous dispersion was prepared to check the properties on transmission and absorption in the ultraviolet and visible region.

[Reagents]

As a raw material of copper phthalocyanine, beta-form copper phthalocyanine (trade name: PV FAST BLUE

BG, manufactured by Clariant (Japan) K. K.) was used. Concentrated sulfuric acid used to dissolve the copper phthalocyanine was 98% concentrated sulfuric acid (special reagent grade, manufactured by Kishida Chemical Co., Ltd.). Surfactant used to disperse the microparticles was sodium dodecylsulfate (first reagent grade, manufactured by Kanto Chemical Co., Inc.; hereinafter, abbreviated as "SDS"). Aqueous sodium hydroxide solution used to adj ust pH was prepared by dissolving sodium hydroxide (special reagent grade, manufactured by Kanto Chemical Co., Inc.) into pure water.

[Separation (Crystallization) Method of Copper Phthalocyanine Microparticles]

Concentrated sulfuric acid solution of copper phthalocyanine was prepared by dissolving copper phthalocyanine into concentrated sulfuric acid. Rotation of the processing member of FTFR was initiated (revolution number: 1700 rpm), and while pure water as a first fluid was supplied from the center at a sending rate of 400 mL/minute and the supply temperature of 20°C, the concentrated sulfuric acid solution of copper phthalocyanine as a second fluid was introduced directly between the processing surfaces 1 and 2 at a sending rate of 3 mL/minute. The concentrated sulfuric acid solution of copper phthalocyanine was diluted with pure water between the processing surfaces 1 and 2 to separate copper phthalocyanine microparticles, which was then discharged from the space between the processing surfaces 1 and 2 as a dilute sulfuric acid aqueous dispersion of the copper phthalocyanine microparticles. The discharged dilute sulfuric acid aqueous dispersion of copper phthalocyanine microparticles showed pH of 0.81. The dilute sulfuric acid aqueous dispersion was adjusted to pH of 7.01 by 3 mol/L of aqueous sodium hydroxide aqueous solution, and then the resulting solution was left to stand in a thermostatic chamber at a temperature of 25°C for 22 hours.

[Washing Method of Copper Phthalocyanine Microparticles]

It was confirmed that the copper phthalocyanine microparticles were aggregated and settled out in the dispersion which was left to standas mentioned above. The sedimented copper phthalocyanine microparticles were collected by using a vacuum aspirator with a filtering cloth (the aperture of 10 $\mu$m), and then washed by pure water to obtain a paste of copper phthalocyanine microparticles.

[Preparation of Copper Phthalocyanine Dispersion and Dried Powder]

SDS was dissolved in pure water to obtain an aqueous SDS solution. A part of the paste of copper phthalocyanine microparticles obtained after washing was poured into the aqueous SDS solution to obtain an aqueous copper phthalocyanine dispersion. The formulation of the aqueous copper phthalocyanine dispersion was 1% by weight of solid content concentration and 0.1% by weight of SDS concentration. The obtained aqueous copper phthalocyanine dispersion was subjected to dispersing treatment with a rotary emulsifying disperser (trade name: CLEAMIX, manufactured by M Technique Co., Ltd.). The dispersing treatment was performed for one liter of the aqueous copper phthalocyanine dispersion at 20000 rpm of revolution number for 30 minutes. The rest of the paste of the copper phthalocyanine microparticles not used for preparation of the dispersion was vacuum dried under conditions at -0.1 MPaG and at 60°C for 23 hours to obtain the dried powder.

[Comparative Example 2]

In Comparative Example 2, copper phthalocyanine micorparticles were prepared by a batch method. The batch method used in Comparative Example 2 was: while pure water is stirred using a beaker and a magnetic stirrer, the concentrated sulfuric acid solution of copper phthalocyanine is dribbled into the pure water, to separate copper phthalocyanine microparticles. Washing and drying of the copper phthalocyanine microparticles were performed under the same conditions as those of the tests in said FTFR.

[Measurement]

Particle size distribution of the dispersion of copper phthalocyanine microparticles was measured by using Microtrac UPA-150, a dynamic light scattering particle size distribution analyzer, manufactured by Nikkiso Co. , Ltd. The particle size distribution was measured under the conditions of a particle refractive index of 1.51, the particle specific gravity of 1.0 g/cm$^3$, the measurement solvent of pure water, and the measurement time of 3 minutes. Spectrum measurement of the dispersion was performed by using UV-2450, a UV-visible light spectrophotometer, manufactured by Shimadzu Corporation. The spectrum was measured under the measuring conditions of use of a quartz cell, the sampling rate of 0.2 nm and the measuring rate of slowmeasuring rate. Observation of the form of particles was performed by using HF-2000, a transmission electron microscope (TEM, manufactured by Hitachi, Ltd.) and S-4800, a scanning

electron microscope (SEM, manufactured by Hitachi High-Technologies Corporation). Identification of crystal form of the powders was performed by using X'Pert PRO MPD, a powder X-ray diffractometer (manufactured by PANalytical Operation Division of Spectris Co., Ltd.). Tne measuring conditions were: usse of Cu anticathode, the tube voltage of 45 kV, the tube current of 40 mA, and the scanning rate of 1.6 degrees/minute. Measurement of a simultaneous thermo gravimetry/differential thermal analysis (TG/DTA) was performed by using TG/DTA 6300 (manufactured by Seiko Instruments, Inc.). The measuring conditions were: use of alumina powder as a reference, and the heating rate of 20°C/minute. Measurement of the infrared absorption spectrum (FT-IR) was performed by using FT/IR-4100 type A (manufactured by JASCO Corporation). The measuring conditions were: use of ATR method, the resolution power of 4.0 $cm^{-1}$ and the cumulative number of 16. The average values of three-time measurements on the same sample is used as evaluation of all the results obtained by the above-mentioned measurements. Hereinafter, evaluation and discussion of the results are described.

[Microscopic Observation and Particle Size Distribution of Copper Phthalocyanine Microparticles]

Photographs (FIG. 33) with a scanning electron microscope (SEM) andaparticle size distribution chart (FIG. 34) showcopper phthalocyanine microparticles obtained by FTFR and copper phthalocyanine particles obtained by a batch method. FIG. 33 (A) shows one by FTFR and FIG. 33(B) by a batch method. In FIG. 35, the photograph with a transmission electron microscope (TEM) shows copper phthalocyanine microparticles obtained by FTFR. It was found that particles obtained by a batch method shape like a rod with a wide particle size distribution, while microparticles obtained by using FTFR shape like a sphere with particle size of 10 nm and so.

[Crystal Form of Copper Phthalocyanine Microparticles]

In FIG. 36, the result of X-ray diffraction measurement of copper phthalocyanine microparticles is shown. The X-ray diffraction pattern of copper phthalocyanine microparticles obtained by FTFR has diffraction peaks at the same positions as copper phthalocyanine particles obtained by the batch method. It was found from this that copper phthalocyanine microparticles obtained by FTFR were of an alpha-form crystal. Further, the diffraction peaks of copper phthalocyanine microparticles obtained by FTFR were broader as compared to the diffraction peaks of copper phthalocyanine particles obtained by the batch method. This may be attributable to a smaller particle size, causing a full-width at half maximum of the respective peaks.

[Infrared Absorption Spectrum of Dispersion of Copper Phthalocyanine Microparticles]

Infrared absorption spectra of copper phthalocyanine microparticles in the fingerprint region are shown in FIG. 37 (FIG. 37 (A) is a spectrum of copper phthalocyanine microparticles obtained by FTFR, and FIG. 37(B) is a spectrum of copper phthalocyanine particles obtained by the batch method). In respect of copper phthalocyanine microparticles obtained by FTFR and copper phthalocyanine particles obtained by the batch method, the peaks attributable to vibration of the phthalocyanine skeleton were confirmed (approximately between 1117 and 1118, 1089, 1066, between 941 and 943, between 863 and 864, and 717 $cm^{-1}$). Other peaks also coincide with previously reported peaks (B. N. Achar and K. S. Lokesh: J. Solid State Chem., 117, 1987 (2004)), and thus, it was found that there is no change in the molecular structure of copper phthalocyanine.

[Thermal Analysis of Dispersion of Copper Phthalocyanine Microparticles]

From the results of TG/DTA shown in FIG. 38, it can be seen that both the copper phthalocyanine obtained by FTFR and the copper phthalocyanine obtained by the batch method started decomposition around between 510°C and 530°C. Accordingly, it was found that there is no difference in thermal analysis results between copper phthalocyanine microparticles obtained by FTFR and copper phthalocyanine particles obtained by the batch method

[Transmission Spectrum of Dispersion of Copper Phthalocyanine Microparticles]

Transmission spectra of the 0.0050% aqueous dispersions of copper phthalocyanine particles in the wavelength region between 350 nm and 800 nm are shown in FIG. 39 and Table 2. Compared to a transmission spectrum of alpha-form copper phthalocyanine obtained by the batch method, and transmission spectra of commercially available beta-form and epsilon-form copper phthalocyanines, a transmission spectrum of the dispersion of copper phthalocyanine microparticles obtained by FTFR shifted toward a short wavelength side regarding a wavelength to give the maximum transmittance of the transmission spectrum in the wavelength region between 360 nm and 550 nm, and became better in the area ratio by 20 to 30% than the transmittance of the same alpha-form copper phthalocyanine. The transmittance

improved especially in the region between 430 nm and 480 nm, and was also improved in the wavelength region longer than 700 nm. It was found that both properties on transmission and absorption improved. The ratio T425/T-max was 0.81 in Example 6.

[Table 2]

| | Lambda-max [nm] | Transmittance [%] | Area Ratio | Particle Size ($D_{50}$) [nm] |
|---|---|---|---|---|
| FTFR (alpha) | 465.8 | 91.6 | 1.26 | 6.8 |
| Batch (alpha) | 480.6 | 76.4 | 1.00 | 69.4 |
| beta | 488.0 | 78.4 | 0.98 | 114.3 |
| epsilon | 474.2 | 79.1 | 1.02 | 59.1 |

1. Lambda-max: a wavelength to give the maximum transmittance in the wavelength region between 350 nm and 800 nm.
2. Transmittance: the maximum transmittance in the wavelength region between 350 nm and 800 nm.
3. Area Ratio: ratio of the transmittance area relative to the transmittance area of the dispersion of an alpha-form copper phthalocyanine microparticles obtained by the batch method in the wavelength region between 350 nm and 600 nm.
4. Particle Size (D50): 50%-volume size (the size at the point where an accumulation curve reaches 50% relative to the total volume of the particles).
5. In the Table, the alpha-form was prepared by the batch method, while a beta-form and an epsilon-form were purchased commercially.

Also in Example 6, it can be seen that the copper phthalocyanine could be prepared, in which the crystal form is an alpha-form,and, as FIG. 39 and Table 2 show, a wavelength (Lambda-max) that gives the maximum transmittance of a transmission spectrum between 380 nm and 780 nm is 465.8 nm, shorter than 478 nm, and, FIG. 39 show, the transmittance of a transmission spectrum at a wavelength of 400 nm and 450 nm is larger than that of an epsilon-form copper phthalocyanine over the entirety of said wavelength of 400 nm and 450 nm.

[Absorption Spectrum of Dispersion of Copper Phthalocyanine Microparticles]

FIG. 40 shows absorption spectra of 0.0010% aqueous dispersions of copper phthalocyanine microparticles in the wavelength region between 300 nm and 800 nm. Respective peaks are observed around 330, 600, and 690 nm. Shaping like an alpha-form as a stectrum, each of the peaks became sharper and shifted toward a shorter wavelength side. The peaks around 690 nm and around 600 nm are respectively attributable to absorption of a monomer and a dimmer (J. H. Sharp and M. Abkowitz: J. Phys. Chem., 77, 477 (1972), H. Xia and M. Nogami: Opt. Mater., 15, 93 (2000)).

According to Kuhn et al. (H. Kuhn: J. Chem. Phys., 17, 1198 (1949)), a wavelength of the maximum absorbance (Lambda [nm]) of phthalocyanine can be calculated by the following equation.

$$\text{Lambda} = (8mc/h)(L^2/[N+1])$$

Here, "m" indicates mass of electron, "c" indicates the speed of light, "h" indicates a Planck's constant, "L" indicates a bond distance of polymethine, and "N" indicates the number of electron. The second term in the equation is an inverse number of electron density: the maximum wavelength shifts toward a short wavelength side with increase of the electron density. It is assumed that the shift of the maximum absorption toward a shorter a wavelength in the dispersion of copper phthalocyanine microparticles obtained by FTFR was caused by the status of electron density on the particle surfaces, which increased due to the particle size of copper phthalocyanine microparticles that became smaller.

As to the color tone, it is assumed that, transmitted in redder light due to the shifting of the absorption at 690 nm toward a short wavelength side, asorption in the region between 550 nm and 700 nm increased thereby making the peaks sharper.

[Examples 7 to 10]

Then, Examples other than the above are described. Experimental equipments used in Example 7 to Example 10 are the same as those used in Example 6.

[Reagents]

As a raw material of copper phthalocyanine, beta-form copper phthalocyanine (trade name: PV FAST BLUE BG, manufactured by Clariant (Japan) K. K.), the same in Example 6, was used. Concentrated sulfuric acid and fuming sulfuric acid used to dissolve the copper phthalocyanine were 98% concentrated sulfuric acid (special reagent grade, manufactured by Kishida Chemical Co., Ltd.) and fuming sulfuric acid (special reagent grade, 30% $SO_3$ concentration, manufactured by Yotsuhata Chemical Industries Co., Ltd.). Fuming sulfuric acid of 5% $SO_3$ concentration was prepared by mixing 98% concentrated sulfuric acid with fuming sulfuric acid of 30% $SO_3$ concentration under a nitrogen atmosphere. Surfactant used to prepare an aqueous dispersion of copper phthalocyanine microparticles was sodium dodecylsulfate (first reagent grade, manufactured by Kanto Chemical Co., Inc. ; hereinafter, abbreviated as "SDS" , similarly to Example 6). Organic solvents used to prepare organic solvent dispersion of copper phthalocyanine microparticles were propyleneglycol monomethyl ether acetate (special reagent grade, manufactured by Kanto Chemical Co., Inc.; hereinafter, abbreviated as "PGMEA") and propyleneglycol monomethyl ether (special reagent grade, manufactured by Kanto Chemical Co., Inc.; hereinafter, abbreviated as "PGME"). Surfactant used to prepare an organic solvent dispersion was Disperbyk-2000 (modified acryl copolymer with the amine value of 4 mg-KOH/g and active ingredient concentration of 40%, manufactured by BYK-Chemie Japan K. K.). Aqueous sodium hydroxide solution used to adj ust pH was prepared by dissolving sodium hydroxide (special reagent grade, manufactured by Kanto Chemical Co., Inc.) into pure water.

[Method for Separation (Crystallization) of Copper Phthalocyanine Microparticles and Method for Surface Processing]

Experimental conditions are shown in Table 3. In Table 3 and FIG. 41, Example 7 is noted as Ex. 1, Example 8 as Ex. 2, Example 9 as Ex. 3, and Example 10 as Ex. 4.

[Table 3]

| | Ex. 1 | Ex. 2 | Ex. 3 | Ex. 4 |
|---|---|---|---|---|
| Fluid [A] | Pure Water | | | |
| Fluid [B] | Cu-Pc/98% Sulfuric Acid Solution | | | Cu-Pc/Fuming Sulfuric Acid Solution |
| $SO_3$ concentration [%] | - | - | - | 5 |
| pH | Control to 12.55* | Control to 7.01* | 1.58 | 1.02 |
| * By 3 mol/L NaOH solution | | | | |

A copper phthalocyanine solution was prepared by dissolving copper phthalocyanine into concentrated sulfuric acid (Example 7 to Example 9) or into fuming sulfuric acid of 5% $SO_3$ concentration (Example 10). While pure water was sent as a first fluid (Fluid [A] in Table 3) from the center at the supply temperature of 20°C between the processing surfaces 1 and 2 of FTFR, rotation of the processing member was initiated, and then the copper phthalocyanine solution as a second fluid was poured between the processing surfaces 1 and 2. Copper phthalocyanine microparticles were separated between the processing surfaces 1 and 2, and discharged between the processing surfaces 1 and 2 as an aqueous dispersion of copper phthalocyanine microparticles. The discharged aqueous dispersion of copper phthalocyanine microparticles was left to stand in a thermostatic chamber at a temperature of 25°C for 22 hours (Example 9 (Ex. 3) and Example 10 (Ex. 4)). In addition, in Example 7 (Ex. 1) and Example 8 (Ex. 2), the discharged aqueous dispersion of copper phthalocyanine microparticles (pH of 1.58, Example 9 (Ex. 3)) was adjusted to pH of 7.01 (Example 8 (Ex. 2)) and pH of 12.55 (Example 7 (Ex. 1)) by 3 mol/L of aqueous sodium hydroxide aqueous solution, and then the resulting solutions were left to stand in a thermostatic chamber with a temperature of 25°C for 22 hours.

[Washing Method of Copper Phthalocyanine Microparticles and Preparation of Dried Powder]

It was confirmed that the copper phthalocyanine microparticles were aggregated and settled out in the aqueous dispersions of copper phthalocyanine microparticles which were left to stand as mentioned above. Sedimented copper phthalocyanine microparticles were collected by using a vacuum aspiration with a filtering cloth (the aperture of 10 μm), and then washed by pure water several times before obtaining pastes of the copper phthalocyanine microparticles. The pastes of the copper phthalocyanine microparticles were vacuum dried under the conditions at -0.1 MPaG and at 60°C for 23 hours to obtain the dried powders.

[Preparation of Dispersion of Copper Phthalocyanine Microparticles]

SDS was dissolved in pure water to prepare an aqueous SDS solution at concentration of 0.2% by weight. The above-mentioned pastes of copper phthalocyanine microparticles were added with pure water and the 0.2% by weight aqueous SDS solution to prepare aqueous dispersions of copper phthalocyanine microparticles. (Formulating conditions: 2% by weight of solid content concentration of copper phthalocyanine microparticles and 0.1% by weight of SDS concentration). One liter of the prepared aqueous dispersions of copper phthalocyanine microparticles were subjected to dispersing treatment by using a rotary emulsifying disperser (trade name: CLEARMIX, manufactured by M Technique Co. , Ltd.) at 20000 rpm of revolution number.

Separately, Disperbyk-2000 was dissolved in a mixed solution of PGMEA and PGME (volume ratio: PGMEA/PGME=4/1) to prepare a Disperbyk-2000 solution with active ingredient concentration of 2% by weight. The above-mentioned dried powders of copper phthalocyanine microparticles were added with the mixed solution of PGMEA and PGME and with the Disperbyk-2000 solution with active ingredient concentration of 2% by weight to prepare organic solvent dispersions of copper phthalocyanine microparticles. (Formulating conditions: 2% by weight of solid component concentration of copper phthalocyanine microparticles and 1% by weight of the active ingredient concentration of Disperbyk-2000). Five liters of the prepared organic solvent dispersions of copper phthalocyanine microparticles was subjected to dispersing treatment by using a rotary emulsifying disperser (trade name: CLEARMIX W MOTION, manufactured by M Technique Co., Ltd.) at 18000/16200 rpm of revolution number in respect of the ratio of roter/screen.

[Measurement]

Infrared absorption spectrum (IR) of the powders of copper phthalocynine microparticles was measured by using FT/IR-4100 typeA, manufactured by JASCO Corporation (measuringconditions: anATRmethod, the resolution-powerof 4.0 $cm^{-1}$, and the cumulative number of 16).

Particle size distribution of the dispersions of copper phthalocyanine microparticles were measured by using Microtrac UPA-150, a dynamic light scattering particle size distribution analyzer, manufactured by Nikkiso Co., Ltd. (measuring conditions: particle refractive index of 1.51, the particle specific gravity of 1.0 $g/cm^3$, and the measurement time of 3 minutes). The dilute solvents used in the measurements were: pure water for the measurement of the aqueous dispersions of copper phthalocyanine microparticles, and the mixed solution of PGMEA and PGME (volume ratio: PGMEA/PGME=4/1) for the measurement of the organic solvent dispersions of copper phthalocyanine microparticles. $D_{50}$ (50%-volume size) and $D_{90}$ (90%-volume size) are the particle sizes at the point where an accumulation curve reaches 50% and 90%, respectively, relative to the accumulation curve of the total volume of the particles. Spectrum measurements of the dispersions were measured using UV-2450, a UV-visible light spectrophotometer, manufactured by Shimadzu Corporation (measuring conditions: the sampling rate of 0.2 nm, the measuring rate of measuring rate, and use of a quartz cell).

[Infrared Absorption Spectrum of Surface-Treated Copper Phathalocyanine Microparticles]

Infrared absorption spectra of copper phthalocyanine microparticles in the fingerprint region are shown in FIG. 41. Under all the experiments, similarly to Example 6 (see FIG. 37 (A)), the peaks attributable to vibration of the phthalocyanine skeleton were confirmed (approximately between 1117 and 1118, between 1089 and 1090, between 1065 and 1066, 943, between 864 and 865, and between 717 and 719 $cm^{-1}$). Further, in the spectrum of Example 10 (Ex. 4), a shoulder peak was confirmed around 1388 $cm^{-1}$ (with an asterisk * in the chart), indicating existence of asulfogroup in copper phthalocyanine microparticles prepared by using fuming sulfuric acid as a second fluid, and thus, the surface processing was performed.

[Transmission Spectrum of Dispersion of Surface-Treated Copper Phathalocyanine Microparticles]

In respect of the aqueous dispersion in Example 7 (Ex. 1)) and the organic solvent dispersion in Example 10 (Ex. 4)), FIG. 42 show transmission spectra of the dispersions of copper phthalocyanine particles (0.005% by weight) in the wavelength region between 350 nm and 800 nm are shown. The black line shows the transmission spectrum of Example 7, and the grey line shows the transmission spectrum of Example 10. It can be seen that, also in Example 7 and Example 10, the transmission spectra are similar to those in Example 6 (see FIG. 39).

The spectrum patterns of Example 7 and Example 10 do not have substantial difference, suggesting that influence of a functional group existing on the surface of copper phthalocyanine microparticles on the spectral characteristics is small. In addition, it was found that the copper phthalocyanine microparticles generate a similar transmission spectrum in an organic solvent system as well as in an aqueous system.

DESCRIPTION OF THE NUMERALS

| | |
|---|---|
| 1 | first processing surface |
| 2 | second processing surface |
| 10 | first processing member |
| 11 | first holder |
| 20 | second processing member |
| 21 | second holder |

## Claims

1. A copper phthalocyanine pigment containing copper phthalocyanine microparticles **characterized in that** a crystal form of the copper phthalocyanine microparticles is an alpha-form, and a wavelength (Lambda-max) is shorter than 478 nm to give the maximum transmittance of the transmission spectrum between 380 nm and 780 nm.

2. A copper phthalocyanine pigment containing copper phthalocyanine microparticles **characterized in that** a crystal form of the copper phthalocyanine microparticles is an alpha-form, and a wavelength (Lambda-max) is shorter than 478 nm to give the maximum transmittance of the transmission spectrum between 380 nm and 780 nm, and a transmittance of the transmission spectrum between a wavelength of 400 nm and 450 nm is larger than that of epsilon-form copper phthalocyanine microparticles over the entirety of said wavelength between 400 nm and 450 nm.

3. The copper phthalocyanine pigment containing copper phthalocyanine microparticles according to claim 1 or claim 2 wherein the copper phthalocyanine microparticles are prepared by a process wherein:

   a fluid to be processed is fed between processing surfaces being capable of approaching to and separating from each other and being displaced relatively,
   a distance between the processing surfaces is maintained to be a minute space by the balance in pressure between a force in the approaching direction and a force in the separating direction including a supply pressure of the fluid and a pressure exerted between the processing surfaces, at least one of which rotates relative to the other,
   wherein the minute space maintained between the two processing surfaces is allowed to serve as a flow path of the fluid to be processed thereby forming a thin film fluid of the fluid to be processed and mixing the fluid to be processed in the thin film fluid and being produced as microparticles in the thin film fluid; and wherein:

      the fluid to be processed is comprised of at least two fluids,
      at least one of the fluids is a fluid containing a copper phthalocyanine solution, and at least one of the fluids other than the above fluid is a fluid containing a solvent capable of being a poor solvent to a copper phthalocyanine solution, and
      the at least two fluids are fed between the processing surfaces through separate flow paths.

4. The copper phthalocyanine pigment containing copper phthalocyanine microparticles according to any of claims 1 to 3 **characterized in that** the form of the copper phthalocyanine microparticles is almost spherical.

5. The copper phthalocyanine pigment containing copper phthalocyanine microparticles according to claim 4 **characterized in that** the volume-average particle size of the copper phthalocyanine microparticles is 1 nm to 600 nm.

6. A method for producing copper phthalocyanine microparticles according to claim 1 or claim 2 comprising the steps of:

   feeding a fluid to be processed between processing surfaces being capable of approaching to and separating from each other and being displaced relatively,
   maintaining a distance between the processing surfaces to be a minute space by the balance in pressure between a force in the approaching direction and a force in the separating direction including a supply pressure of the fluid and a pressure exerted between the processing surfaces, at least one of which rotates relative to the other,
   allowing the minute space maintained between the two processing surfaces to serve as a flow path of the fluid

to be processed thereby forming a thin film fluid of the fluid to be processed, and mixing the fluid to be processed in the thin film fluid and separating the microparticles in the thin film fluid; and wherein
the fluid to be processed is comprised of at least two fluids,
at least one of the fluids is a fluid containing a copper phthalocyanine solution, and at least one of the fluids other than the above fluid is a fluid containing a solvent capable of being a poor solvent to a copper phthalocyanine solution, and
the at least two fluids are fed between the processing surfaces through separate flow paths.

**7.** The method for producing copper phthalocyanine microparticles according to claim 6 **characterized in that** the production apparatus comprises:

a fluid pressure imparting mechanism for imparting pressure to the fluid to be processed,
at least two processing members of a first processing member and a second processing member, the second processing member being capable of approaching to and separating from the first processing member relatively, and
a rotation drive mechanism for rotating the first processing member and the second processing member relative to each other;
wherein the first processing member comprises a first processing surface, and the second processing member comprises a second processing surface, the first and second processing surfaces positioned facing each other, each of the processing surfaces constitutes part of a sealed flow path through which the fluid under the pressure is passed,
of the first and second processing members, at least the second processing member is provided with a pressure-receiving surface, and at least part of the pressure-receiving surface is comprised of the second processing surface,
and wherein:
the pressure-receiving surface receives pressure applied to the fluid by the fluid pressure imparting mechanism thereby generating a force to move in the direction of separating the second processing surface from the first processing surface,
the fluid under the pressure is passed between the first and second processing surfaces being capable of approaching to and separating from each other and rotating relative to each other, whereby the fluid under the pressure forms the thin film fluid, and
the microparticles are separated in the thin film fluid.

**8.** The method for producing copper phthalocyanine microparticles according to claim 7 **characterized in that** one fluid to be processed, after being imparted with pressure from the fluid pressure imparting mechanism, is passed between the first processing surface and the second processing surface,
another independent introduction path is provided through which another fluid to be processed other than the one fluid to be processed is passed,
at least one opening leading to the introduction path is arranged in at least either the first processing surface or the second processing surface,
said another fluid to be processed is introduced through this introduction path between both the processing surfaces, and
said one fluid and said another fluid are mixed in the thin film fluid.

## Patentansprüche

**1.** Kupferphthalocyaninpigment, enthaltend Kupferphthalocyanin-Mikropartikel, **dadurch gekennzeichnet, dass** eine Kristallform der Kupferphthalocyanin-Mikropartikel eine Alpha-Form ist und eine Wellenlänge (Lambda-max) kürzer ist als 478 nm, um die maximale Durchlässigkeit des Transmissionsspektrums zwischen 380 nm und 780 nm zu ergeben.

**2.** Kupferphthalocyaninpigment, enthaltend Kupferphthalocyanin-Mikropartikel, **dadurch gekennzeichnet, dass** eine Kristallform der Kupferphthalocyanin-Mikropartikel eine Alpha-Form ist und eine Wellenlänge (Lambda-max) kürzer ist als 478 nm, um die maximale Durchlässigkeit des Transmissionsspektrums zwischen 380 nm und 780 nm zu ergeben, und eine Durchlässigkeit des Transmissionsspektrums zwischen einer Wellenlänge von 400 nm und 450 nm größer ist als die von Kupferphthalocyanin-Mikropartikeln in Epsilon-Form über die Gesamtheit der Wellenlänge zwischen 400 nm und 450 nm.

**3.** Kupferphthalocyaninpigment, enthaltend Kupferphthalocyanin-Mikropartikel, nach Anspruch 1 oder Anspruch 2, wobei die Kupferphthalocyanin-Mikropartikel durch einen Prozess hergestellt werden, in dem:

ein Fluid, das zu verarbeiten ist, zwischen Verarbeitungsoberflächen zugeführt wird, die imstande sind, sich einander anzunähern und sich voneinander zu trennen, und die relativ versetzt werden,
eine Distanz zwischen den Verarbeitungsoberflächen gehalten wird, ein geringfügiger Zwischenraum zu sein, durch die Balance im Druck zwischen einer Kraft in der annähernden Richtung und einer Kraft in der trennenden Richtung einschließlich eines Zuführungsdrucks des Fluids und eines Drucks, der zwischen den Verarbeitungsoberflächen ausgeübt wird, von denen mindestens eine relativ zu der anderen rotiert,
wobei dem geringfügigen Zwischenraum, der zwischen den beiden Verarbeitungsoberflächen gehalten wird, gestattet wird, als ein Flussweg des Fluids, das zu verarbeiten ist, zu dienen, wodurch ein Dünnfilmfluid des Fluids, das zu verarbeiten ist, gebildet wird und das Fluid, das zu verarbeiten ist, in das Dünnfilmfluid gemischt wird und als Mikropartikel in dem Dünnfilmfluid produziert wird; und wobei:

das Fluid, das zu verarbeiten ist, aus mindestens zwei Fluiden besteht,
mindestens eines der Fluide ein Fluid ist, das eine Kupferphthalocyaninlösung enthält, und mindestens eines der Fluide außer dem obigen Fluid ein Fluid ist, das ein Lösungsmittel enthält, das imstande ist, ein schlechtes Lösungsmittel für eine Kupferphthalocyaninlösung zu sein, und
die mindestens zwei Fluide zwischen den Verarbeitungsoberflächen durch getrennte Flusswege zugeführt werden.

**4.** Kupferphthalocyaninpigment, enthaltend Kupferphthalocyanin-Mikropartikel, nach einem der Ansprüche 1 bis 3, **dadurch gekennzeichnet, dass** die Form der Kupferphthalocyanin-Mikropartikel beinahe rund ist.

**5.** Kupferphthalocyaninpigment, enthaltend Kupferphthalocyanin-Mikropartikel, nach Anspruch 4, **dadurch gekennzeichnet, dass** die volumendurchschnittliche Partikelgröße der Kupferphthalocyanin-Mikropartikel 1 nm bis 600 nm beträgt.

**6.** Verfahren zum Produzieren von Kupferphthalocyanin-Mikropartikeln nach Anspruch 1 oder Anspruch 2, die folgenden Schritte umfassend:

Zuführen eines Fluids, das zu verarbeiten ist, zwischen Verarbeitungsoberflächen, die imstande sind, sich einander anzunähern und sich voneinander zu trennen, und die relativ versetzt werden,
Erhalten einer Distanz zwischen den Verarbeitungsoberflächen, um ein geringfügiger Zwischenraum zu sein, durch die Balance im Druck zwischen einer Kraft in der annähernden Richtung und einer Kraft in der trennenden Richtung einschließlich eines Zuführungsdrucks des Fluids und eines Drucks, der zwischen den Verarbeitungsoberflächen ausgeübt wird, von denen mindestens eine relativ zu der anderen rotiert,
Gestatten, dass der geringfügige Zwischenraum, der zwischen den beiden Verarbeitungsoberflächen gehalten wird, als ein Flussweg des Fluids, das zu verarbeiten ist, dient, wodurch ein Dünnfilmfluid des Fluids, das zu verarbeiten ist, gebildet wird, und Mischen des Fluids, das zu verarbeiten ist, in das Dünnfilmfluid und Trennen der Mikropartikel in dem Dünnfilmfluid; und wobei:

das Fluid, das zu verarbeiten ist, aus mindestens zwei Fluiden besteht,
mindestens eines der Fluide ein Fluid ist, das eine Kupferphthalocyaninlösung enthält, und mindestens eines der Fluide außer dem obigen Fluid ein Fluid ist, das ein Lösungsmittel enthält, das imstande ist, ein schlechtes Lösungsmittel für eine Kupferphthalocyaninlösung zu sein, und
die mindestens zwei Fluide zwischen den Verarbeitungsoberflächen durch getrennte Flusswege zugeführt werden.

**7.** Verfahren zum Produzieren von Kupferphthalocyanin-Mikropartikeln nach Anspruch 6, **dadurch gekennzeichnet, dass** die Produktionsvorrichtung umfasst:

einen Fluiddruck-Ausübungsmechanismus zum Ausüben eines Drucks auf das Fluid, das zu verarbeiten ist,
mindestens zwei Verarbeitungsglieder eines ersten Verarbeitungsglieds und eines zweiten Verarbeitungsglieds, wobei das zweite Verarbeitungsglied imstande ist, sich dem ersten Verarbeitungsglied relativ anzunähern und davon zu trennen, und
einen Rotationsantriebsmechanismus zum Rotieren des ersten Verarbeitungsglieds und des zweiten Verarbeitungsglieds relativ zueinander;

wobei das erste Verarbeitungsglied eine erste Verarbeitungsoberfläche umfasst und das zweite Verarbeitungsglied eine zweite Verarbeitungsoberfläche umfasst, wobei die erste und die zweite Verarbeitungsoberfläche einander gegenüberstehend positioniert sind,
jede der Verarbeitungsoberflächen einen Teil eines verschlossenen Flusswegs bildet, durch den das Fluid unter dem Druck geleitet wird,
von dem ersten und zweiten Verarbeitungsglied mindestens das zweite Verarbeitungsglied mit einer Druck empfangenden Oberfläche versehen ist und mindestens ein Teil der Druck empfangenden Oberfläche aus der zweiten Verarbeitungsoberfläche besteht,
und wobei:

die Druck empfangende Oberfläche Druck empfängt, die von dem Fluiddruck-Ausübungsmechanismus auf das Fluid angewandt wird, wodurch eine Kraft erzeugt wird, um sich in der Richtung des Trennens der zweiten Verarbeitungsoberfläche von der ersten Verarbeitungsoberfläche zu bewegen,
das Fluid unter dem Druck zwischen der ersten und zweiten Verarbeitungsoberfläche, die imstande sind, sich einander anzunähern und sich voneinander zu trennen und relativ zueinander zu rotieren, geleitet wird, wodurch das Fluid unter dem Druck das Dünnfilmfluid bildet, und
die Mikropartikel in dem Dünnfilmfluid getrennt werden.

**8.** Verfahren zum Produzieren von Kupferphthalocyanin-Mikropartikeln nach Anspruch 7, **dadurch gekennzeichnet, dass** ein Fluid, das zu verarbeiten ist, zwischen der ersten Verarbeitungsoberfläche und der zweiten Verarbeitungsoberfläche geleitet wird, nachdem darauf Druck von dem Fluiddruck-Ausübungsmechanismus ausgeübt worden ist,
ein anderer, unabhängiger Einführungsweg bereitgestellt wird, durch den ein anderes Fluid, das zu verarbeiten ist, außer dem einen Fluid, das zu verarbeiten ist, geleitet wird,
mindestens eine Öffnung, die zu dem Einführungsweg führt, in mindestens einer der ersten Verarbeitungsoberfläche oder der zweiten Verarbeitungsoberfläche angeordnet ist,
das andere Fluid, das zu verarbeiten ist, durch diesen Einführungsweg zwischen den beiden Verarbeitungsoberflächen eingeführt wird, und
das eine Fluid und das andere Fluid in dem Dünnfilmfluid gemischt werden.

## Revendications

**1.** Pigment de phthalocyanine de cuivre contenant des microparticules de phthalocyanine de cuivre **caractérisé en ce qu'**une forme cristalline des microparticules de phthalocyanine de cuivre est une forme alpha, et une longueur d'onde (lambda-max) est inférieure à 478 nm pour fournir la transmittance maximum du spectre de transmission entre 380 nm et 780 nm.

**2.** Pigment de phthalocyanine de cuivre contenant des microparticules de phthalocyanine de cuivre **caractérisé en ce qu'**une forme cristalline des microparticules de phthalocyanine de cuivre est une forme alpha, et une longueur d'onde (lambda-max) est inférieure à 478 nm pour fournir la transmittance maximum du spectre de transmission entre 380 nm et 780 nm, et une transmittance du spectre de transmission pour une longueur d'onde comprise entre 400 nm et 450 nm est supérieure à celle d'une forme epsilon de microparticules de phthalocyanine de cuivre sur la totalité de ladite longueur d'onde comprise entre 400 nm et 450 nm.

**3.** Pigment de phthalocyanine de cuivre contenant des microparticules de phthalocyanine de cuivre selon la revendication 1 ou la revendication 2, dans lequel les microparticules de phthalocyanine de cuivre sont préparées grâce à un procédé dans lequel :

un fluide à traiter est fourni entre des surfaces de traitement capables de s'approcher et de s'éloigner les unes des autres et qui sont déplacées de manière relative,
une distance entre les surfaces de traitement est maintenue de manière à représenter un espace infime grâce à l'équilibre de pression entre une force dans la direction d'approche et une force dans la direction de séparation, y compris une pression d'alimentation du fluide et une pression exercée entre les surfaces de traitement, dont au moins une pivote par rapport à l'autre,
dans lequel l'espace infime maintenu entre les deux surfaces de traitement peut servir de voie d'écoulement du fluide à traiter, ce qui entraîne une formation d'un fluide en couche mince du fluide à traiter et un mélange du fluide à traiter dans le fluide en couche mince et une production de microparticules dans le fluide en couche mince ; et dans lequel :

le fluide à traiter est composé d'au moins deux fluides,
au moins un des fluides est un fluide contenant une solution de phthalocyanine de cuivre, et au moins un des fluides autre que le fluide ci-dessus est un fluide contenant un solvant capable d'être un solvant médiocre pour une solution de phthalocyanine de cuivre, et
les au moins deux fluides sont fournis entre les surfaces de traitement au travers de voies d'écoulement séparées.

4. Pigment de phthalocyanine de cuivre contenant des microparticules de phthalocyanine de cuivre selon l'une quelconque des revendications 1 à 3, **caractérisé en ce que** la forme des microparticules de phthalocyanine de cuivre est presque sphérique.

5. Pigment de phthalocyanine de cuivre contenant des microparticules de phthalocyanine de cuivre selon la revendication 4, **caractérisé en ce que** la taille moyenne de particule en volume des microparticules de phthalocyanine de cuivre est de 1 nm à 600 nm.

6. Procédé de production de microparticules de phthalocyanine de cuivre selon la revendication 1 ou 2, comprenant les étapes consistant à :

fournir un fluide à traiter entre des surfaces de traitement capables de s'approcher et de s'éloigner les unes des autres et qui sont déplacées de manière relative,
maintenir une distance entre les surfaces de traitement de manière à représenter un espace infime grâce à l'équilibre de pression entre une force dans la direction d'approche et une force dans la direction de séparation, y compris une pression d'alimentation du fluide et une pression exercée entre les surfaces de traitement, dont au moins une pivote par rapport à l'autre,
permettre à l'espace infime maintenu entre les deux surfaces de traitement de servir de voie d'écoulement du fluide à traiter, ce qui entraîne une formation d'un fluide en couche mince du fluide à traiter, et un mélange du fluide à traiter dans le fluide en couche mince et une séparation des microparticules dans le fluide en couche mince ; et dans lequel
le fluide à traiter est composé d'au moins deux fluides,
au moins un des fluides est un fluide contenant une solution de phthalocyanine de cuivre, et au moins un des fluides autre que le fluide ci-dessus est un fluide contenant un solvant capable d'être un solvant médiocre pour une solution de phthalocyanine de cuivre, et
les au moins deux fluides sont fournis entre les surfaces de traitement au travers de voies d'écoulement séparées.

7. Procédé de production de microparticules de phthalocyanine de cuivre selon la revendication 6, **caractérisé en ce que** l'appareil de production comprend :

un mécanisme de mise en pression de fluide permettant de conférer une pression au fluide à traiter,
au moins deux organes de traitement parmi un premier organe de traitement et un second organe de traitement, le second organe de traitement étant capable de s'approcher et de s'éloigner de manière relative du premier organe de traitement, et
un mécanisme d'entraînement en rotation permettant de faire pivoter le premier organe de traitement et le second organe de traitement l'un par rapport à l'autre ;
dans lequel le premier organe de traitement comprend une première surface de traitement, et le second organe de traitement comprend une seconde surface de traitement, les première et seconde surfaces de traitement étant positionnées l'une en face de l'autre,
chacune des surfaces de traitement constitue une partie d'une voie d'écoulement scellée à travers laquelle on fait passer le fluide sous ladite pression,
parmi les premier et second organes de traitement, au moins le second organe de traitement est muni d'une surface de réception de pression, et au moins une partie de la surface de réception de pression est constituée par la seconde surface de traitement,
et dans lequel :

la surface de réception de pression reçoit de la pression appliquée au fluide par le mécanisme de mise en pression de fluide, ce qui génère une force de déplacement dans la direction d'éloignement de la seconde surface de traitement à partir de la première surface de traitement,
le fluide sous ladite pression passe entre les première et seconde surfaces de traitement capables de s'approcher et de s'éloigner l'une de l'autre et de pivoter l'une par rapport à l'autre, grâce à quoi le fluide

sous ladite pression forme le fluide en couche mince, et
les microparticules sont séparées dans le fluide en couche mince.

**8.** Procédé de production de microparticules de phthalocyanine de cuivre selon la revendication 7, **caractérisé en ce que** l'on fait passer un fluide à traiter entre la première surface de traitement et la seconde surface de traitement, après que le mécanisme de mise en pression de fluide a exercé une pression sur celui-ci,
une autre voie d'introduction indépendante est fournie, à travers laquelle on fait passer un autre fluide à traiter différent dudit un fluide à traiter,
au moins une ouverture menant à la voie d'introduction est agencée dans au moins la première surface de traitement ou la seconde surface de traitement,
ledit autre fluide à traiter est introduit à travers cette voie d'introduction entre les deux surfaces de traitement, et
ledit un fluide et ledit autre fluide sont mélangés dans le fluide en couche mince.

F I G I

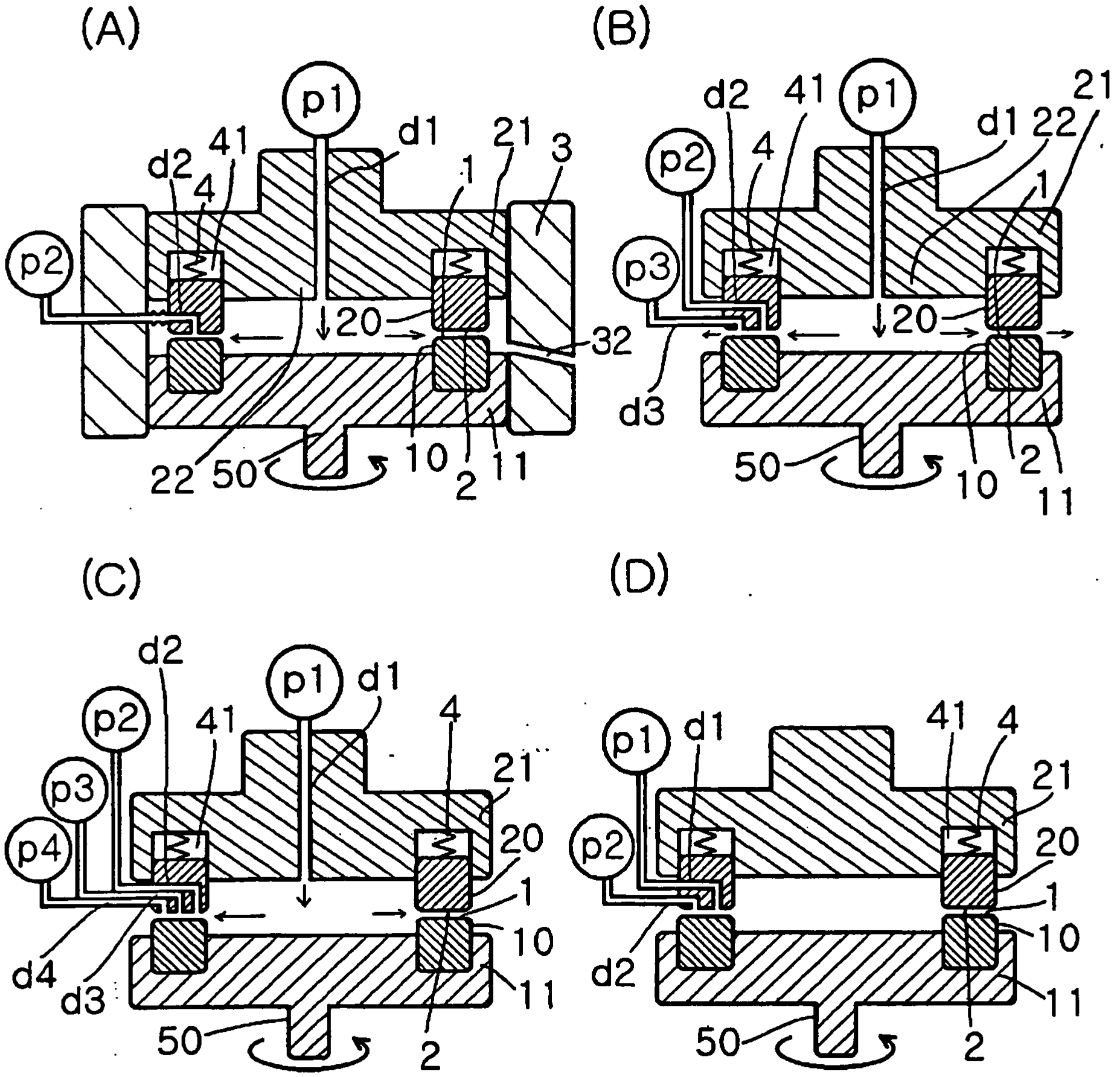
(A)
p1
p2
d1
d2
41
4
1
21
3
20
32
22
50
10
2
11
(B)
d2
41
p1
21
d1
22
p2
4
1
p3
20
d3
50
10
2
11
(C)
d2
p1
d1
p2
41
4
p3
21
p4
20
1
10
d4
d3
11
50
2
(D)
p1
d1
41
4
21
p2
20
1
10
d2
11
50
2

F I G 2

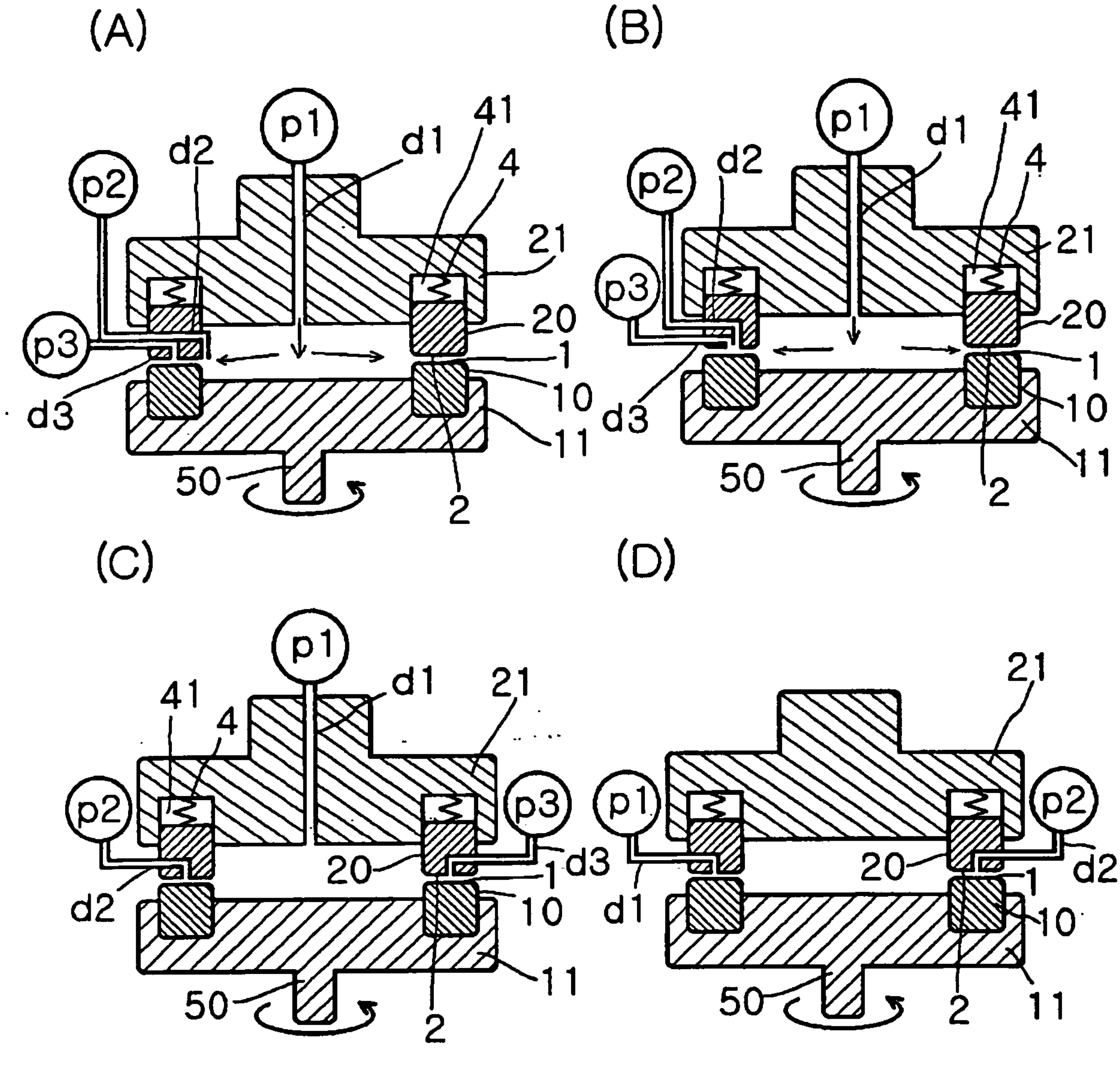
(A)
p1
p2
p3
d1
d2
d3
41
4
21
20
1
10
11
50
2
(B)
p1
p2
p3
d1
d2
d3
41
4
21
20
1
10
11
50
2
(C)
p1
p2
p3
d1
d2
d3
41
4
21
20
1
10
11
50
2
(D)
p1
p2
d1
d2
21
20
1
10
11
50
2

F I G 3

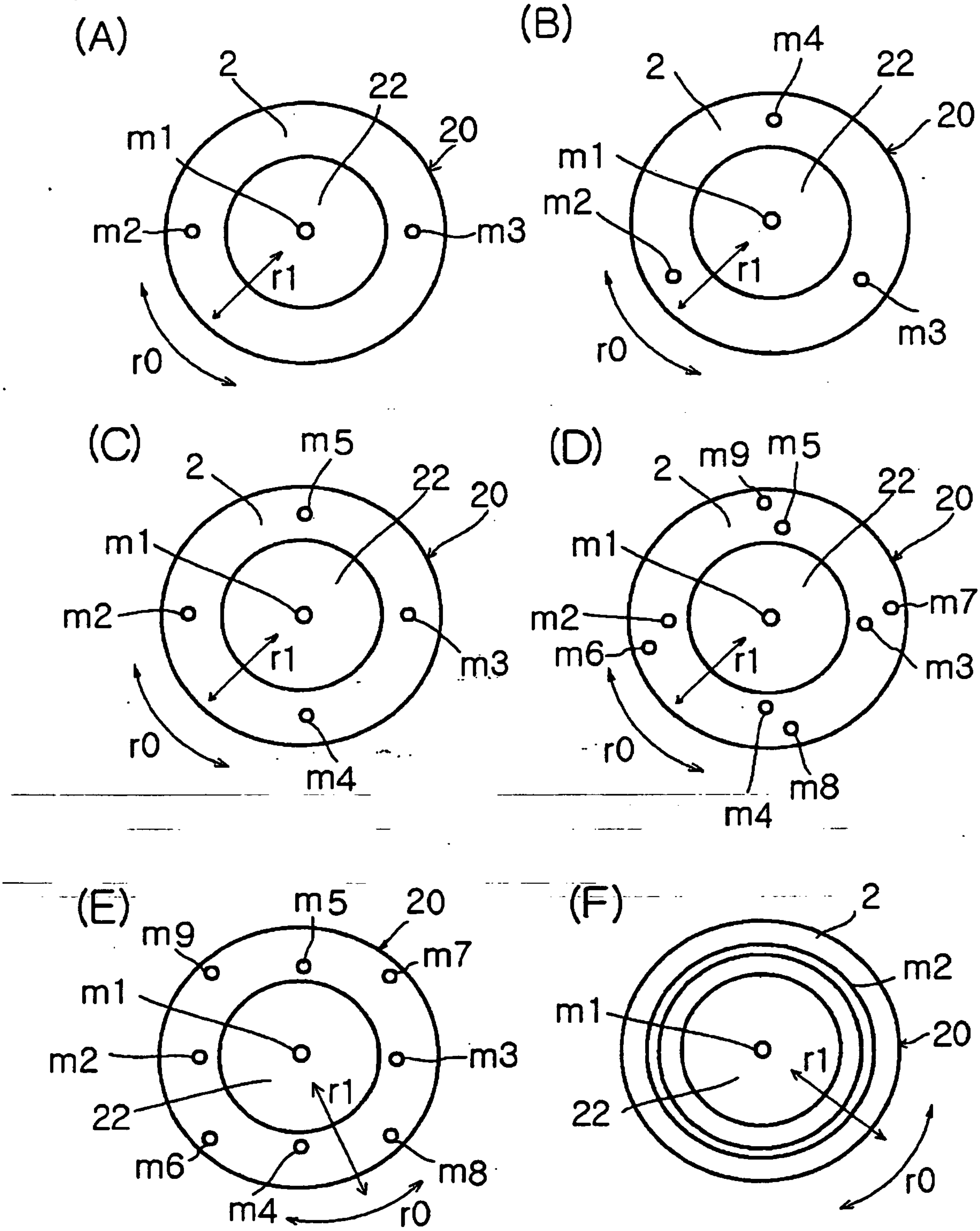
(A)
2
22
20
m1
m2
m3
r1
r0
(B)
m4
2
22
20
m1
m2
r1
m3
r0
(C)
m5
2
22
20
m1
m2
r1
m3
r0
m4
(D)
2
m9
m5
22
20
m1
m7
m2
m6
r1
m3
r0
m8
m4
(E)
m5
20
m9
m7
m1
m2
m3
22
r1
m6
m8
m4
r0
(F)
2
m2
m1
20
r1
22
r0

FIG 4

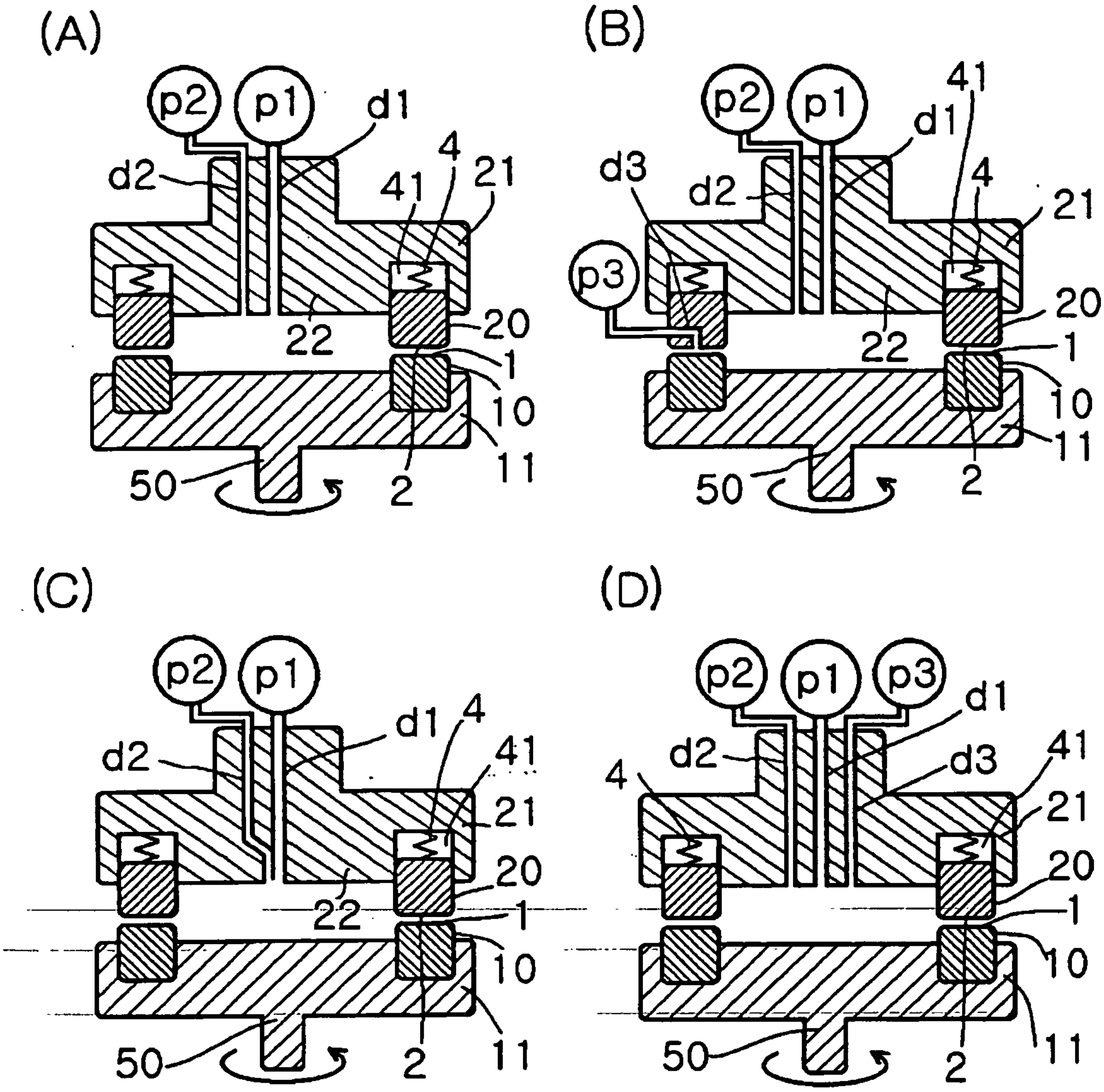
(A)
p2
p1
d1
d2
4
41
21
20
22
1
10
11
50
2
(B)
p2
p1
41
d1
d3
d2
4
21
p3
20
22
1
10
11
50
2
(C)
p2
p1
d1
4
d2
41
21
20
22
1
10
11
50
2
(D)
p2
p1
p3
d1
d2
d3
4
41
21
20
1
10
11
50
2

FIG 5

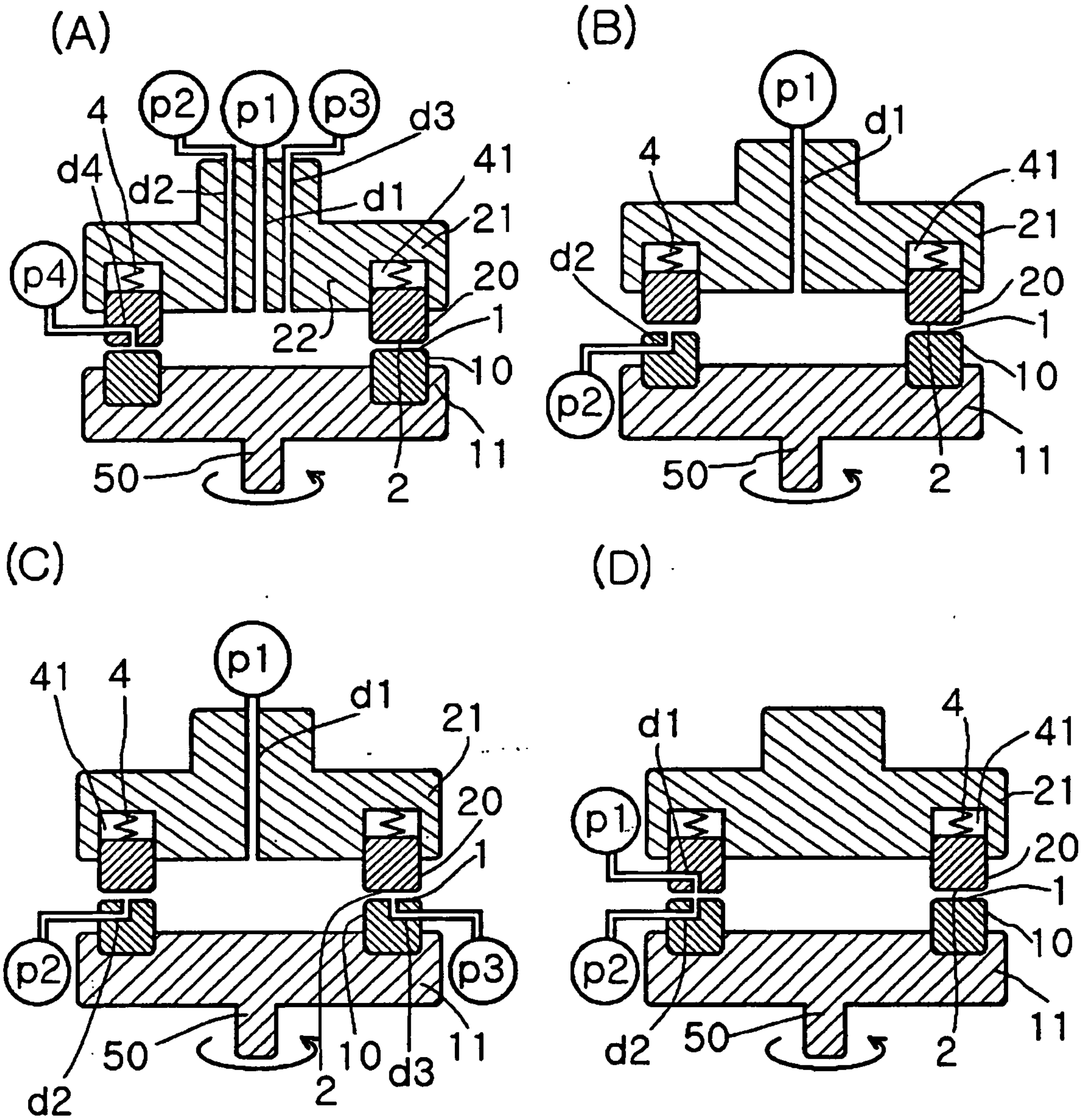
(A)
p2
p1
p3
d3
4
d4
d2
41
d1
21
p4
20
22
1
10
11
50
2
(B)
p1
d1
4
41
21
d2
20
1
10
p2
11
50
2
(C)
(D)
p1
41
4
d1
21
20
1
p2
p3
50
10
d3
11
2
d2
4
d1
41
21
p1
20
1
10
p2
11
d2
50
2

F I G 6

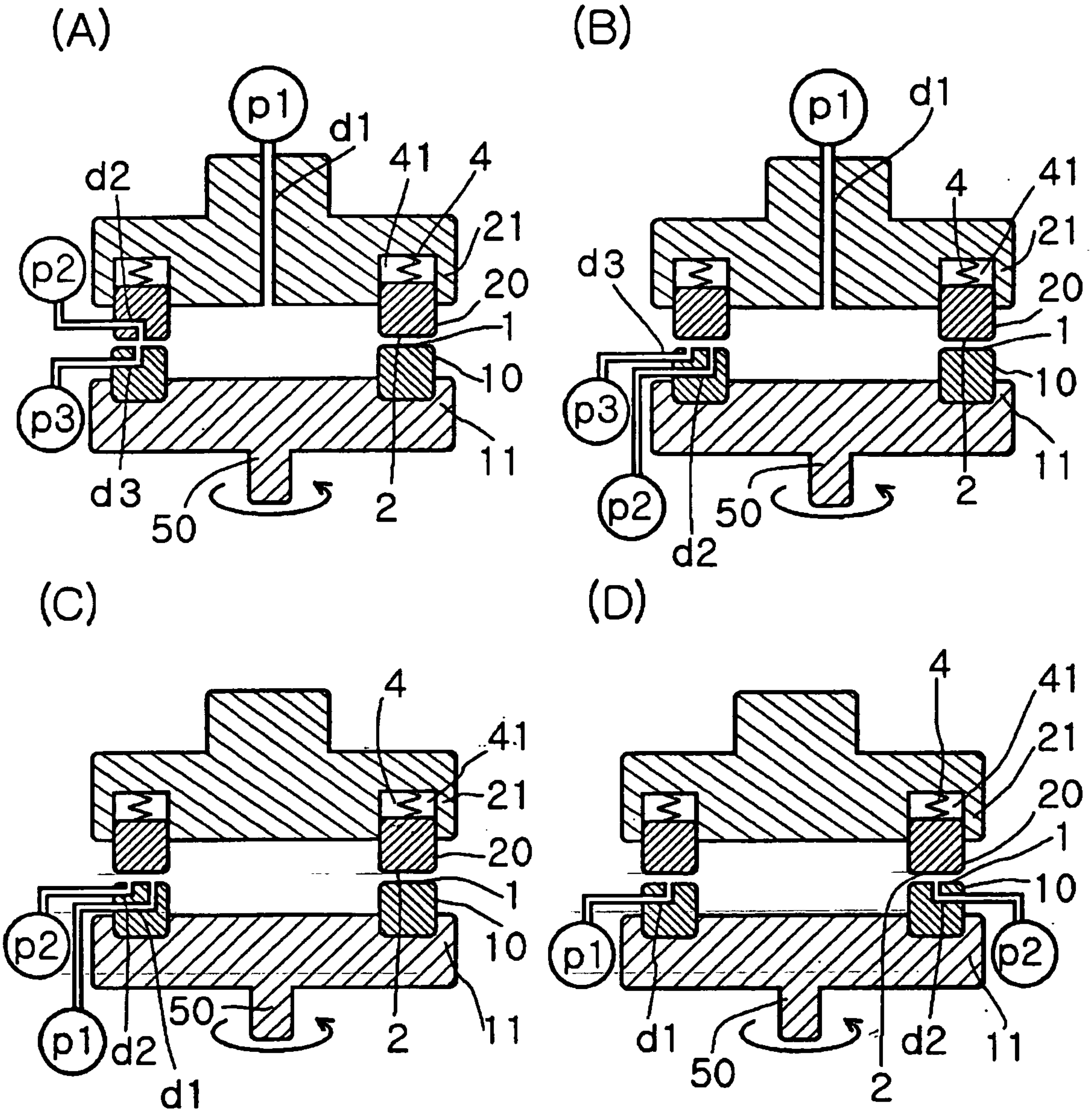
(A)
p1
d1
d2
41
4
21
p2
20
1
10
p3
11
d3
50
2
(B)
p1
d1
4
41
21
d3
20
1
10
p3
11
p2
50
2
d2
(C)
4
41
21
20
1
p2
10
p1
d2
50
2
11
d1
(D)
4
41
21
20
1
10
p1
p2
d1
50
d2
11
2

F I G 7

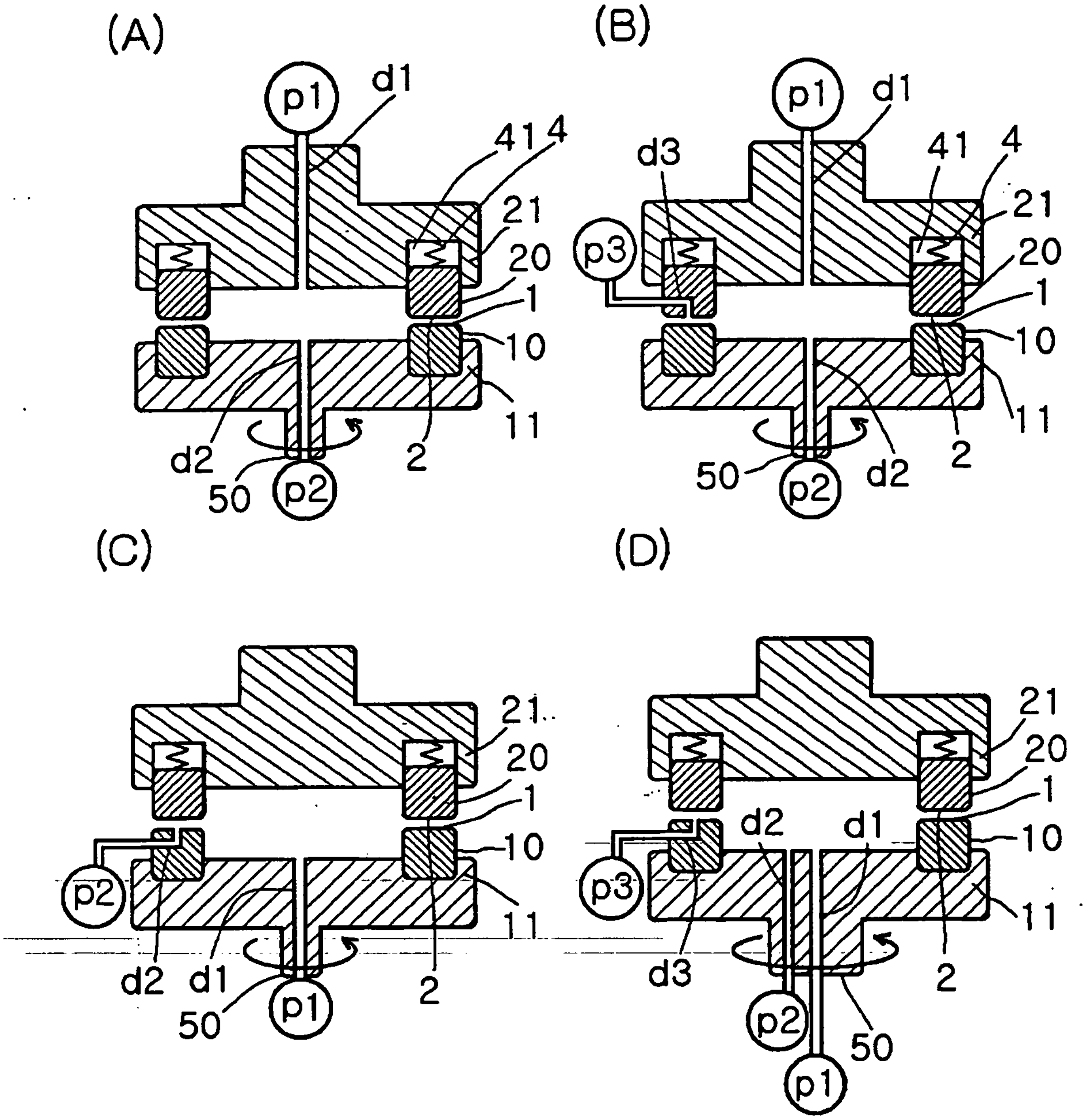
(A)
p1
d1
41
4
21
20
1
10
11
d2
2
50
p2
(B)
p1
d1
d3
41
4
21
p3
20
1
10
11
2
50
p2
d2
(C)
21
20
1
10
11
p2
d2
d1
2
50
p1
(D)
21
20
1
10
11
p3
d2
d1
d3
2
p2
50
p1

F I G 8

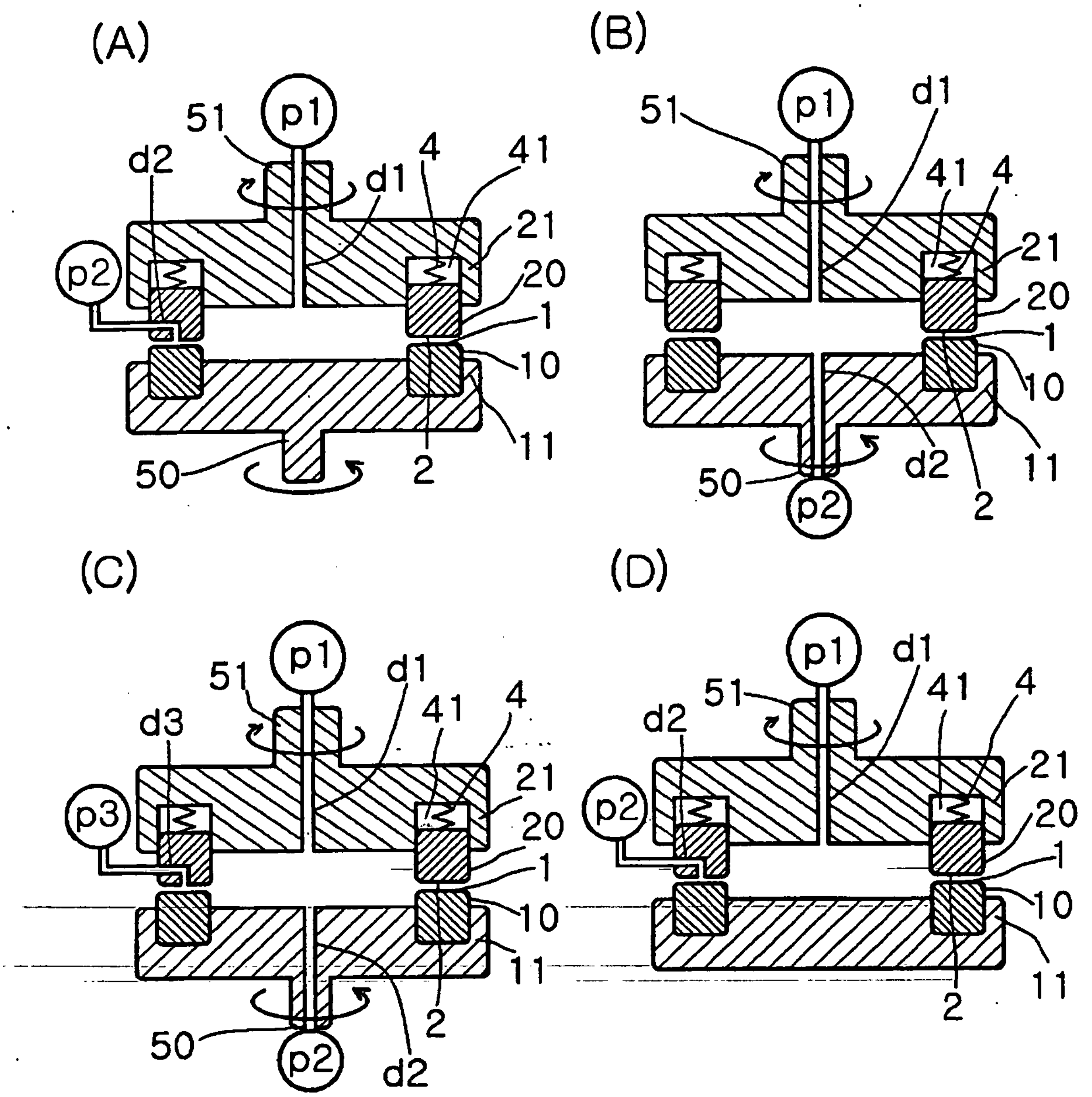

F I G 9

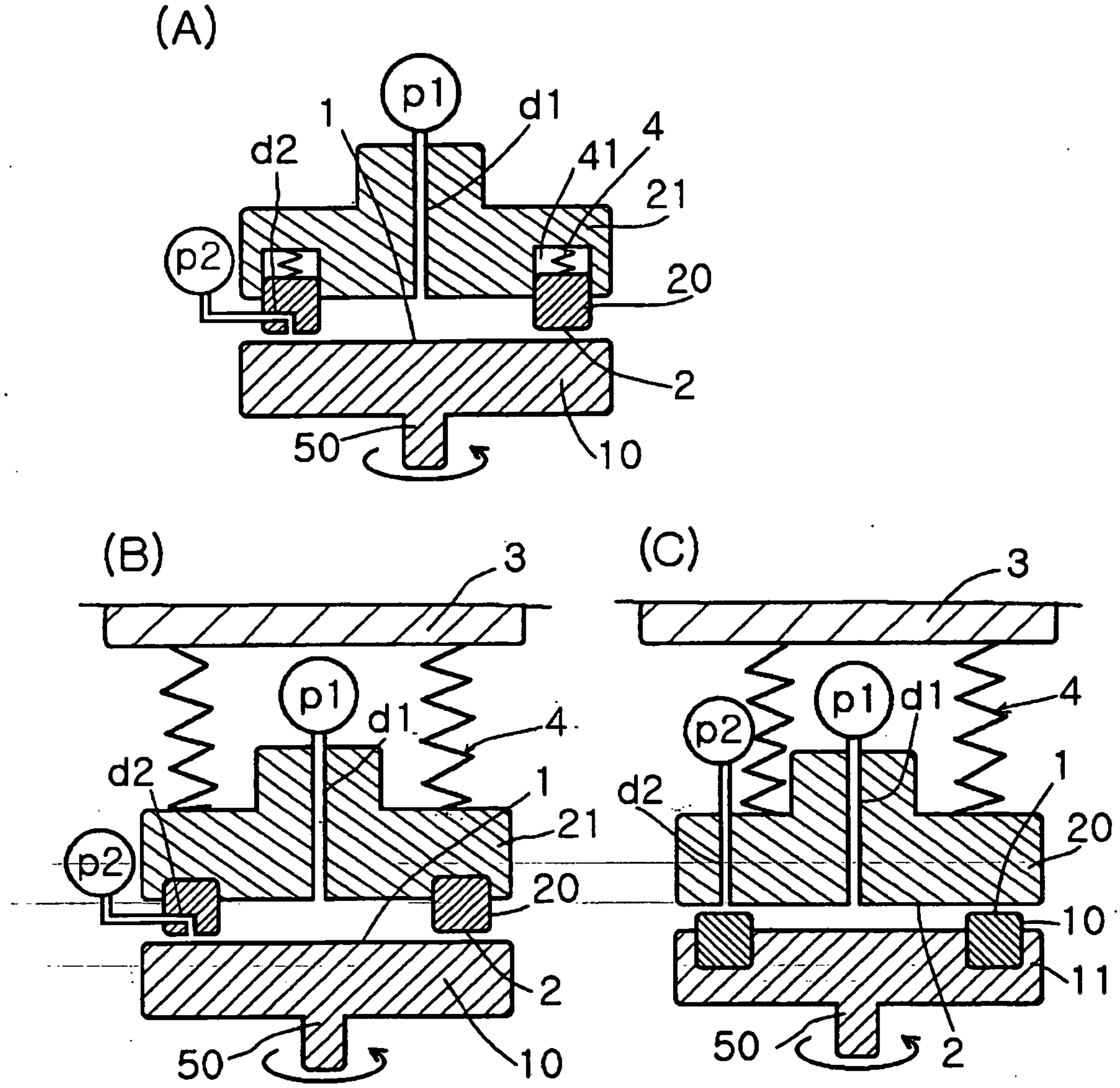
(A)
p1
1
d1
d2
41
4
21
p2
20
2
50
10
(B)
3
p1
d1
4
d2
1
21
p2
20
2
50
10
(C)
3
p1
d1
p2
4
d2
1
20
10
11
50
2

F I G 10

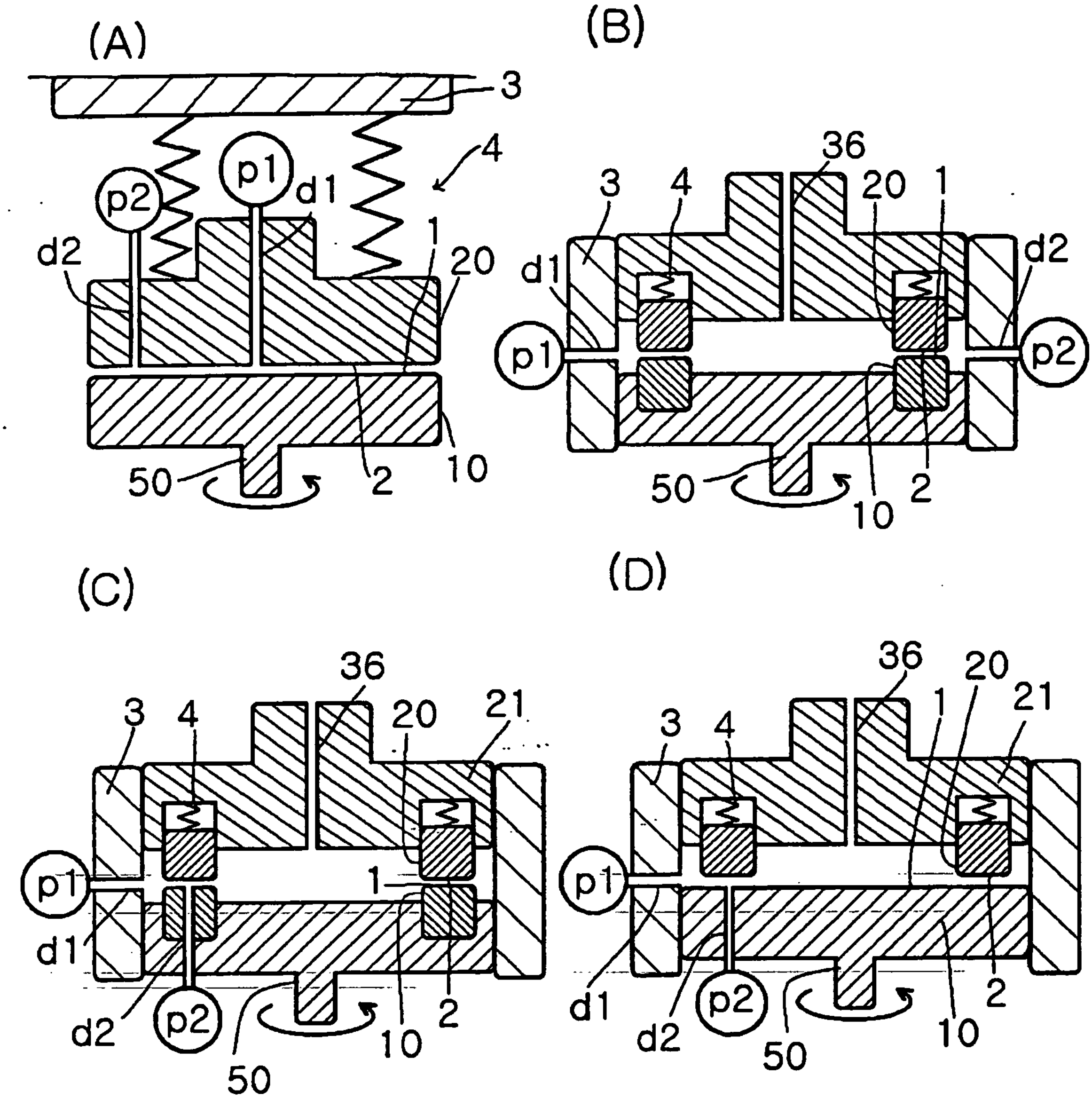
(A)
3
4
p1
p2
d1
d2
1
20
2
10
50
(B)
36
3
4
20
1
d1
d2
p1
p2
50
10
2
(C)
36
3
4
20
21
p1
1
d1
d2
p2
50
10
2
(D)
36
20
3
4
1
21
p1
d1
d2
p2
50
10
2

FIG 11

(A)

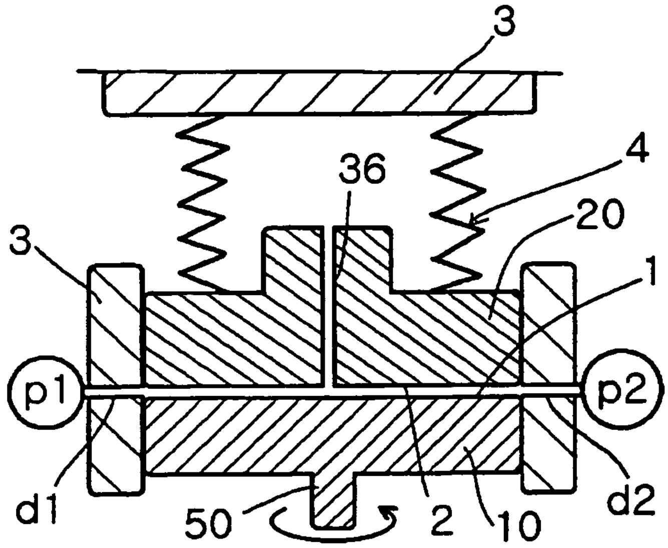
3
36
4
20
3
1
p1
p2
d1
50
2
10
d2

(B)

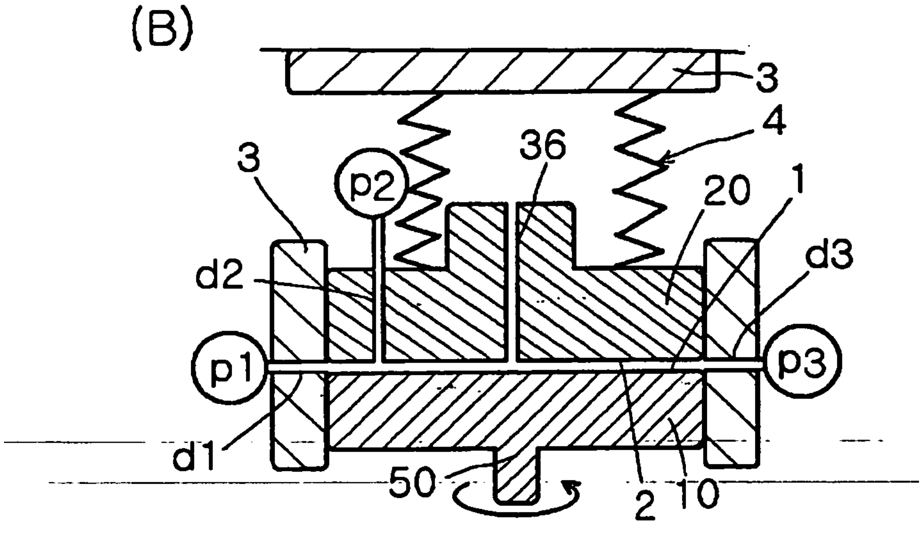
3
4
36
3
p2
20
1
d3
d2
p1
p3
d1
50
2
10

(C)

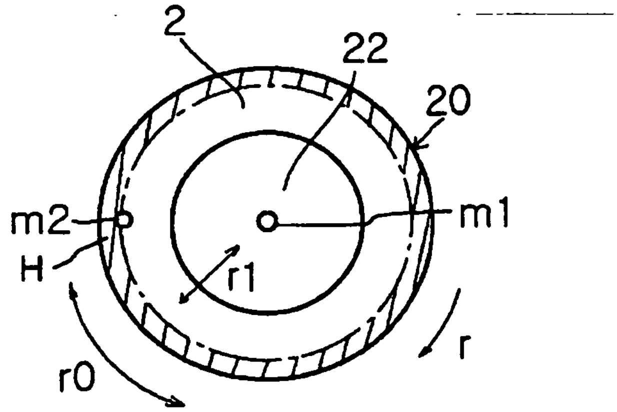
2
22
20
m2
m1
H
r1
r
r0

F I G12

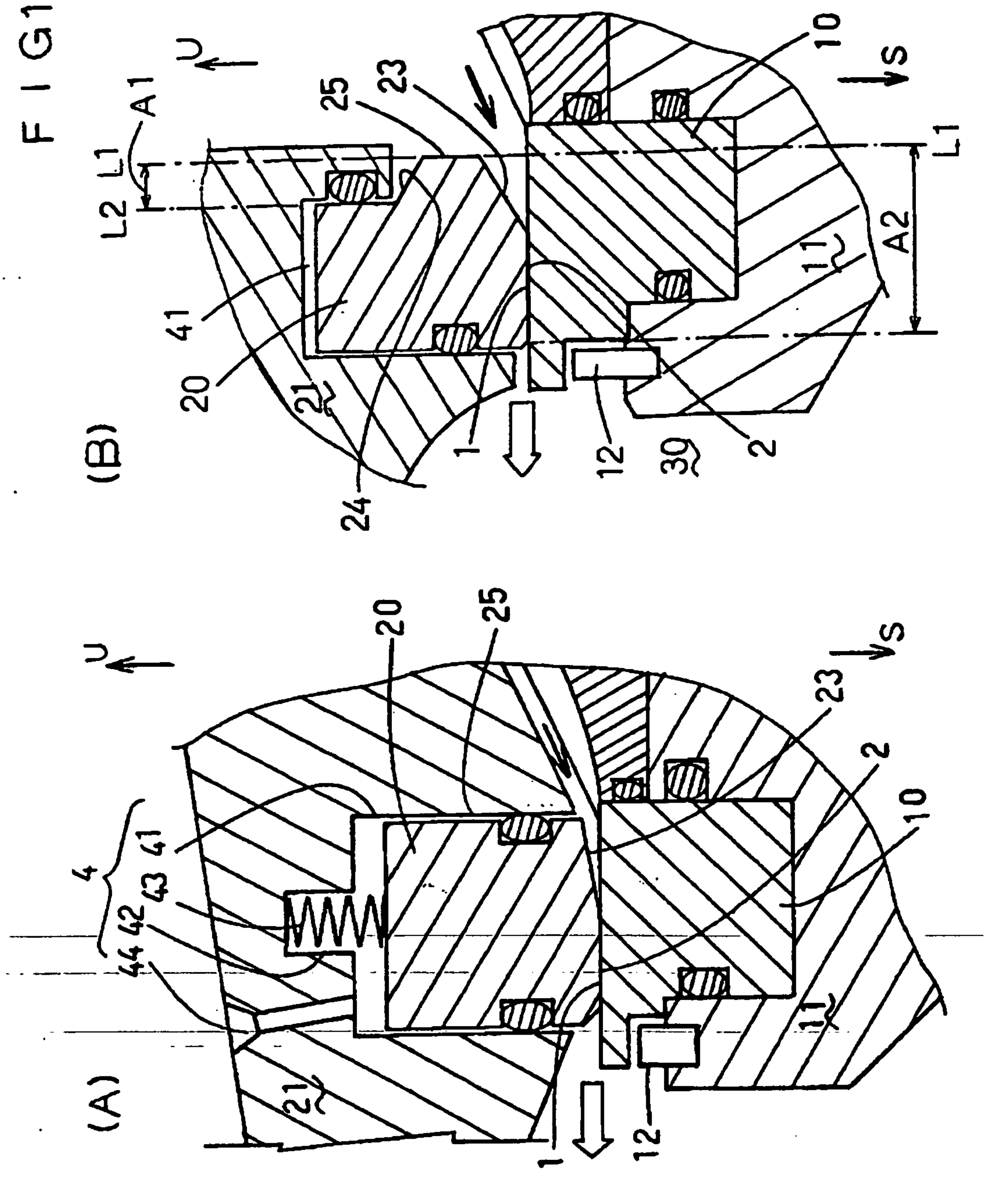
(B)
U
S
L2
L1
A1
A2
L1
25
23
10
41
20
21
24
1
12
30
2
11
(A)
U
S
4
44
42
43
41
20
25
23
2
10
21
1
12
11

F I G 13

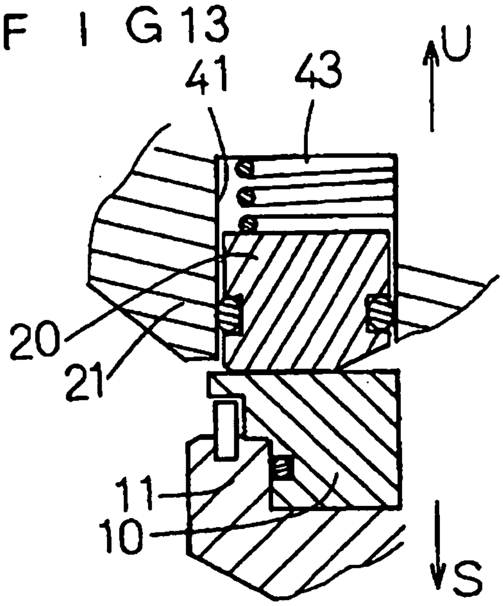

F I G. 14

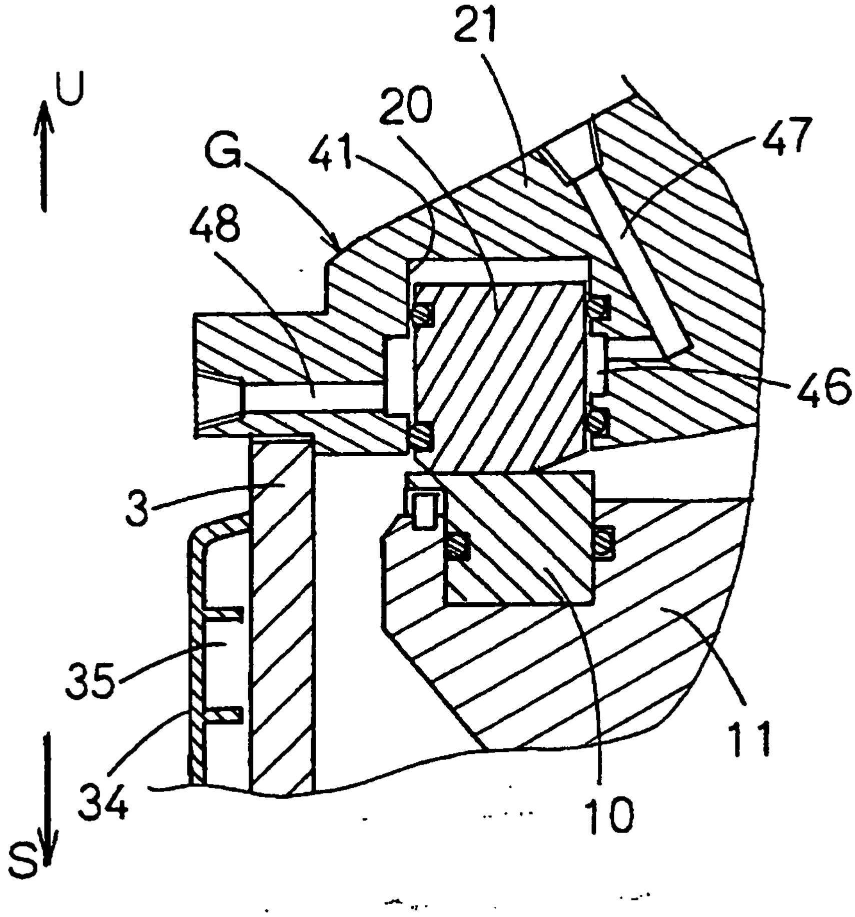

F I G 15

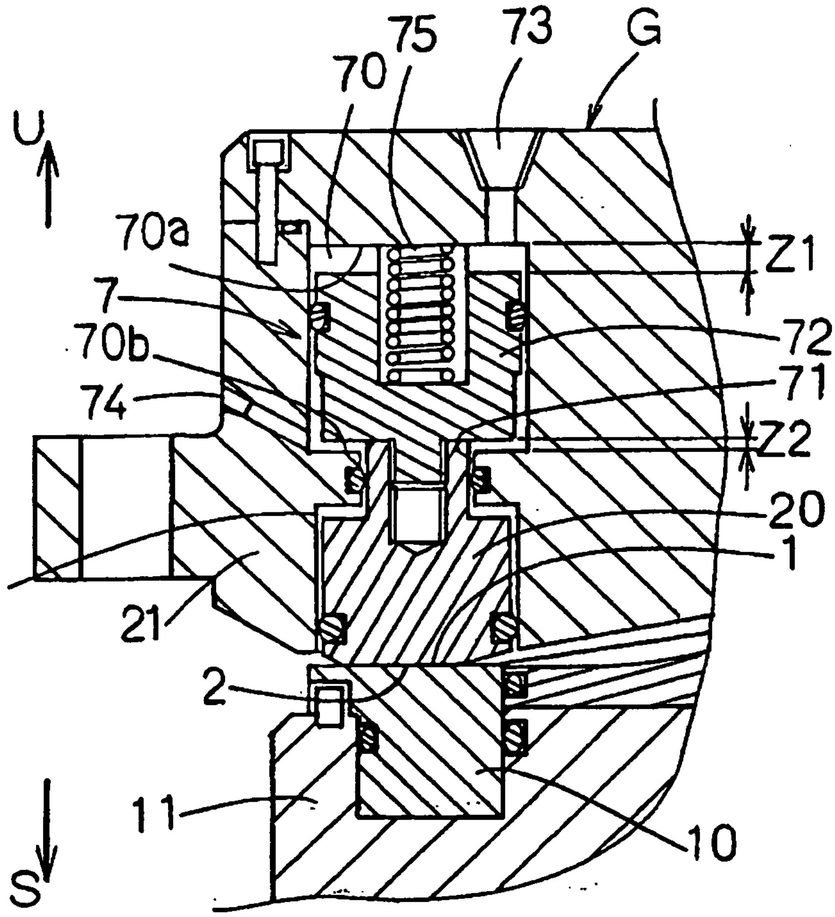

FIG 16

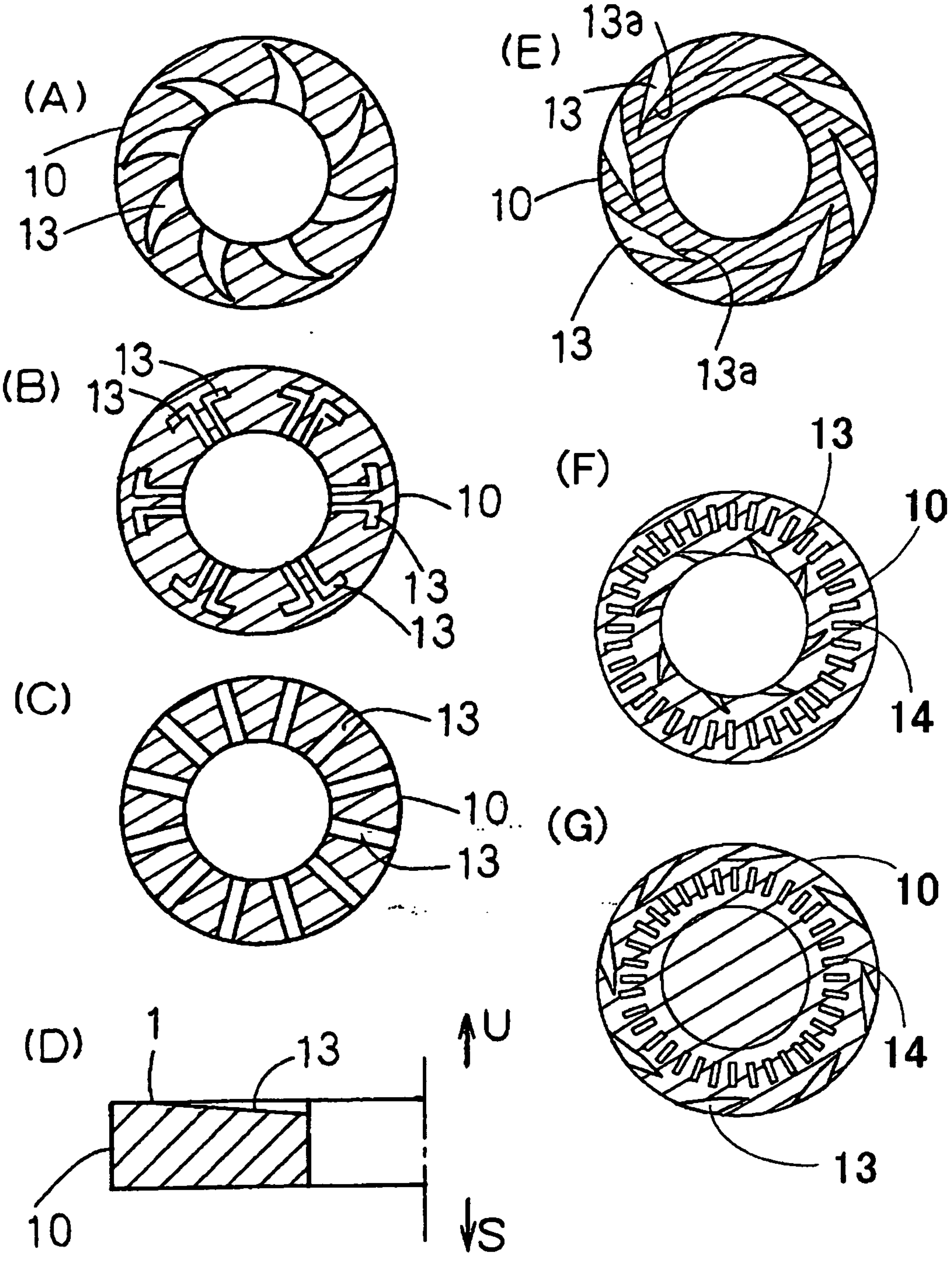
(A)
10
13
(B)
13
13
10
13
13
(C)
13
10
13
(D)
1
13
10
U
S
(E)
13a
13
10
13
13a
(F)
13
10
14
(G)
10
14
13

FIG 17

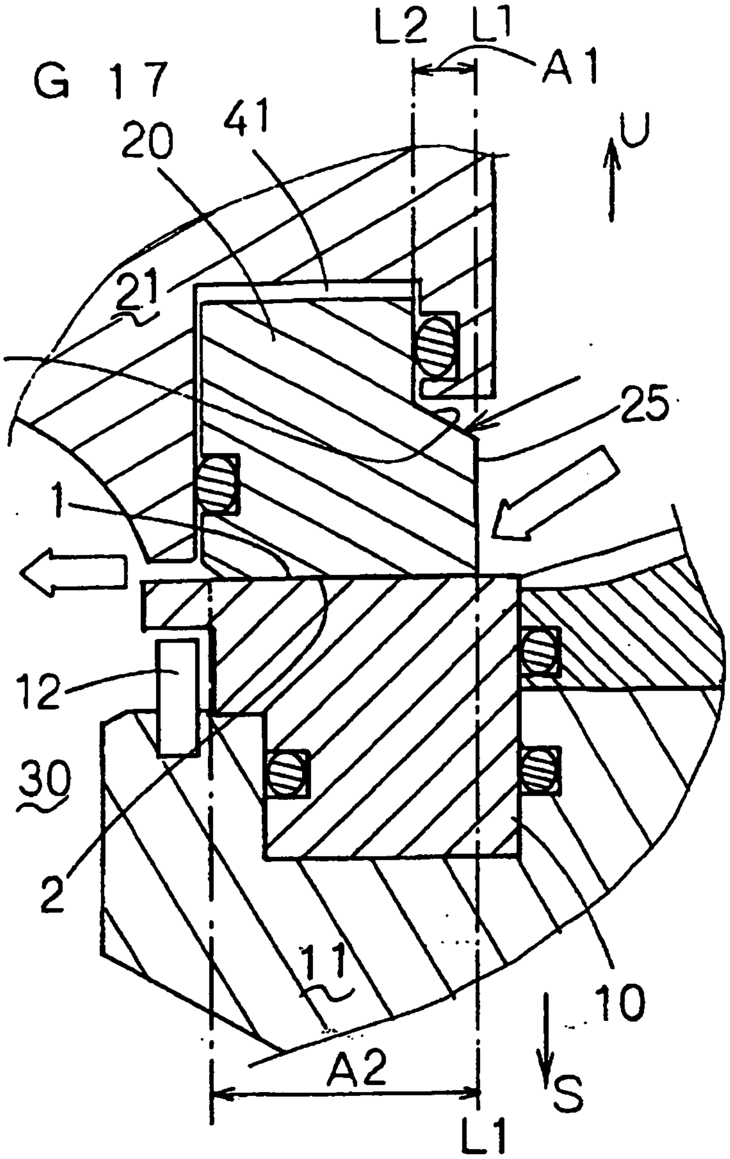

F I G 18

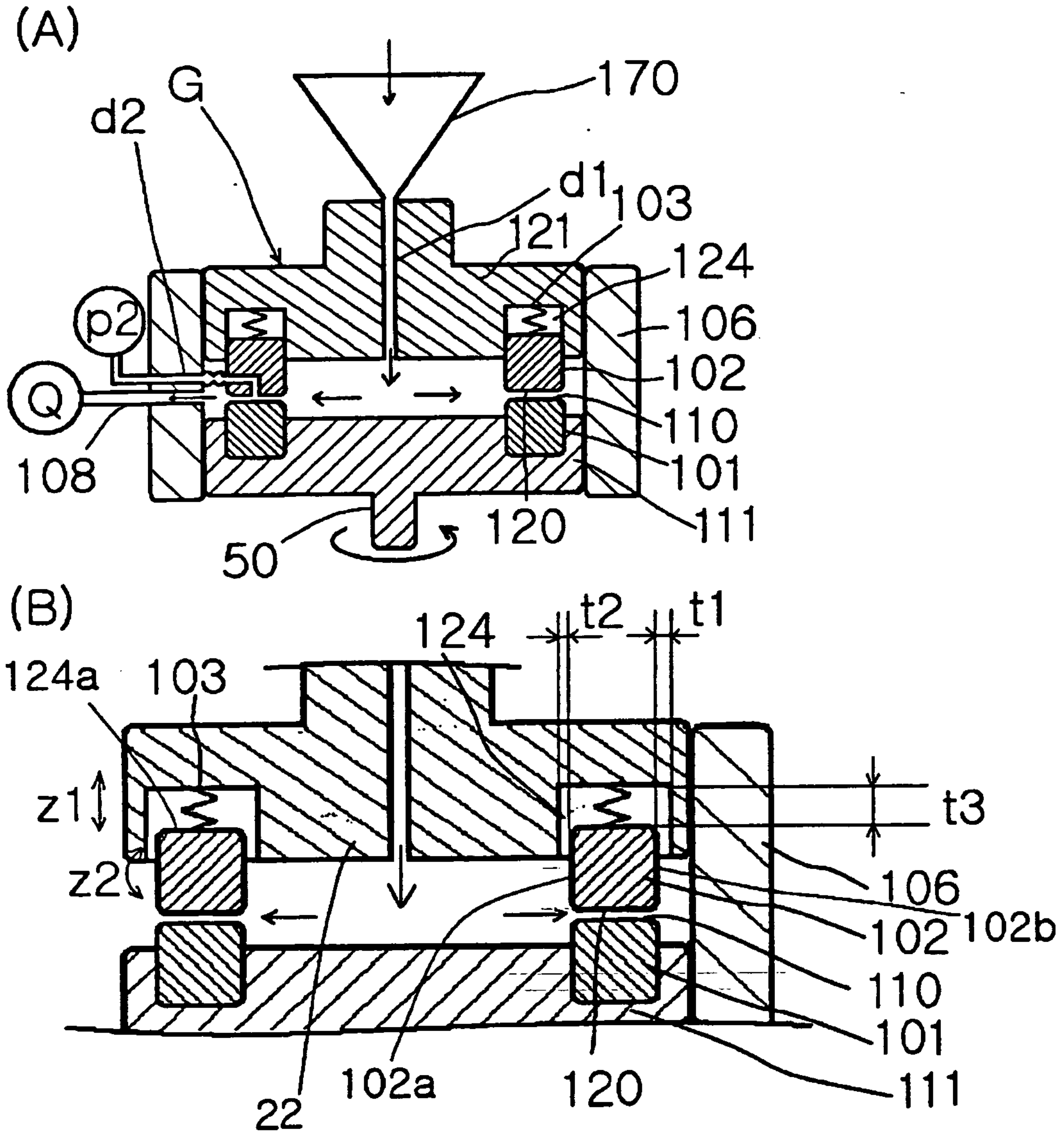
(A)
170
G
d2
d1
103
121
124
106
p2
102
Q
110
101
108
111
120
50
(B)
124
t2
t1
124a
103
z1
t3
z2
106
102b
102
110
101
111
22
102a
120

F I G19

(A)

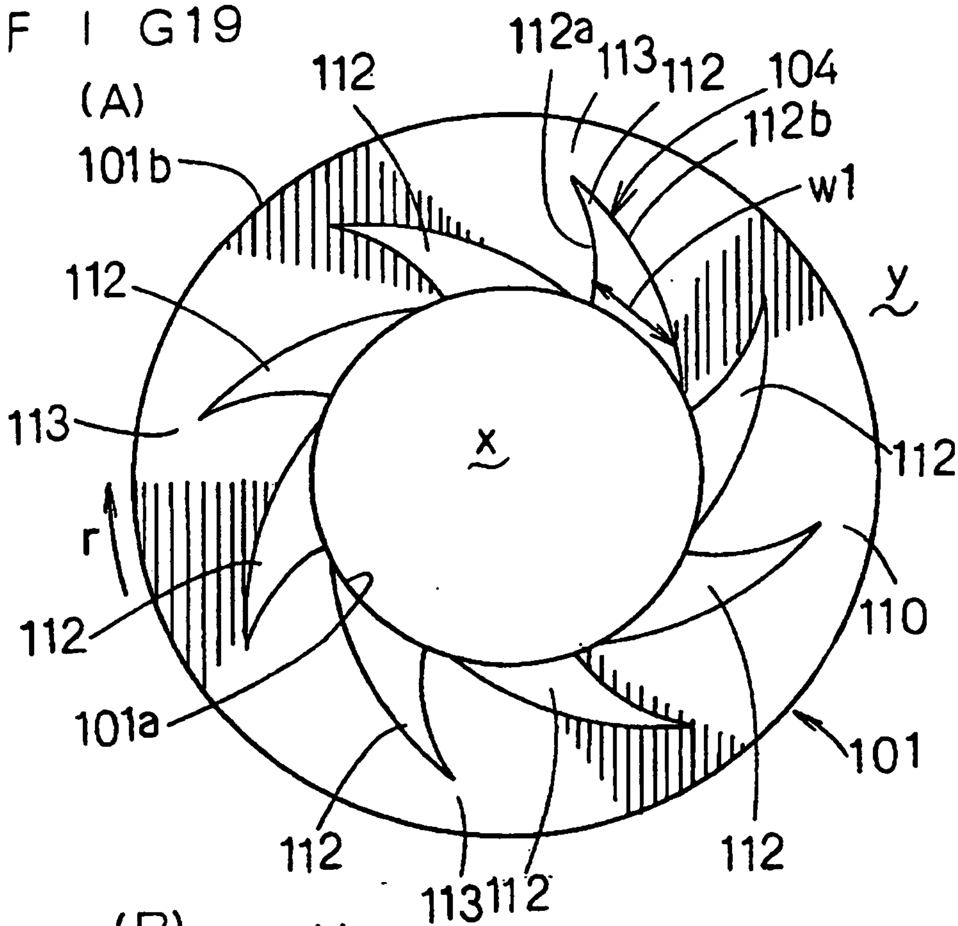
112a
113
112
104
112b
w1
112
101b
112
y
113
x
112
r
110
112
101a
101
112
113
112
112

(B)

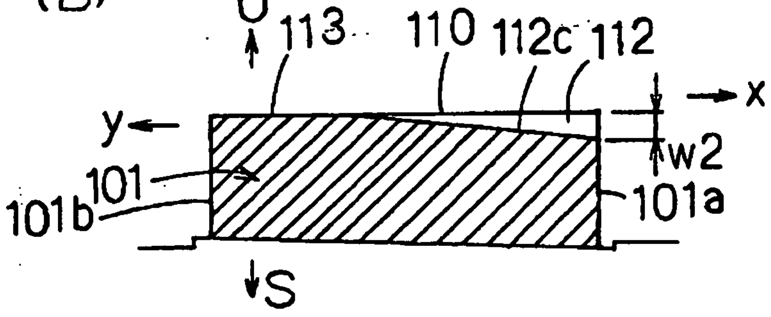
U
113
110
112c
112
x
y
w2
101b
101
101a
S

F I G 20

(A)

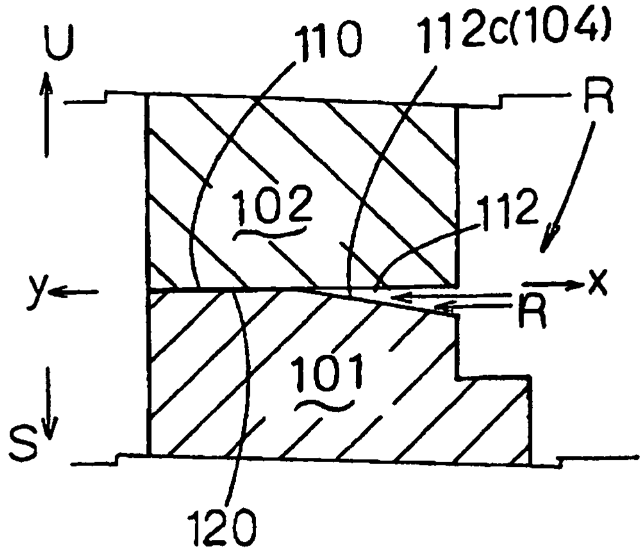
U
110
112c(104)
R
102
112
y
x
R
101
S
120

(B)

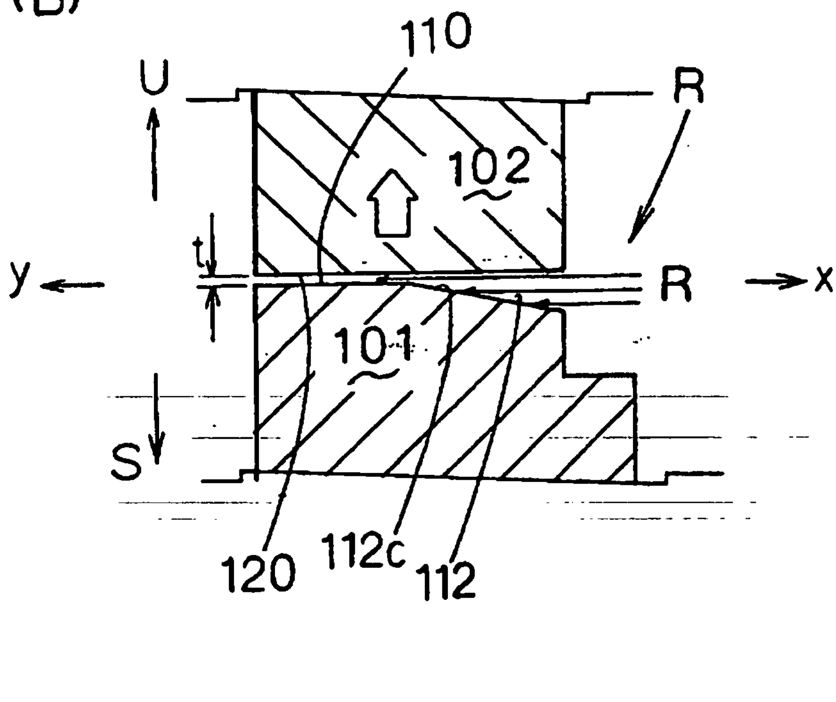
110
U
R
102
t
y
R
x
101
S
120
112c
112

F I G 21

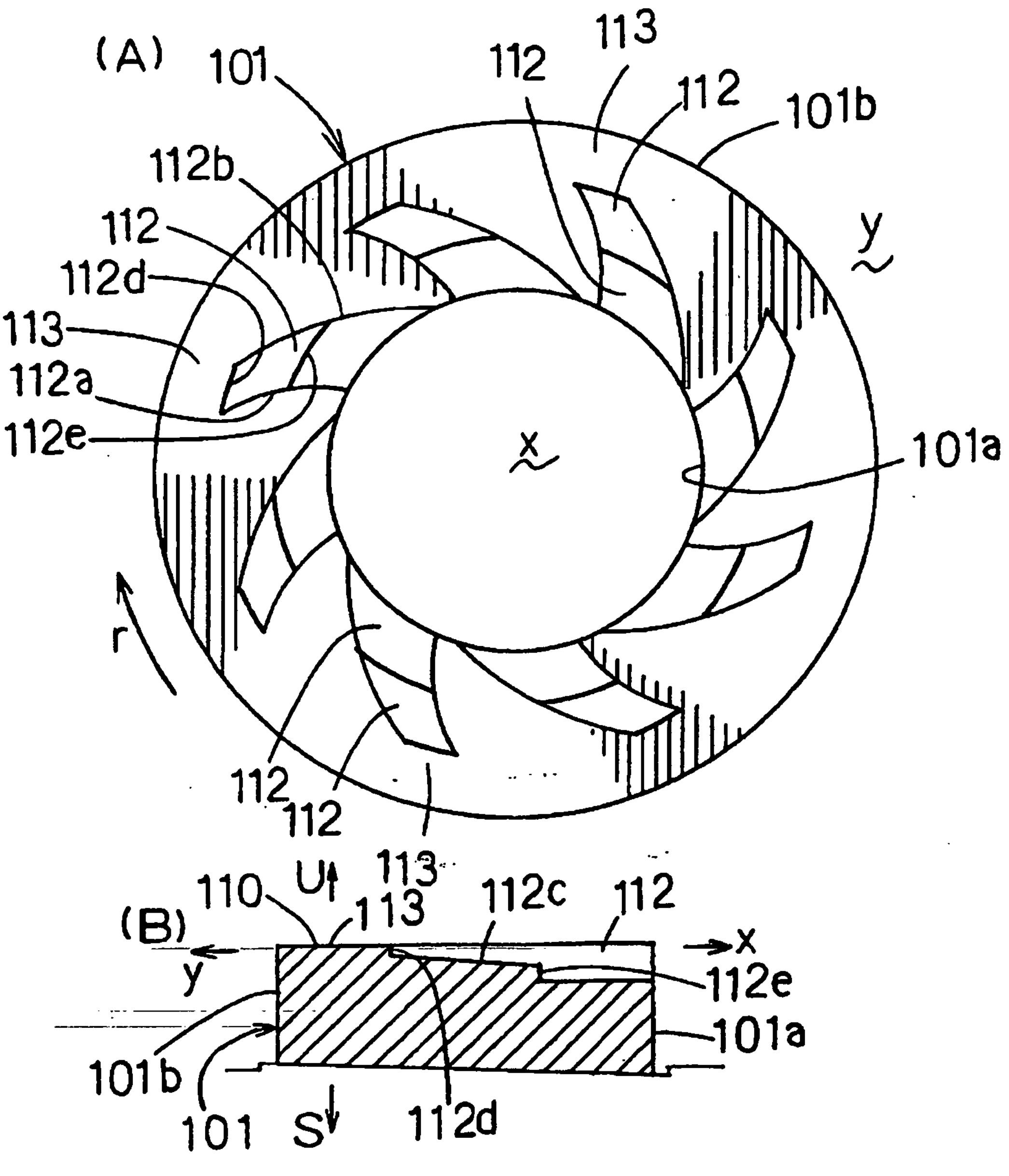
(A)
101
112
113
112
101b
112b
112
112d
113
112a
112e
y
x
101a
r
112
112
113
(B)
110
U
113
112c
112
x
y
112e
101a
101b
101
S
112d

F I G 22

(A)

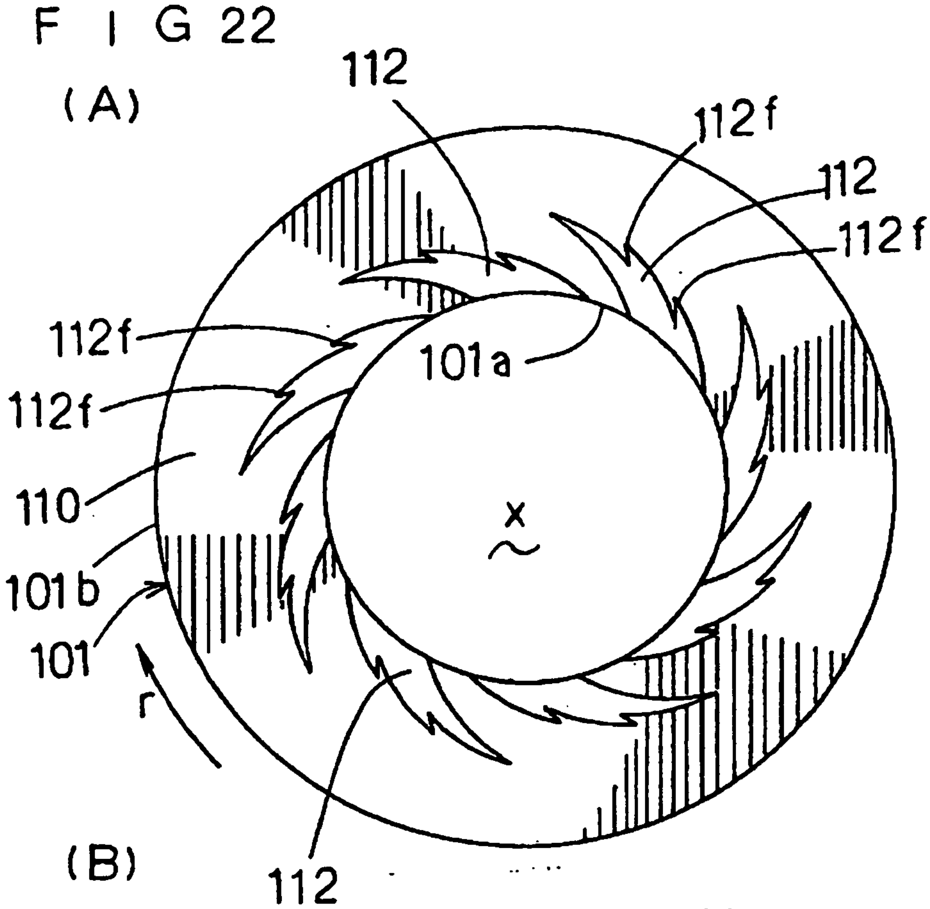
112
112f
112
112f
112f
101a
112f
110
x
101b
101
r
112

(B)

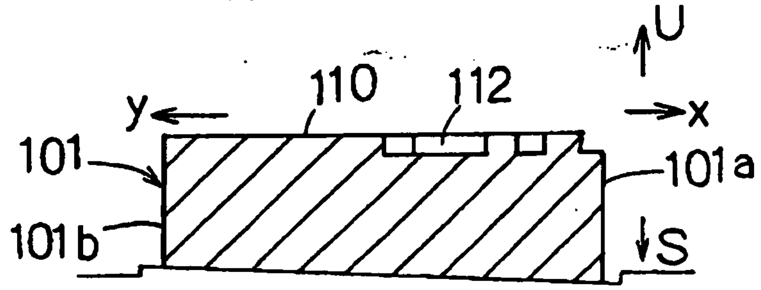
U
110
112
y
x
101
101a
101b
S

F I G 23

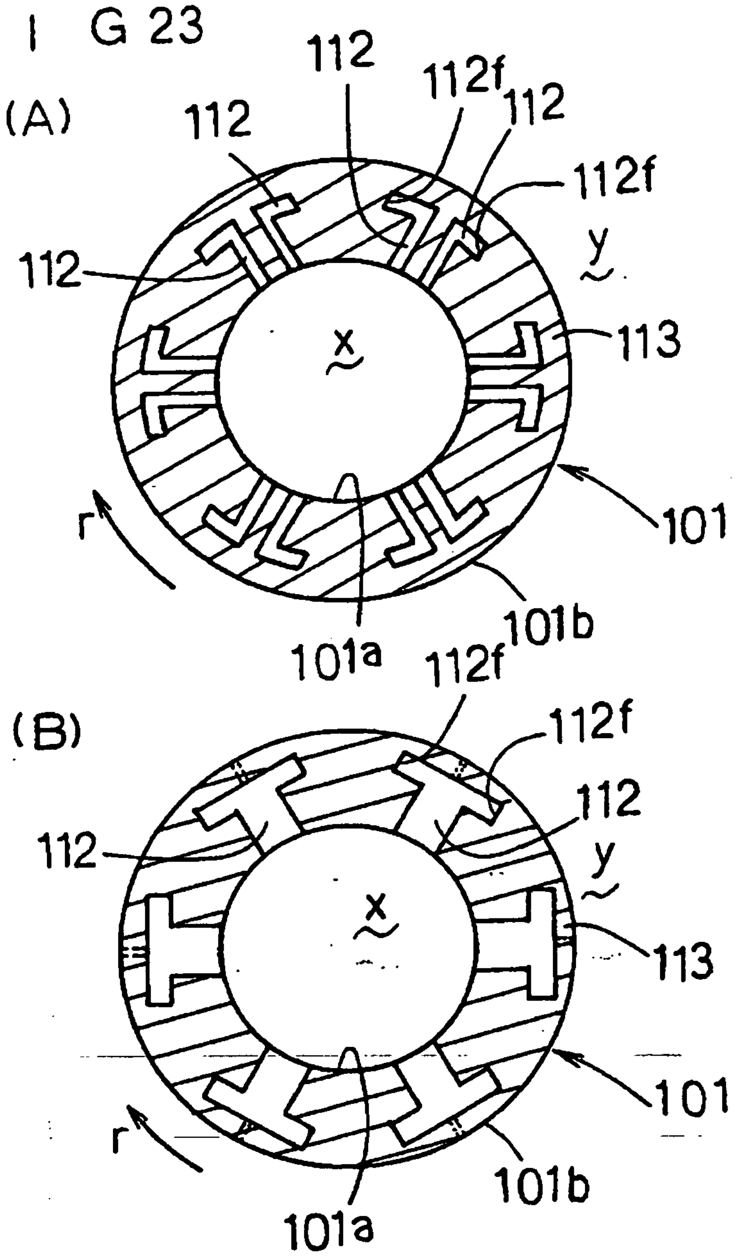
(A)
112
112f
112
112
112f
112
y
113
x
101
r
101b
101a
(B)
112f
112f
112
112
y
x
113
101
r
101b
101a

F I G 24

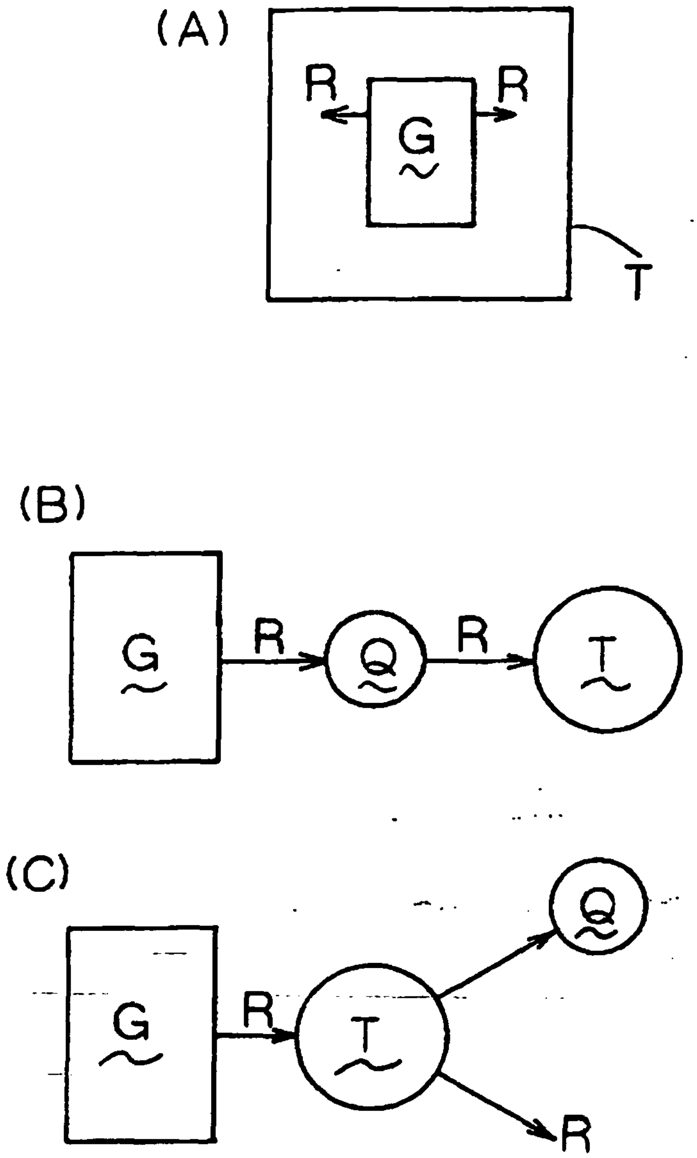

FIG 25

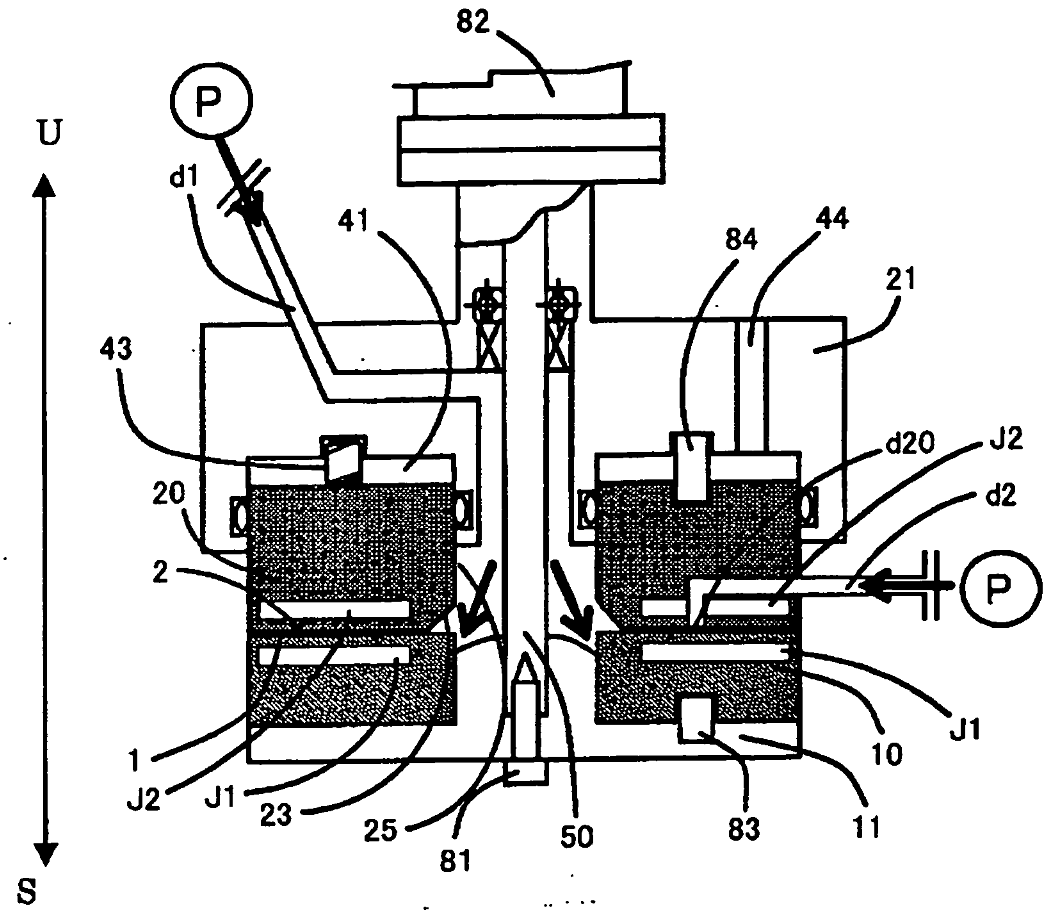

FIG26

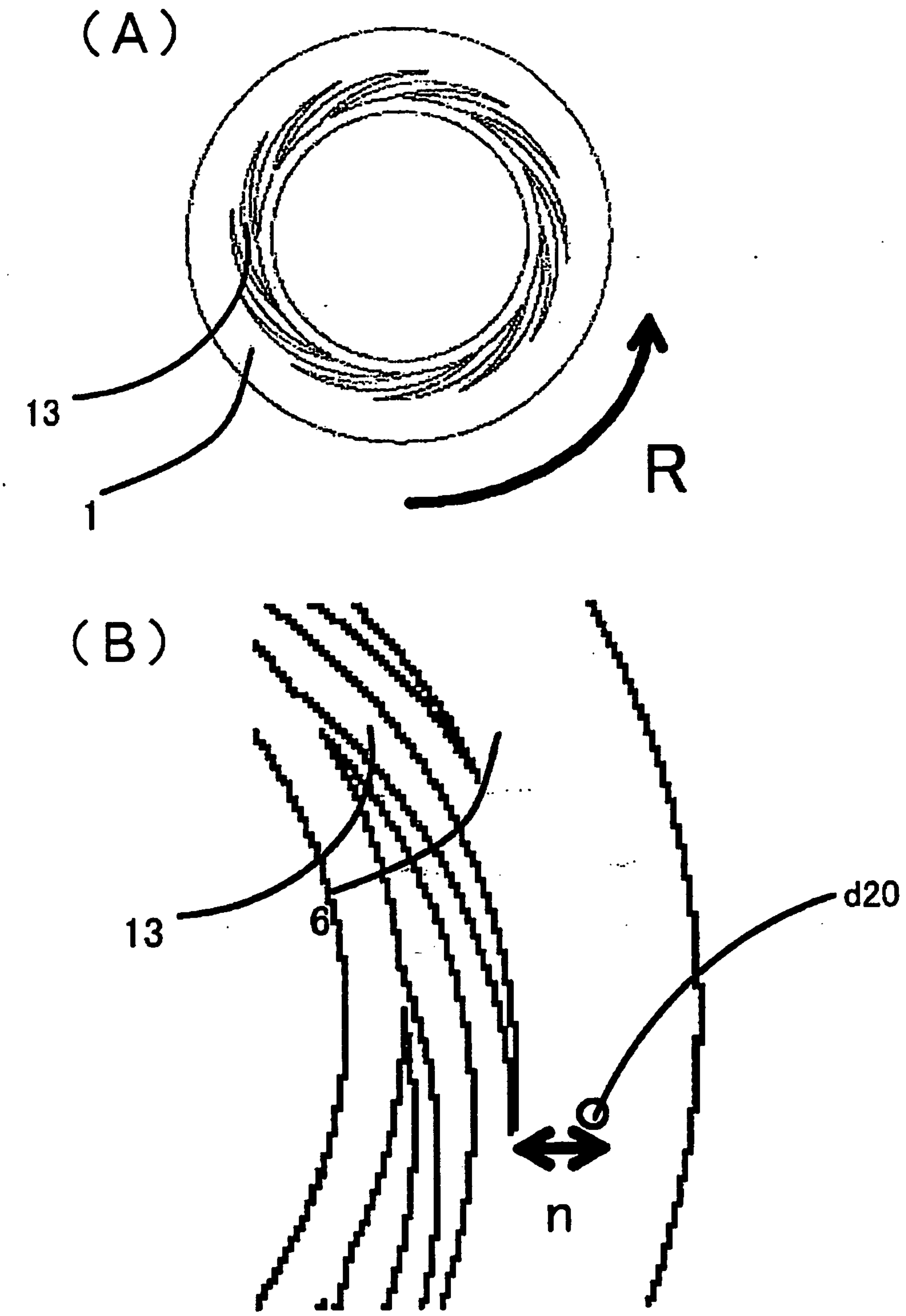

FIG 27

(A)

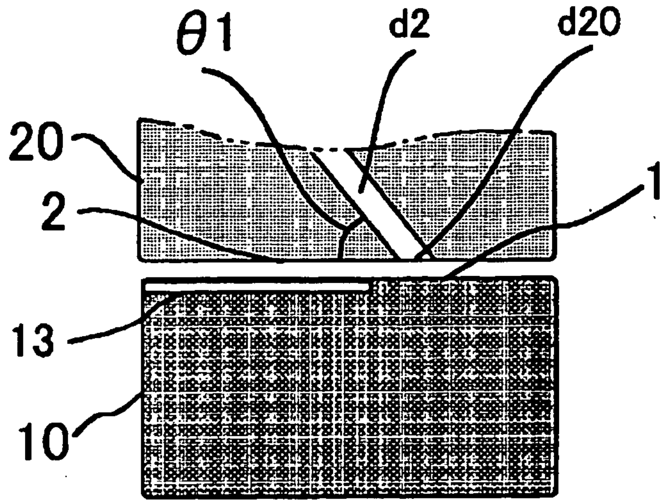


(B)

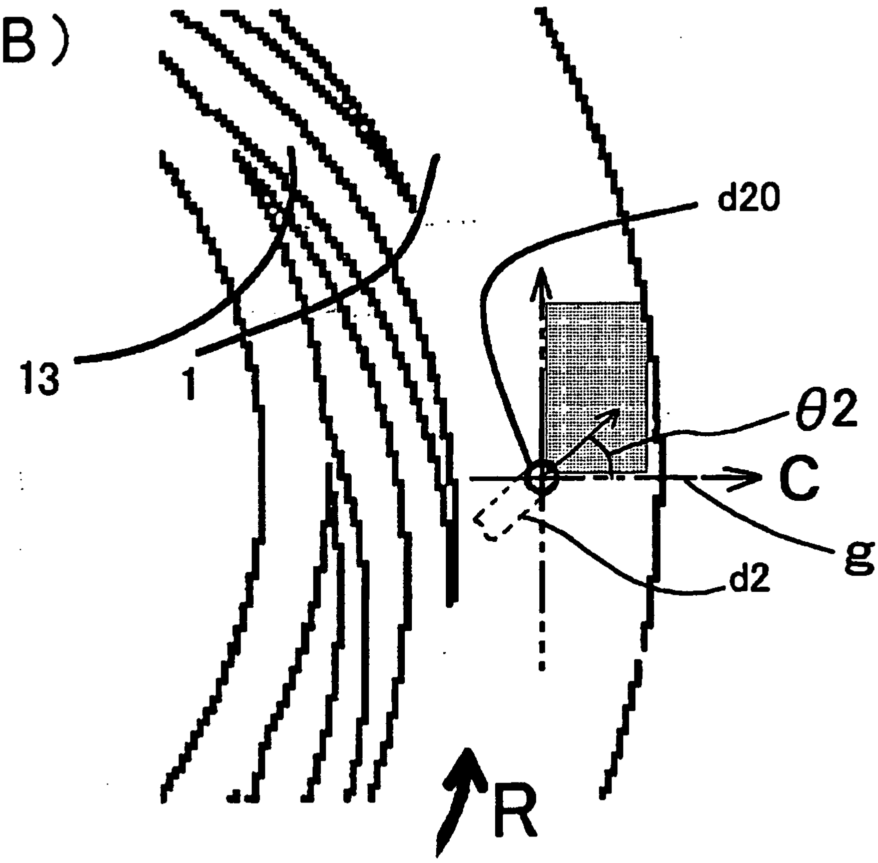

FIG 28

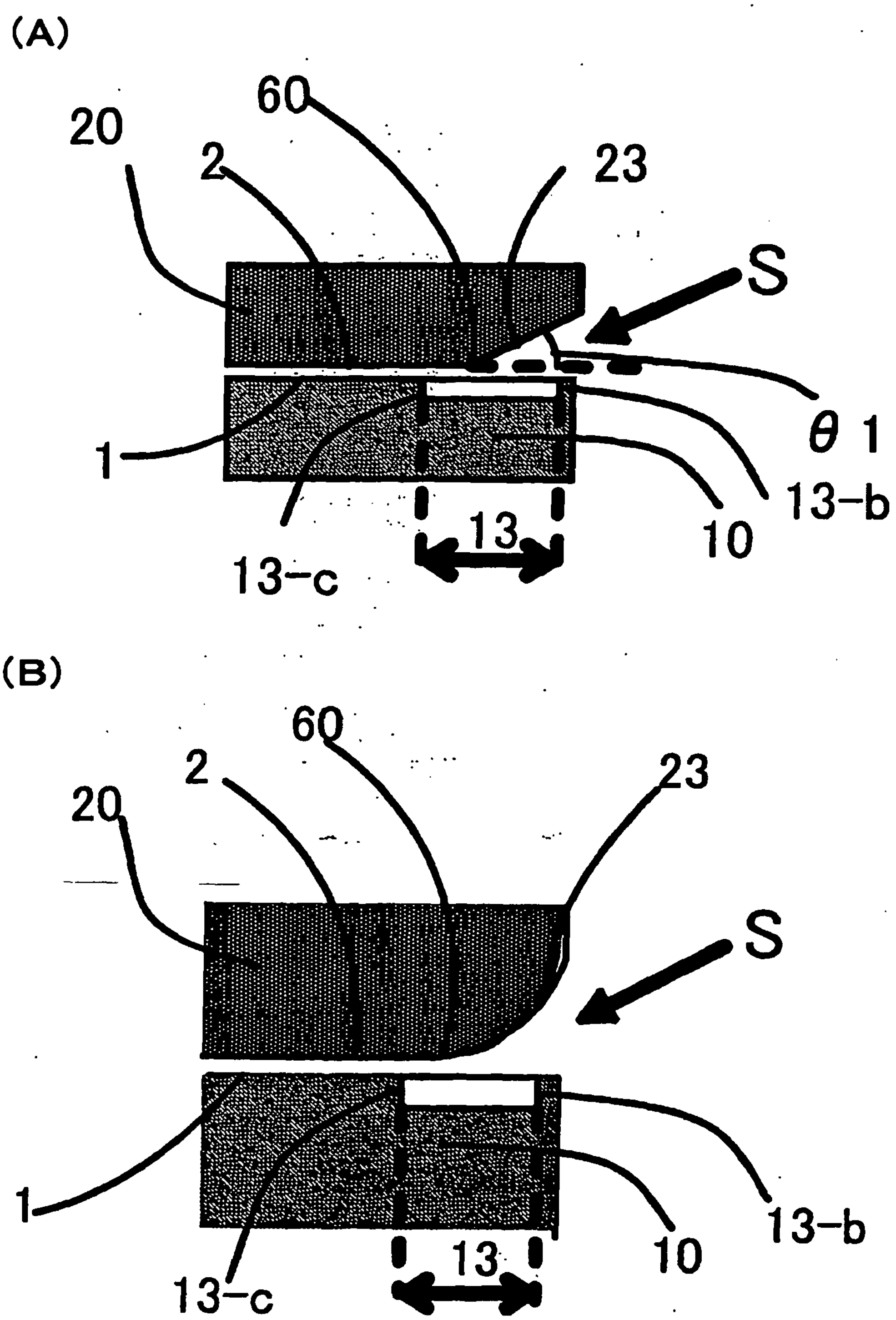

FIG 29

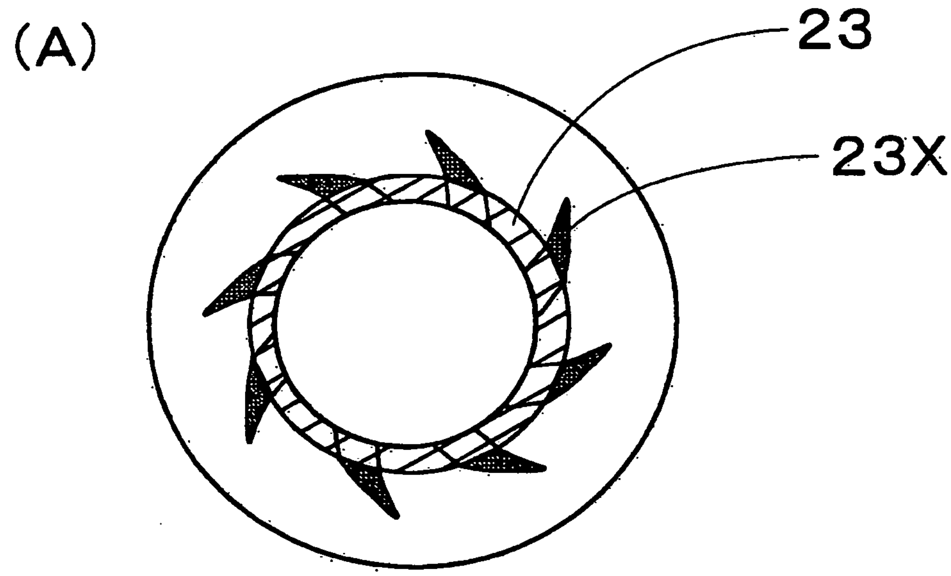


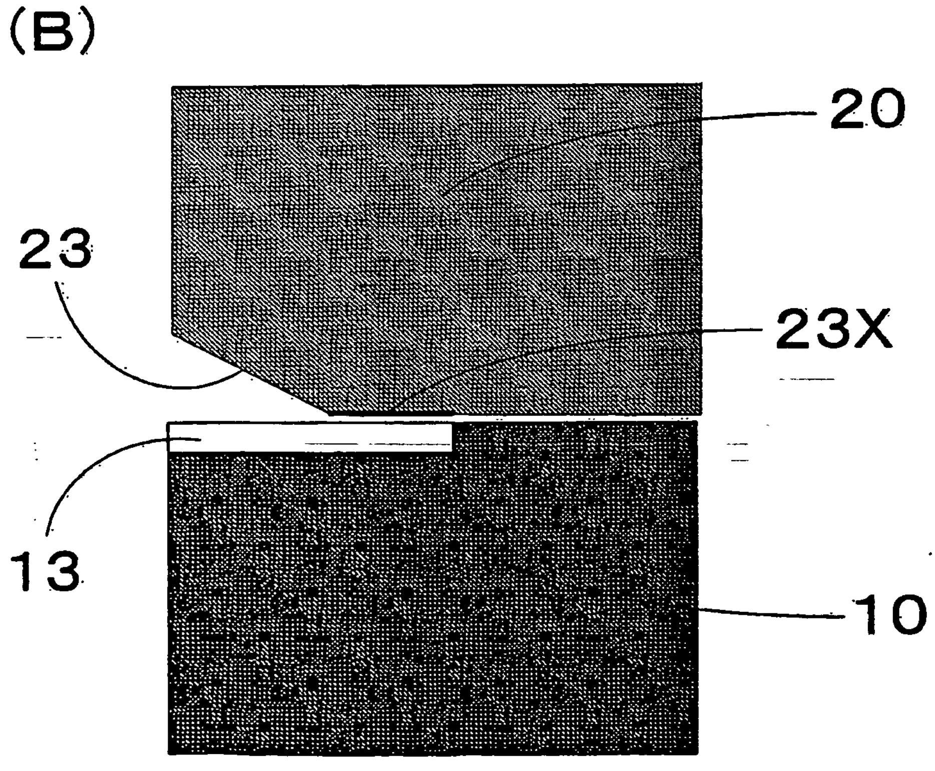

FIG 30

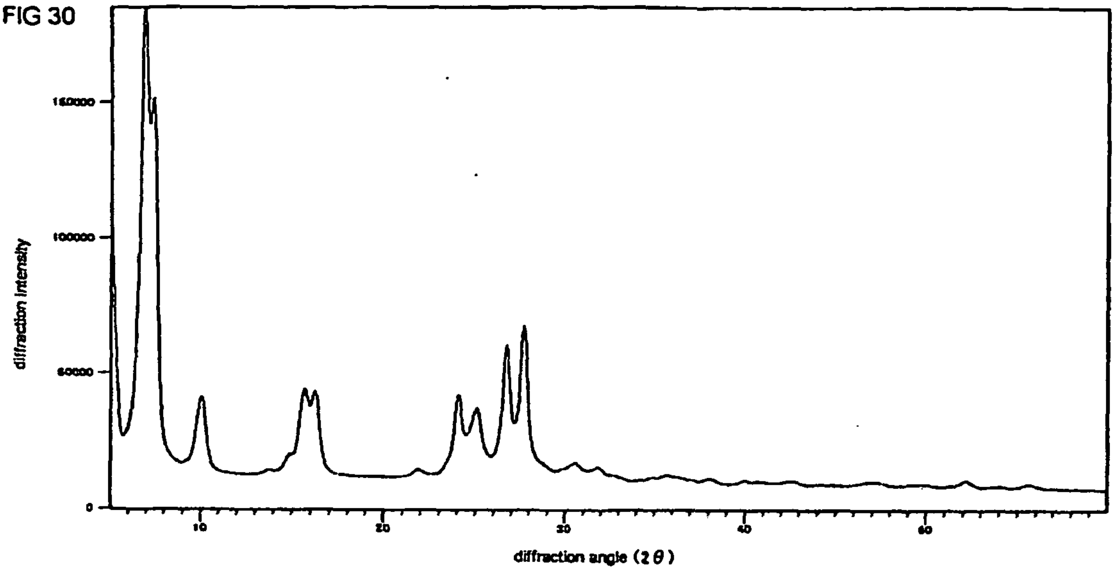
diffraction intensity
diffraction angle (2θ)

FIG 31

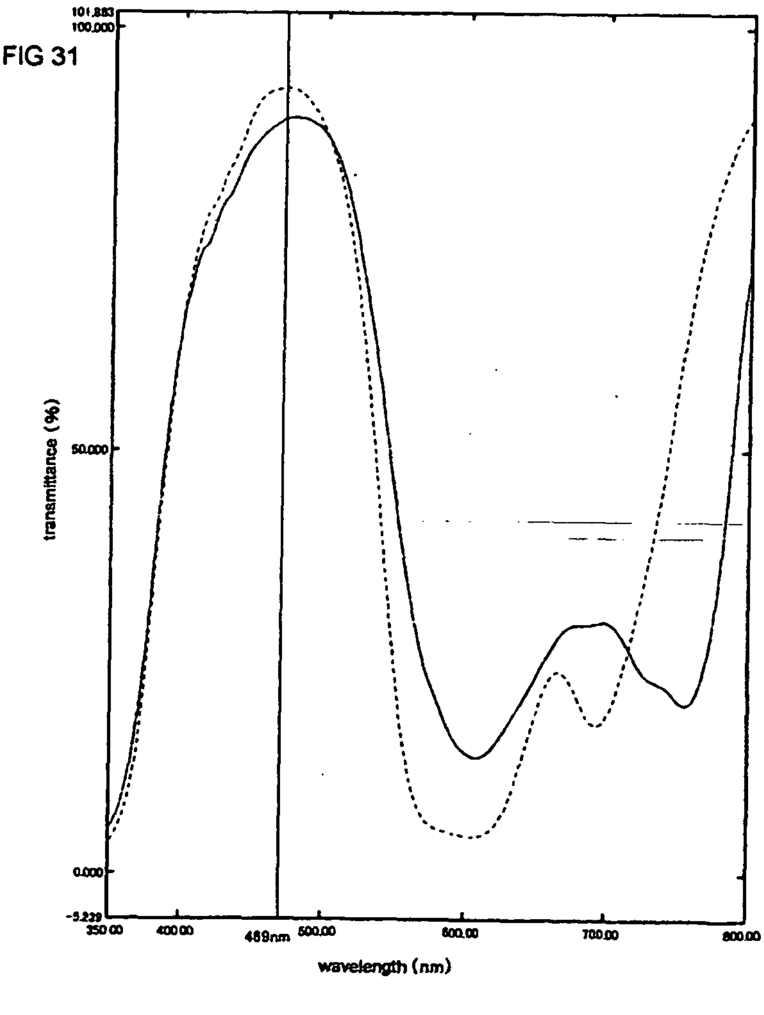
transmittance (%)
wavelength (nm)
469nm

FIG 32

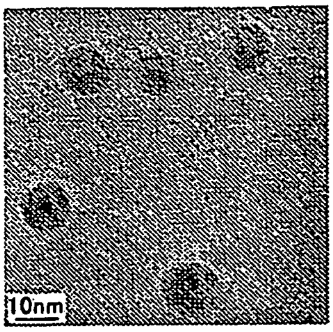


FIG 33

(A)

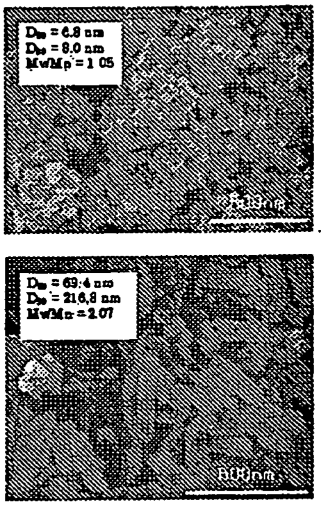


(B)

FIG 34

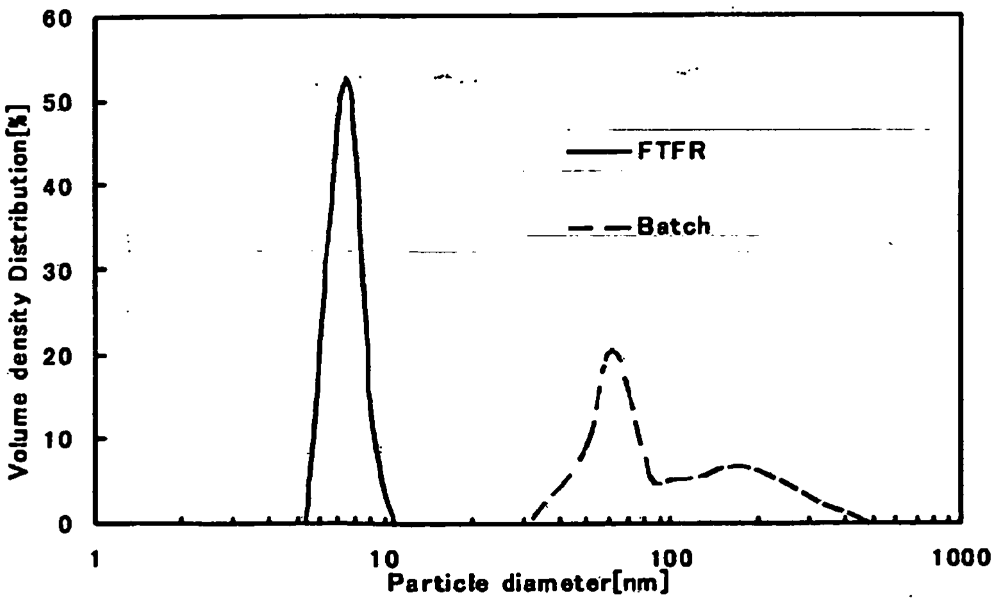

FIG 35

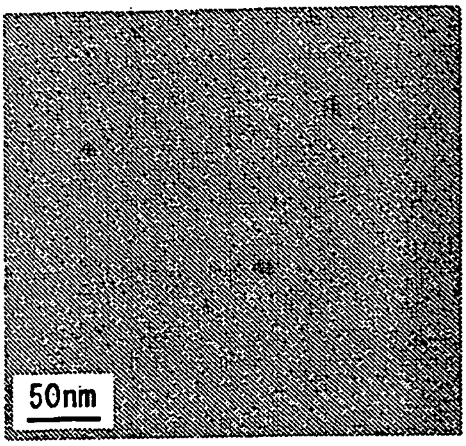


FIG 36

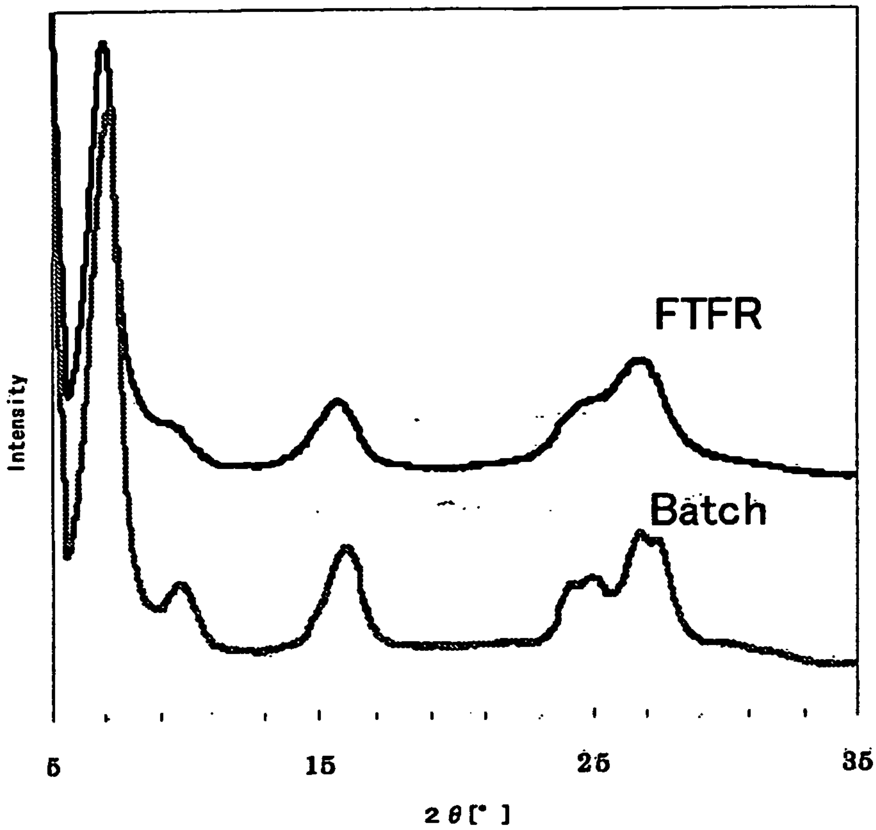

FIG 37

(A)

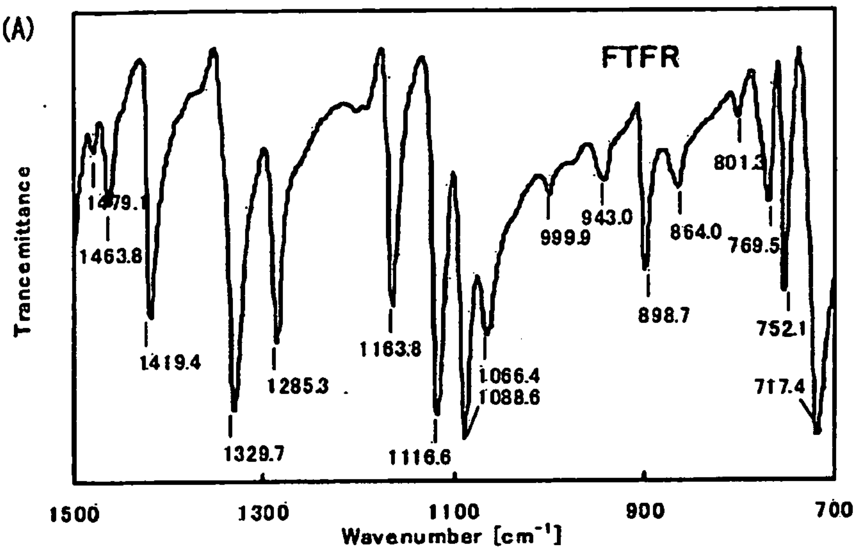
FTFR
Trancemittance
1479.1
1463.8
1419.4
1329.7
1285.3
1163.8
1116.6
1088.6
1066.4
999.9
943.0
898.7
864.0
801.3
769.5
752.1
717.4
1500
1300
1100
900
700
Wavenumber [cm-1]

(B)

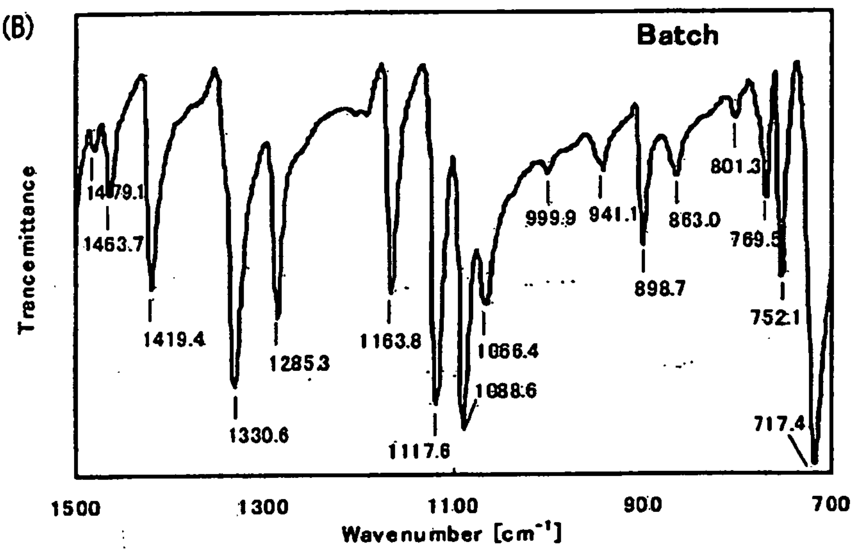
Batch
Trancemittance
1479.1
1463.7
1419.4
1330.6
1285.3
1163.8
1117.6
1088.6
1066.4
999.9
941.1
898.7
863.0
801.3
769.5
752.1
717.4
1500
1300
1100
900
700
Wavenumber [cm-1]

FIG 38

(A)

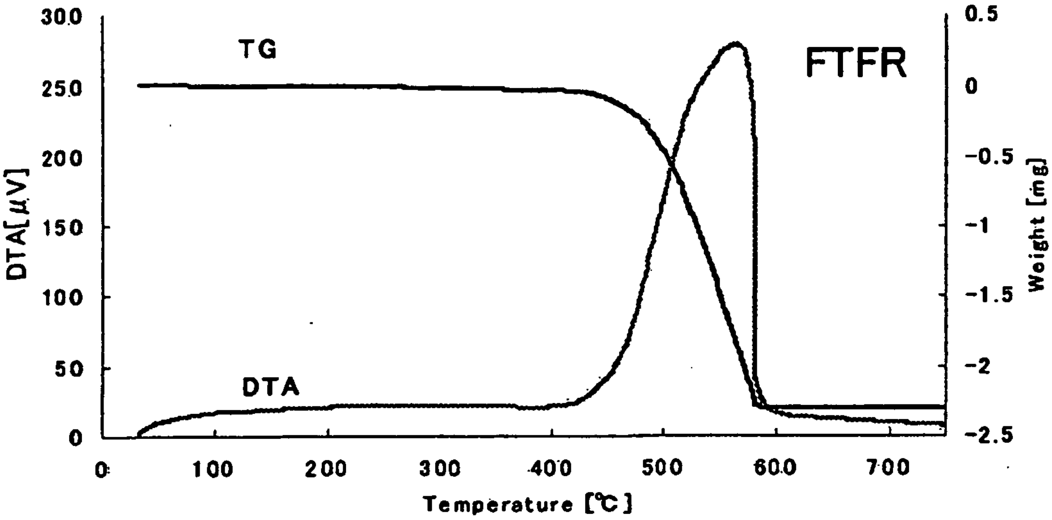
TG
FTFR
DTA
DTA[μV]
Weight [mg]
Temperature [℃]
0
50
100
150
200
250
300
0.5
0
-0.5
-1
-1.5
-2
-2.5
0
100
200
300
400
500
600
700

(B)

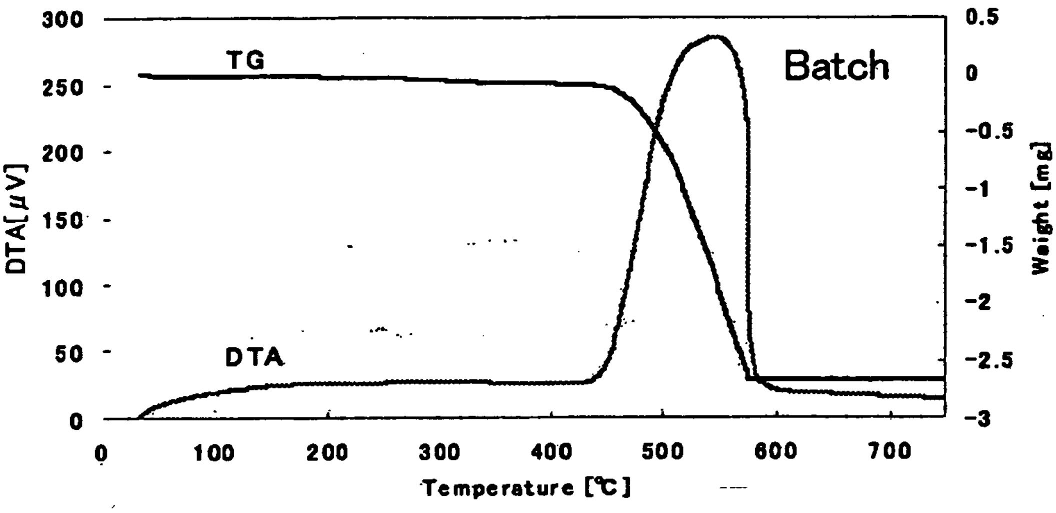
TG
Batch
DTA
DTA[μV]
Weight [mg]
Temperature [℃]
0
50
100
150
200
250
300
0.5
0
-0.5
-1
-1.5
-2
-2.5
-3
0
100
200
300
400
500
600
700

FIG 39

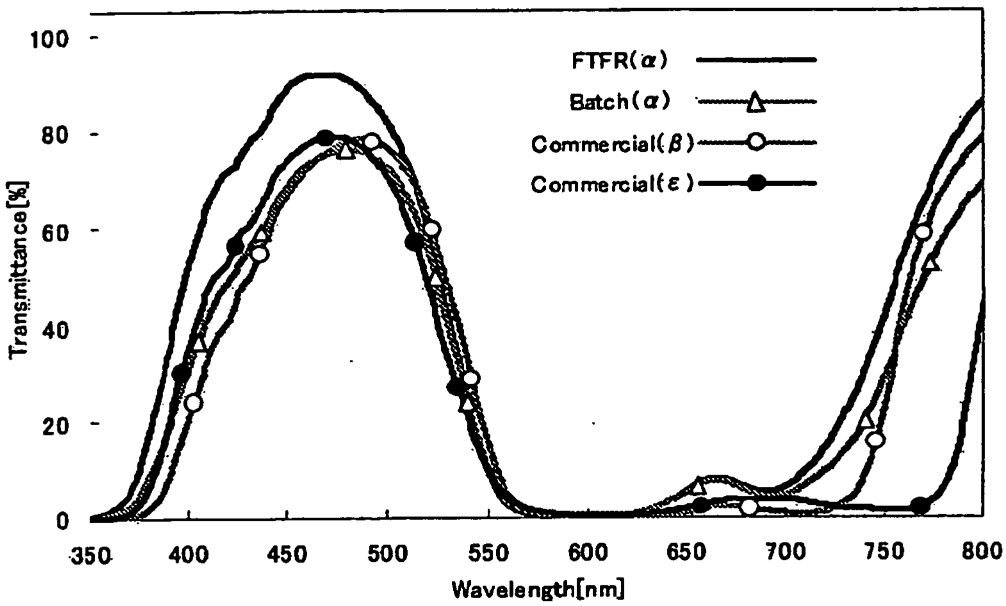

100
80
60
40
20
0
Transmittance[%]
350
400
450
500
550
600
650
700
750
800
Wavelength[nm]
FTFR(α)
Batch(α)
Commercial(β)
Commercial(ε)


FIG 40

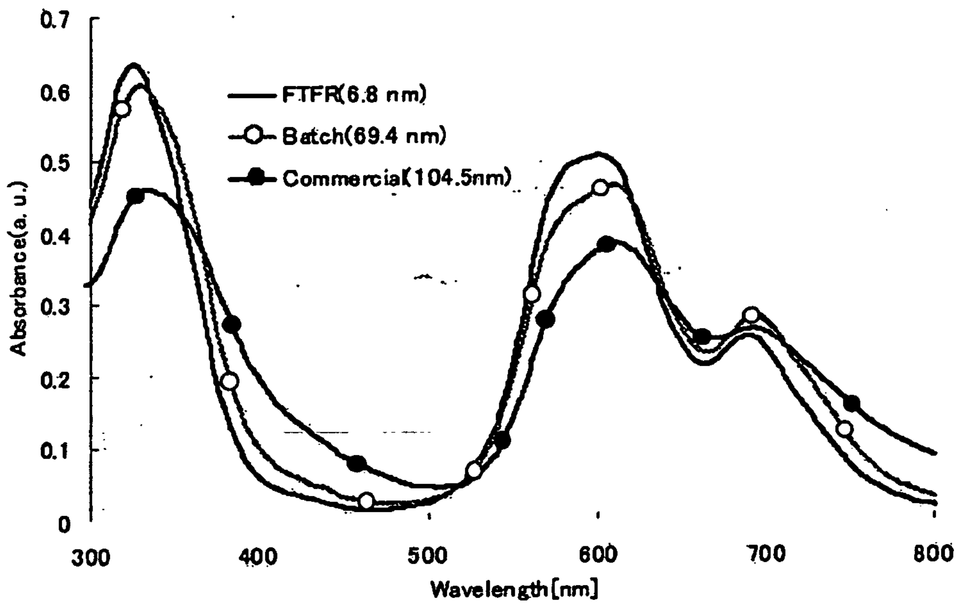

0.7
0.6
0.5
0.4
0.3
0.2
0.1
0
Absorbance(a. u.)
300
400
500
600
700
800
Wavelength[nm]
FTFR(6.8 nm)
Batch(69.4 nm)
Commercial(104.5nm)

FIG 41

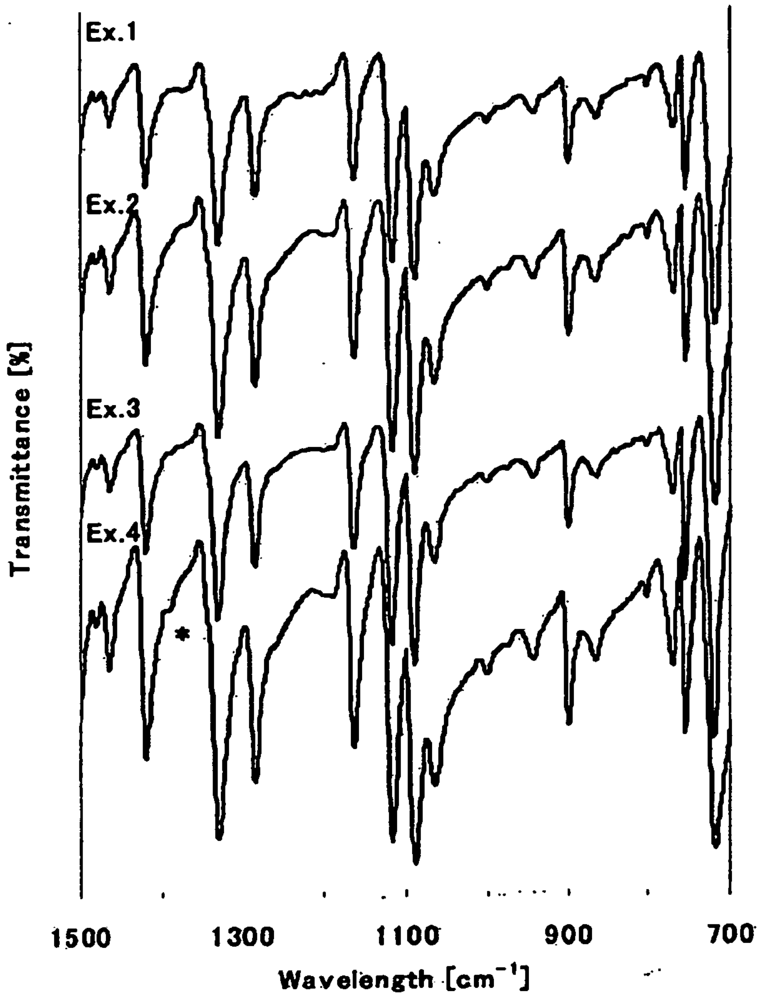
Ex.1
Ex.2
Ex.3
Ex.4
*
Transmittance [%]
1500
1300
1100
900
700
Wavelength [cm$^{-1}$]

FIG 42

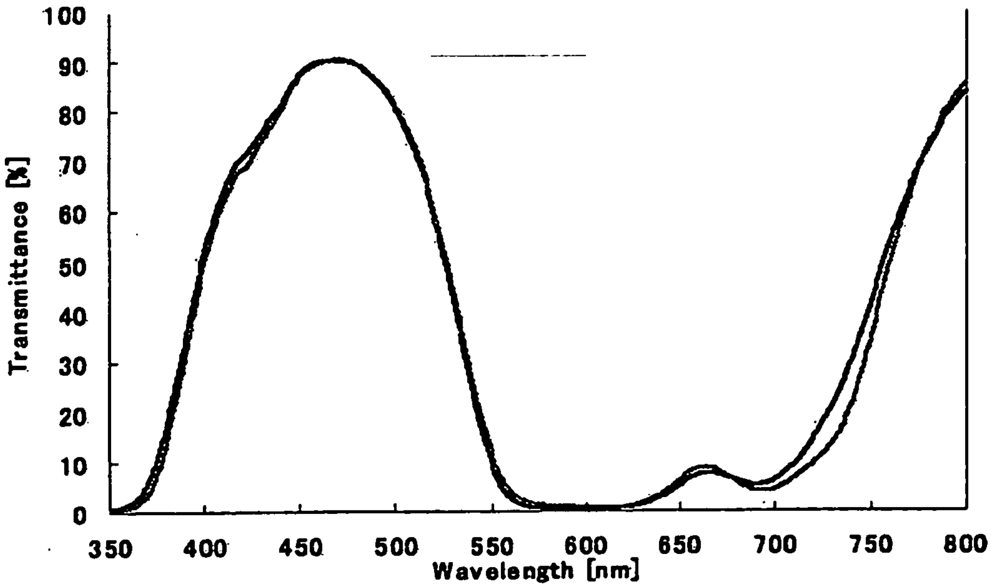
100
90
80
70
60
50
40
30
20
10
0
Transmittance [%]
350
400
450
500
550
600
650
700
750
800
Wavelength [nm]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005306841 A
- JP 2007332317 A
- JP 2006341232 A
- US 3984433 A
- JP 2004049957 A
- JP 2002189119 A

### Non-patent literature cited in the description

- **BN ACHAR ; KS LOKESH.** *Journal of Solid State Chemistry,* 2004, vol. 177 (6), 1987-1993
- **C BRECHTELSBAUER et al.** *Org. Proc. Res. Dev,* 2001, vol. 5 (1), 65-68
- **B. N. ACHAR ; K. S. LOKESH.** *J. Solid State Chem,* 2004, vol. 117, 1987
- **J. H. SHARP ; M. ABKOWITZ.** *J. Phys. Chem.,* 1972, vol. 77, 477
- **H. XIA ; M. NOGAMI.** *Opt. Mater.,* 2000, vol. 15, 93
- **H. KUHN.** *J. Chem. Phys.,* 1949, vol. 17, 1198